(19) Europäisches Patentamt / European Patent Office / Office européen des brevets

(11) EP 4 331 364 A2

(12) **EUROPEAN PATENT APPLICATION**

(43) Date of publication:
**06.03.2024 Bulletin 2024/10**

(21) Application number: **23212196.2**

(22) Date of filing: **01.02.2021**

(51) International Patent Classification (IPC):
***A01P 7/00*** *(2006.01)*

(52) Cooperative Patent Classification (CPC):
(C-Sets available)
**A01N 43/78;** Y02A 50/30 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **04.02.2020 US 202062969829 P**
**12.10.2020 US 202063090467 P**
**07.01.2021 US 202163134734 P**

(62) Document number(s) of the earlier application(s) in accordance with Art. 76 EPC:
**21708460.7 / 4 051 003**

(71) Applicant: **Corteva Agriscience LLC**
**Indianapolis, IN 46268 (US)**

(72) Inventors:
- **Garizi, Negar V.**
**Indianapolis, 46268 (US)**
- **Wessels, Frank J.**
**Indianapolis, 46268 (US)**

(74) Representative: **f & e patent**
**Braunsberger Feld 29**
**51429 Bergisch Gladbach (DE)**

Remarks:
•This application was filed on 27-11-2023 as a divisional application to the application mentioned under INID code 62.
•Claims filed after the date of filing of the application / after the date of receipt of the divisional application (Rule 68(4) EPC).

(54) **COMPOSITIONS HAVING PESTICIDAL UTILITY AND PROCESSES RELATED THERETO**

(57) This disclosure relates to the field of molecules having pesticidal utility against pests in Phyla Arthropoda, Mollusca, and Nematoda, processes to produce such molecules, pesticidal compositions containing such molecules, and processes of using such pesticidal compositions against such pests. These pesticidal compositions may be used, for example, as acaricides, insecticides, miticides, molluscicides, and nematicides. This document discloses a molecule having the following formula and mixtures thereof.

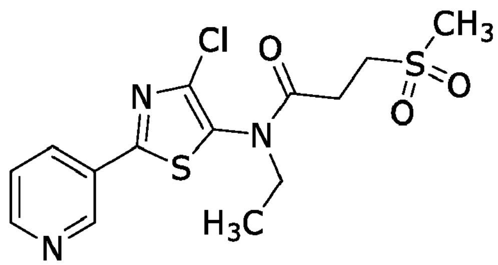

Formula One also known as F1

EP 4 331 364 A2

(52) Cooperative Patent Classification (CPC): (Cont.)

C-Sets
**A01N 43/78, A01N 37/40, A01N 43/12,**
**A01N 43/22, A01N 43/40, A01N 43/56,**
**A01N 43/80, A01N 43/90, A01N 47/06,**
**A01N 47/24, A01N 47/40, A01N 51/00,**
**A01N 53/00, A01N 57/28**

**Description**

**Cross-reference to related applications**

This Application claims priority from and benefit of U.S. provisional application serial number 63/134734, which was filed on 07 Jan 2021; U.S. provisional application serial number 63/090467, which was filed on 12 Oct 2020; and U.S. provisional application serial number 62/969829, which was filed on 04 Feb 2020. All of these applications are hereby incorporated by reference.

**Field of this disclosure**

This disclosure relates to the field of molecules having pesticidal utility against pests in Phyla Arthropoda, Mollusca, and Nematoda, processes to produce such molecules, pesticidal compositions containing such molecules, and processes of using such pesticidal compositions against such pests. These pesticidal compositions may be used, for example, as acaricides, insecticides, miticides, molluscicides, and nematicides.

**Background of this disclosure**

"Many of the most dangerous human diseases are transmitted by insect vectors" (Rivero et al.). "Historically, malaria, dengue, yellow fever, plague, filariasis, louse-borne typhus, trypanomiasis, leishmaniasis, and other vector borne diseases were responsible for more human disease and death in the $17^{th}$ through the early $20^{th}$ centuries than all other causes combined" (Gubler). Vector-borne diseases are responsible for about 17% of the global parasitic and infectious diseases. Malaria alone causes over 800,000 deaths a year, 85% of which occur in children under five years of age. Each year there are about 50 to about 100 million cases of dengue fever. A further 250,000 to 500,000 cases of dengue hemorrhagic fever occur each year (Matthews). Vector control plays a critical role in the prevention and control of infectious diseases. However, insecticide resistance, including resistance to multiple insecticides, has arisen in all insect species that are major vectors of human diseases (Rivero et al.). Recently, more than 550 arthropod species have developed resistance to at least one pesticide (Whalon et al.). Furthermore, the cases of insect resistance continue to exceed by far the number of cases of herbicide and fungicide resistance (Sparks et al.).

Each year insects, plant pathogens, and weeds, destroy more than 40% of all food production. This loss occurs despite the application of pesticides and the use of a wide array of non-chemical controls, such as, crop rotations, and biological controls. If just some of this food could be saved, it could be used to feed the more than three billion people in the world who are malnourished (Pimental).

Plant parasitic nematodes are among the most widespread pests, and are frequently one of the most insidious and costly. It has been estimated that losses attributable to nematodes are from about 9% in developed countries to about 15% in undeveloped countries. However, in the United States of America a survey of 35 States on various crops indicated nematode-derived losses of up to 25% (Nicol et al.).

It is noted that gastropods (slugs and snails) are pests of less economic importance than other arthropods or nematodes, but in certain places, they may reduce yields substantially, severely affecting the quality of harvested products, as well as, transmitting human, animal, and plant diseases. While only a few dozen species of gastropods are serious regional pests, a handful of species are important pests on a worldwide scale. In particular, gastropods affect a wide variety of agricultural and horticultural crops, such as, arable, pastoral, and fiber crops; vegetables; bush and tree fruits; herbs; and ornamentals (Speiser).

Termites cause damage to all types of private and public structures, as well as to agricultural and forestry resources. In 2005, it was estimated that termites cause over US$50 billion in damage worldwide each year (Korb).

Consequently, for many reasons, including those mentioned above, there is an on-going need for the costly (estimated to be about US$256 million per pesticide in 2010), time-consuming (on average about 10 years per pesticide), and difficult, development of new pesticides (CropLife America).

**Certain references cited in this disclosure**

CropLife America, The Cost of New Agrochemical Product Discovery, Development & Registration, and Research & Development predictions for the Future, 2010.

Drewes, M., Tietjen, K., Sparks, T.C., High-Throughput Screening in Agrochemical Research, Modern Methods in Crop Protection Research, Part I, Methods for the Design and Optimization of New Active Ingredients, Edited by Jeschke, P., Kramer, W., Schirmer, U., and Matthias W., p. 1-20, 2012.

Gubler, D., Resurgent Vector-Borne Diseases as a Global Health Problem, Emerging Infectious Diseases, Vol. 4, No. 3, p. 442-450, 1998.
Korb, J., Termites, Current Biology, Vol. 17, No. 23, 2007.
Matthews, G., Integrated Vector Management: Controlling Vectors of Malaria and Other Insect Vector Borne Diseases, Ch. 1, p. 1, 2011.
Nicol, J., Turner S., Coyne, L., den Nijs, L., Hocksland, L., Tahna-Maafi, Z., Current Nematode Threats to World Agriculture, Genomic and Molecular Genetics of Plant - Nematode Interactions, p. 21-43, 2011.
Pimental, D., Pest Control in World Agriculture, Agricultural Sciences - Vol. II, 2009.
Rivero, A., Vezilier, J., Weill, M., Read, A., Gandon, S., Insect Control of Vector-Borne Diseases: When is Insect Resistance a Problem? Public Library of Science Pathogens, Vol. 6, No. 8, p. 1-9, 2010.
Sparks T.C., Nauen R., IRAC: Mode of action classification and insecticide resistance management, Pesticide Biochemistry and Physiology (2014) available online 4 December 2014.
Speiser, B., Molluscicides, Encyclopedia of Pest Management, Ch. 219, p. 506-508, 2002.
Whalon, M., Mota-Sanchez, D., Hollingworth, R., Analysis of Global Pesticide Resistance in Arthropods, Global Pesticide Resistance in Arthropods, Ch. 1, p. 5-33, 2008.

**Definitions used in this disclosure**

The examples given in these definitions are generally non-exhaustive and must not be construed as limiting this disclosure. It is understood that a substituent should comply with chemical bonding rules and steric compatibility constraints in relation to the particular molecule to which it is attached. These definitions are only to be used for the purposes of this disclosure.

The phrase "**active ingredient**" (sometimes referred to as "**AI**") means a material having activity useful in controlling pests, and/or that is useful in helping other materials have better activity in controlling pests. Examples of such materials include, but are not limited to, acaricides, algicides, antifeedants, avicides, bactericides, bird repellents, chemosterilants, fungicides, herbicide safeners, herbicides, insect attractants, insect repellents, insecticides, mammal repellents, mating disrupters, molluscicides, nematicides, plant activators, plant growth regulators, rodenticides, synergists, and virucides (see alanwood.net). Specific examples of such materials include, but are not limited to, the materials listed in active ingredient group alpha.

The phrase "**active ingredient group alpha**" (hereafter "**AIGA**") means collectively the following materials: (3-ethoxypropyl)mercury bromide, 1,2-dibromoethane, 1,2-dichloroethane, 1,2-dichloropropane, 1,3-D, 1,3-dichloropropene, 1-methylcyclopropene, 1-naphthol, 2-(octylthio)ethanol, 2,2,3-TPA, 2,3,3-TPA, 2,3,5-triiodobenzoic acid, 2,3,5-tri-iodobenzoic acid, 2,3,6-TBA, 2,4,5-T, 2,4,5-TB, 2,4,5-TP, 2,4-D, 2,4-DB, 2,4-DEB, 2,4-DEP, 2,4-DES, 2,4-DP, 2,4-MCPA, 2,4-MCPB, 2iP, 2-methoxyethylmercury chloride, 2-phenylphenol, 3,4-DA, 3,4-DB, 3,4-DP, 3,6-dichloropicolinic acid, 4-aminopyridine, 4-CPA, 4-CPB, 4-CPP, 4-hydroxyphenethyl alcohol, 8-hydroxyquinoline sulfate, 8-phenylmercurioxyquinoline, abamectin, abamectin-aminomethyl, abscisic acid, ACC, acephate, acequinocyl, acetamiprid, acethion, acetochlor, acetofenate, acetophos, acetoprole, acibenzolar, acifluorfen, aclonifen, ACN, acrep, acrinathrin, acrolein, acrylonitrile, acynonapyr, acypetacs, afidopyropen, afoxolaner, alachlor, alanap, alanycarb, albendazole, aldicarb, aldicarb sulfone, aldimorph, aldoxycarb, aldrin, allethrin, allicin, allidochlor, allosamidin, alloxydim, allyl alcohol, allyxycarb, alorac, *alpha*-bromadiolone, *alpha*-cypermethrin, *alpha*-endosulfan, alphamethrin, altretamine, aluminium phosphide, aluminum phosphide, ametoctradin, ametridione, ametryn, ametryne, amibuzin, amicarbazone, amicarthiazol, amidithion, amidochlor, amidoflumet, amidosulfuron, aminocarb, aminocyclopyrachlor, aminopyralid, aminopyrifen, aminotriazole, amiprofos-methyl, amiprophos, amiprophos-methyl, amisulbrom, amiton, amitraz, amitrole, ammonium sulfamate, amobam, amorphous silica gel, amorphous silicon dioxide, ampropylfos, AMS, anabasine, ancymidol, anilazine, anilofos, anisuron, anthraquinone, antimony potassium tartrate, antu, apholate, aramite, arprocarb, arsenous oxide, asomate, aspirin, asulam, athidathion, atraton, atrazine, aureofungin, avermectin B1, AVG, aviglycine, azaconazole, azadirachtin, azafenidin, azamethiphos, azidithion, azimsulfuron, azinphosethyl, azinphos-ethyl, azinphosmethyl, azinphos-methyl, aziprotryn, aziprotryne, azithiram, azobenzene, azocyclotin, azothoate, azoxystrobin, bachmedesh, barban, barbanate, barium hexafluorosilicate, barium polysulfide, barium silicofluoride, barthrin, basic copper carbonate, basic copper chloride, basic copper sulfate, BCPC, beflubutamid, beflubutamid-M, benalaxyl, benalaxyl-M, benazolin, bencarbazone, benclothiaz, bendaqingbingzhi, bendiocarb, bendioxide, benefin, benfluralin, benfuracarb, benfuresate, benmihuangcaoan, benodanil, benomyl, benoxacor, benoxafos, benquinox, bensulfuron, bensulide, bensultap, bentaluron, bentazon, bentazone, benthiavalicarb, benthiazole, benthiocarb, bentranil, benzadox, benzalkonium chloride, benzamacril, benzamizole, benzamorf, benzene hexachloride, benzfendizone, benzimine, benzipram, benzobicyclon, benzoepin, benzofenap, benzofluor, benzohydroxamic acid, benzomate, benzophosphate, benzothiadiazole, benzovindiflupyr, benzoximate, benzoylprop, benzpyrimoxan, benzthiazuron, benzuocaotong, benzyl benzoate, benzyladenine, berberine, *beta*-cyfluthrin, *beta*-cypermethrin, bethoxazin, BHC, bialaphos, bicyclopyrone, bifenazate, bifenox, bifenthrin, bifujunzhi, bilanafos, binapacryl, bǐnghuánzuò, bingqingxiao, bioallethrin, bioethanomethrin, biopermethrin, bioresmethrin, biphenyl, bipyrazone, bisazir, bismerthiazol, bismerthiazol-copper, bisphenylmercury methylenedi(x-naphthalene-y-sulphonate), bispyribac, bistrifluron, bisultap, bitertanol, bithionol, bixafen, bixlozone, blasticidin-S, borax, Bordeaux mixture, boric acid, boscalid, BPCMS, BPPS, brassinolide, brassinolide-ethyl, brevicomin, brodifacoum, brofenprox, brofenvalerate, broflanilide, brofluthrinate, bromacil, bromadiolone, bromchlophos, bromethalin, bromethrin, bromfenvinfos, bromoacetamide, bromobonil, bromobutide, bromociclen, bromocyclen, bromo-DDT, bromofenoxim, bromofos, bromomethane, bromophos, bromophos-ethyl, bromopropylate, bromothalonil, bromoxynil, brompyrazon, bromuconazole, bronopol, bropropdifacoum, BRP, BTH, bucarpolate, bufencarb, buminafos, bupirimate, buprofezin, Burgundy mixture, busulfan, busulphan, butacarb, butachlor, butafenacil, butam, butamifos, butane-fipronil, butathiofos, butenachlor, butene-fipronil, butethrin, buthidazole, buthiobate, buthiuron, butifos, butocarboxim, butonate, butopyronoxyl, butoxycarboxim, butralin, butrizol, butroxydim, buturon, butylamine, butylate, butylchlorophos, butylene-fipronil, cacodylic acid, cadusafos, cafenstrole, calciferol, calcium arsenate, calcium chlorate, calcium cyanamide, calcium cyanide, calcium polysulfide, calvinphos, cambendichlor, camphechlor, camphor, captafol, captan, carbam, carbamorph, carbanolate, carbaril, carbaryl, carbasulam, carbathiin, carbathion, carbendazim, carbendazol, carbetamide, carbofenotion, carbofuran, carbon disulfide, carbon tetrachloride, carbonyl sulfide, carbophenothion, carbophos, carbosulfan, carboxazole, carboxide, carboxin, carfentrazone, carpropamid, cartap, carvacrol, carvone, CAVP, CDAA, CDEA, CDEC, cellocidin, CEPC, ceralure, cerenox, cevadilla, Cheshunt mixture, chinalphos, chinalphos-méthyl, chinomethionat, chinomethionate, chiralaxyl, chitosan, chlobenthiazone, chlomethoxyfen, chloralose, chloramben, chloramine phosphorus, chloramizol, chloramphenicol, chloraniformethan, chloranil, chloranocryl, chlorantraniliprole, chlorazifop, chlorazine, chlorbenside, chlorbenzuron, chlorbicyclen, chlorbromuron, chlorbufam, chlordane, chlordecone, chlordimeform, chlorempenthrin, chloretazate, chlorethephon, chlorethoxyfos, chloreturon, chlorfenac, chlorfenapyr, chlorfenazole, chlorfenethol, chlorfenidim, chlorfenprop, chlorfenson, chlorfensulphide, chlorfenvinphos, chlorfenvinphos-methyl, chlorfluazuron, chlorflurazole, chlorflurecol, chlorfluren, chlorflurenol, chloridazon, chlorimuron, chlorinate, chlor-IPC, chlormephos, chlormequat, chlormesulone, chlormethoxynil, chlornidine, chlornitrofen, chloroacetic acid, chlorobenzilate, chlorodinitronaphthalenes, chlorofénizon, chloroform, chloromebuform, chloromethiuron, chloroneb, chlorophacinone, chlorophos, chlorophthalim, chloropicrin, chloropon, chloroprallethrin, chloropropylate, chlorothalonil, chlorotoluron, chloroxifenidim, chloroxuron, chloroxynil, chlorphonium, chlorphoxim, chlorphthalim, chlorprazophos, chlorprocarb, chlorpropham, chlorpyrifos, chlorpyrifos-methyl, chlorquinox, chlorsulfuron, chlorthal, chlorthiamid, chlorthiophos, chlortoluron, chlozolinate, chitosan, cholecalciferol, choline chloride, chromafenozide, cicloheximide, cimectacarb, cimetacarb, cinerin I, cinerin II, cinerins, cinidon-ethyl, cinmethylin, cinosulfuron, cintofen, ciobutide, cisanilide, cismethrin, clacyfos, clefoxydim, clenpirin, clenpyrin, clethodim, climbazole, cliodinate, clodinafop, cloethocarb, clofencet, clofenotane, clofentezine, clofenvinfos, clofibric acid, clofop, clomazone, clomeprop, clonitralid, cloprop, cloproxydim, clopyralid, cloquintocet, cloransulam, closantel, clothianidin, clotrimazole, cloxyfonac, cloxylacon, clozylacon, CMA, CMMP, CMP, CMU, codlelure, colecalciferol, colophonate, copper 8-quinolinolate, copper acetate, copper acetoarsenite, copper arsenate, copper carbonate, basic, copper hydroxide, copper naphthenate, copper oleate, copper oxychloride, copper silicate, copper sulfate, copper sulfate, basic, copper zinc chromate, coumachlor, coumafène, coumafos, coumafuryl, coumaphos, coumatetralyl, coumethoxystrobin, coumithoate, coumoxystrobin, CPMC, CPMF, CPPC, credazine, cresol, cresylic acid, crimidine, crotamiton, crotoxyfos, crotoxyphos, crufomate, cryolite, cue-lure, cufraneb, cumyleron, cumyluron, cuprobam, cuprous oxide, curcumenol, CVMP, cyanamide, cyanatryn, cyanazine, cyanofenphos, cyanogen, cyanomethyl 4-amino-3-chloro-5-fluoro-6-(7- fluoro-IH-indol-6-yl)pyridine-2-carboxylate, cyanophos, cyanthoate, cyantraniliprole, cyanuric acid, cyazofamid, cybutryne, cyclafuramid, cyclanilide, cyclaniliprole, cyclethrin, cycloate, cyclobutrifluram, cycloheximide, cycloprate, cycloprothrin, cyclopyranil, cyclopyrimorate, cyclosulfamuron, cycloxaprid, cycloxydim, cycluron, cyenopyrafen, cyetpyrafen, cyflufenamid, cyflumetofen, cyfluthrin, cyhalodiamide, cyhalofop, cyhalofop-butyl, cyhalothrin, cyhexatin, cymiazole, cymoxanil, cyometrinil, cypendazole, cypermethrin, cyperquat, cyphenothrin, cyprazine, cyprazole, cyproconazole, cyprodinil, cyprofuram, cypromid, cyprosulfamide, cypyrafluone, cyromazine, cythioate, cytrex, daimuron, dalapon, daminozide, dayoutong, dazomet, DBCP, *d*-camphor, DCB, DCD, DCIP, DCPA (Japan), DCPA (USA), DCPTA, DCU, DDD, DDPP, DDT, DDVP, debacarb, decafentin, decamethrin, decarbofuran, deet, dehydroacetic acid, deiquat, delachlor, delnav, deltamethrin, demephion, demephion-O, demephion-S, demeton, demeton-methyl, demeton-O, demeton-O-methyl, demeton-S, demeton-*S*-methyl, demeton-*S*-methyl sulphone, demeton-*S*-methylsulphon, DEP, depalléthrine, derris, desmedipham, desmetryn, desmetryne, d-fanshiluquebingjuzhi, DFDT, diafenthiuron, dialifor, dialifos, diallate, diallate, diamidafos, dianat, diatomaceous earth, diatomite, diazinon, dibrom, dibutyl phthalate, dibutyl succinate, dicamba, dicapthon, dicarbasulf, dicarbosulf, dichlobenil, dichlobentiazox, dichlofenthion, dichlofluanid, dichlone, dichloralurea, dichlorbenzuron, dichlorfenidim, dichlorflurecol, dichlorflurenol, dichlormate, dichlormid, dichloromethane, dichlorophen, dichlorprop, dichlorprop-P, dichlorvos, dichlozolin, dichlozoline, diclobutrazol, diclocymet, diclofop, diclomezine, dicloran, dicloromezotiaz, diclosulam, dicofol, dicophane, dicoumarol, dicresyl, dicrotophos, dicryl, dicumarol, dicyclanil, dicyclonon, dieldrin, dienochlor, diethamquat, diethatyl, diethion, diéthion, diethofencarb, dietholate, diéthon, diethyl pyrocarbonate, diethyltoluamide, difenacoum, difenoconazole, difenopenten, difenoxuron, difenzoquat, difethialone, diflovidazin, diflubenzuron, diflufenican, diflufenicanil, diflufenzopyr, diflumetorim, dikegulac, dilor, dimatif, dimefluthrin, dimefox, dimefuron, dimehypo, dimepiperate, dimesulfazet, dimetachlone, dimetan,

dimethacarb, dimethachlone, dimethachlor, dimethametryn, dimethenamid, dimethenamid-P, dimethipin, dimethirimol, dimethoate, dimethomorph, dimethrin, dimethyl carbate, dimethyl disulfide, dimethyl phthalate, dimethylvinphos, dimetilan, dimexano, dimidazon, dimoxystrobin, dimpropyridaz, dimpylate, dimuron, dinex, dingjunezuo, diniconazole, diniconazole-M, dinitramine, dinitrophenols, dinobuton, dinocap, dinocap-4, dinocap-6, dinocton, dinofenate, dinopenton, dinoprop, dinosam, dinoseb, dinosulfon, dinotefuran, dinoterb, dinoterbon, diofenolan, dioxabenzofos, dioxacarb, dioxathion, dioxation, diphacin, diphacinone, diphenadione, diphenamid, diphenamide, diphenyl sulfone, diphenylamine, diphenylsulphide, diprogulic acid, dipropalin, dipropetryn, dipterex, dipymetitrone, dipyrithione, diquat, disodium tetraborate, disosultap, disparlure, disugran, disul, disulfiram, disulfoton, ditalimfos, dithianon, dithicrofos, dithioether, dithiométon, dithiopyr, diuron, dixanthogen, *d*-limonene, DMDS, DMPA, DNOC, dodemorph, dodicin, dodine, dofenapyn, doguadine, dominicalure, doramectin, DPC, drazoxolon, DSMA, *d-trans*-allethrin, *d*-trans-resmethrin, dufulin, dymron, EBEP, EBP, ebufos, ecdysterone, echlomezol, EDB, EDC, EDDP, edifenphos, eglinazine, emamectin, EMPC, empenthrin, enadenine, endosulfan, endothal, endothall, endothion, endrin, enestroburin, enilconazole, enoxastrobin, ephirsulfonate, EPN, epocholeone, epofenonane, epoxiconazole, eprinomectin, epronaz, epsilon-metofluthrin, epsilon-momfluorothrin, EPTC, erbon, ergocalciferol, erlujixiancaoan, esdépalléthrine, esfenvalerate, ESP, esprocarb, etacelasil, etaconazole, etaphos, etem, ethaboxam, ethachlor, ethalfluralin, ethametsulfuron, ethaprochlor, ethephon, ethidimuron, ethiofencarb, ethiolate, ethion, ethiozin, ethiprole, ethirimol, ethoate-methyl, ethobenzanid, ethofumesate, ethohexadiol, ethoprop, ethoprophos, ethoxyfen, ethoxyquin, ethoxysulfuron, ethychlozate, ethyl formate, ethyl pyrophosphate, ethylan, ethyl-DDD, ethylene, ethylene dibromide, ethylene dichloride, ethylene oxide, ethylicin, ethylmercury 2,3-dihydroxypropyl mercaptide, ethylmercury acetate, ethylmercury bromide, ethylmercury chloride, ethylmercury phosphate, etinofen, ETM, etnipromid, etobenzanid, etofenprox, etoxazole, etridiazole, etrimfos, étrimphos, eugenol, EXD, famoxadone, famphur, fenac, fenamidone, fenaminosulf, fenaminstrobin, fenamiphos, fenapanil, fenarimol, fenasulam, fenazaflor, fenazaquin, fenbuconazole, fenbutatin oxide, fenchlorazole, fenchlorphos, fenclofos, fenclorim, fenethacarb, fenfluthrin, fenfuram, fenhexamid, fenidim, fenitropan, fenitrothion, fénizon, fenjuntong, fenobucarb, fenolovo, fenoprop, fenothiocarb, fenoxacrim, fenoxanil, fenoxaprop, fenoxaprop-P, fenoxasulfone, fenoxycarb, fenpiclonil, fenpicoxamid, fenpirithrin, fenpropathrin, fenpropidin, fenpropimorph, fenpyrazamine, fenpyroximate, fenquinotrione, fenridazon, fenson, fensulfothion, fenteracol, fenthiaprop, fenthion, fenthion-ethyl, fentiaprop, fentin, fentrazamide, fentrifanil, fenuron, fenuron-TCA, fenvalerate, ferbam, ferimzone, ferric phosphate, ferrous sulfate, fipronil, flamprop, flamprop-M, flazasulfuron, flocoumafen, flometoquin, flonicamid, florasulam, florpyrauxifen, florpyrauxifen-benzyl, florylpicoxamid, fluacrypyrim, fluazaindolizine, fluazifop, fluazifop-P, fluazinam, fluazolate, fluazuron, flubendiamide, flubeneteram, flubenzimine, flubrocythrinate, flucarbazone, flucetosulfuron, fluchloralin, flucofuron, flucycloxuron, flucythrinate, fludioxonil, fluénéthyl, fluenetil, fluensulfone, flufenacet, flufenerim, flufenican, flufenoxuron, flufenoxystrobin, flufenprox, flufenpyr, flufenzine, flufiprole, fluhexafon, fluindapyr, flumethrin, flumetover, flumetralin, flumetsulam, flumezin, flumiclorac, flumioxazin, flumipropyn, flumorph, fluometuron, fluopicolide, fluopimomide, fluopyram, fluorbenside, fluoridamid, fluoroacetamide, fluoroacetic acid, fluorochloridone, fluoro-DDT, fluorodifen, fluorogesarol, fluoroglycofen, fluoroimide, fluoromide, fluoromidine, fluoronitrofen, fluoroxypyr, fluothiuron, fluotrimazole, fluoxapiprolin, fluoxastrobin, flupentiofenox, flupoxam, flupropacil, flupropadine, flupropanate, flupyradifurone, flupyrimin, flupyrsulfuron, fluquinconazole, fluralaner, flurazole, flurecol, flurenol, fluridone, flurochloridone, fluromidine, fluroxypyr, fluroxypyr meptyl, flurprimidol, flursulamid, flurtamone, flusilazole, flusulfamide, flutenzine, fluthiacet, fluthiamide, flutianil, flutolanil, flutriafol, fluvalinate, fluxametamide, fluxapyroxad, fluxofenim, folpel, folpet, fomesafen, fonofos, foramsulfuron, forchlorfenuron, formaldehyde, formetanate, formothion, formparanate, fosamine, fosetyl, fosmethilan, fospirate, fosthiazate, fosthietan, frontalin, fthalide, fuberidazole, fucaojing, fucaomi, fujunmanzhi, fulumi, fumarin, funaihecaoling, fuphenthiourea, furalane, furalaxyl, furamethrin, furametpyr, furan tebufenozide, furathiocarb, furcarbanil, furconazole, furconazole-cis, furethrin, furfural, furilazole, furmecyclox, furophanate, furyloxyfen, *gamma*-BHC, *gamma*-cyhalothrin, *gamma*-HCH, genit, gibberellic acid, gibberellin A3, gibberellins, gliftor, glitor, glucochloralose, glufosinate, glufosinate-P, glyodin, glyoxime, glyphosate, glyphosine, gossyplure, grandlure, griseofulvin, guanoctine, guazatine, halacrinate, halauxifen, halauxifen-methyl, halfenprox, halofenozide, halosafen, halosulfuron, haloxydine, haloxyfop, haloxyfop-P, haloxyfop-R, HCA, HCB, HCH, hemel, hempa, HEOD, heptachlor, heptafluthrin, heptamaloxyloglucan, heptenophos, heptopargil, herbimycin, herbimycin A, heterophos, hexachlor, hexachloran, hexachloroacetone, hexachlorobenzene, hexachlorobutadiene, hexachlorophene, hexaconazole, hexaflumuron, hexafluoramin, hexaflurate, hexalure, hexamide, hexazinone, hexylthiofos, hexythiazox, HHDN, holosulf, homobrassinolide, huancaiwo, huanchongjing, huangcaoling, huanjunzuo, hydramethylnon, hydrargaphen, hydrated lime, hydrogen cyanamide, hydrogen cyanide, hydroprene, hydroxyisoxazole, hymexazol, hyquincarb, IAA, IBA, IBP, icaridin, imazalil, imazamethabenz, imazamox, imazapic, imazapyr, imazaquin, imazethapyr, imazosulfuron, imibenconazole, imicyafos, imidacloprid, imidaclothiz, iminoctadine, imiprothrin, inabenfide, indanofan, indaziflam, indoxacarb, inezin, infusorial earth, inpyrfluxam, iodobonil, iodocarb, iodofenphos, iodomethane, iodosulfuron, iofensulfuron, ioxynil, ipazine, IPBC, IPC, ipconazole, ipfencarbazone, ipfentrifluconazole, ipflufenoquin, iprobenfos, iprodione, iprovalicarb, iprymidam, ipsdienol, ipsenol, IPSP, IPX, isamidofos, isazofos, isobenzan, isocarbamid, isocarbamide, isocarbophos, isocil, isocycloseram, isodrin, isofenphos, isofenphos-methyl, isofetamid, isoflucypram, isolan, isomethiozin, isonoruron, isopamphos, isopolinate, isoprocarb, isoprocil, isopropalin, isopropazol, isoprothiolane, isoproturon,

isopyrazam, isopyrimol, isothioate, isotianil, isouron, isovaledione, isoxaben, isoxachlortole, isoxadifen, isoxaflutole, isoxapyrifop, isoxathion, isuron, ivermectin, ixoxaben, izopamfos, izopamphos, japonilure, japothrins, jasmolin I, jasmolin II, jasmonic acid, jiahuangchongzong, jiajizengxiaolin, jiaxiangjunzhi, jiecaowan, jiecaoxi, Jinganmycin A, jodfenphos, juvenile hormone I, juvenile hormone II, juvenile hormone III, kadethrin, *kappa*-bifenthrin, *kappa*-tefluthrin, karbutilate, karetazan, kasugamycin, kejunlin, kelevan, ketospiradox, kieselguhr, kinetin, kinoprene, kiralaxyl, kresoxim-methyl, kuicaoxi, lactofen, *lambda*-cyhalothrin, lancotrione, latilure, lead arsenate, lenacil, lepimectin, leptophos, lianbenjingzhi, lime sulfur, lindane, lineatin, linuron, lirimfos, litlure, looplure, lotilaner, lufenuron, lüfuqingchongxianan, lüxiancaolin, lvdingjunzhi, lvfumijvzhi, lvxiancaolin, lythidathion, M-74, M-81, MAA, magnesium phosphide, malathion, maldison, maleic hydrazide, malonoben, maltodextrin, MAMA, mancopper, mancozeb, mandestrobin, mandipropamid, maneb, matrine, mazidox, MCC, MCP, MCPA, MCPA-thioethyl, MCPB, MCPP, mebenil, mecarbam, mecarbinzid, mecarphon, mecoprop, mecoprop-P, medimeform, medinoterb, medlure, mefenacet, mefenoxam, mefenpyr, mefentrifluconazole, mefluidide, megatomoic acid, melissyl alcohol, melitoxin, MEMC, menazon, MEP, mepanipyrim, meperfluthrin, mephenate, mephosfolan, mepiquat, mepronil, meptyldinocap, mercaptodimethur, mercaptophos, mercaptophos thiol, mercaptothion, mercuric chloride, mercuric oxide, mercurous chloride, merphos, merphos oxide, mesoprazine, mesosulfuron, mesotrione, mesulfen, mesulfenfos, mesulphen, metacresol, metaflumizone, metalaxyl, metalaxyl-M, metaldehyde, metam, metamifop, metamitron, metaphos, metaxon, metazachlor, metazosulfuron, metazoxolon, metcamifen, metconazole, metepa, metflurazon, methabenzthiazuron, methacrifos, methalpropalin, metham, methamidophos, methasulfocarb, methazole, methfuroxam, methibenzuron, methidathion, methiobencarb, methiocarb, methiopyrisulfuron, methiotepa, methiozolin, methiuron, methocrotophos, métholcarb, methometon, methomyl, methoprene, methoprotryn, methoprotryne, methoquin-butyl, methothrin, methoxychlor, methoxyfenozide, methoxyphenone, methyl apholate, methyl bromide, methyl eugenol, methyl iodide, methyl isothiocyanate, methyl parathion, methylacetophos, methylchloroform, methyldithiocarbamic acid, methyldymron, methylene chloride, methyl-isofenphos, methylmercaptophos, methylmercaptophos oxide, methylmercaptophos thiol, methylmercury benzoate, methylmercury dicyandiamide, methylmercury pentachlorophenoxide, methylneodecanamide, methylnitrophos, methyltriazothion, metiozolin, metiram, metiram-zinc, metobenzuron, metobromuron, metofluthrin, metolachlor, metolcarb, metometuron, metominostrobin, metosulam, metoxadiazone, metoxuron, metrafenone, metriam, metribuzin, metrifonate, metriphonate, metsulfovax, metsulfuron, metyltetraprole, mevinphos, mexacarbate, miechuwei, mieshuan, miewenjuzhi, milbemectin, milbemycin oxime, milneb, mimanan, mipafox, MIPC, mirex, MNAF, moguchun, molinate, molosultap, momfluorothrin, monalide, monisouron, monisuron, monoamitraz, monochloroacetic acid, monocrotophos, monolinuron, monomehypo, monosulfiram, monosulfuron, monosultap, monuron, monuron-TCA, morfamquat, moroxydine, morphothion, morzid, moxidectin, MPMC, MSMA, MTMC, muscalure, myclobutanil, myclozolin, myricyl alcohol, *N*-(ethylmercury)-*p*-toluenesulfonanilide, *N*-(ethylmercury)-*p*-toluenesulphonanilide, NAA, NAAm, nabam, naftalofos, naled, naphthalene, naphthaleneacetamide, naphthalic anhydride, naphthalophos, naphthoxyacetic acids, naphthylacetic acids, naphthylindane-1,3-diones, naphthyloxyacetic acids, naproanilide, napropamide, napropamide-M, naptalam, natamycin, NBPOS, neburea, neburon, nendrin, neonicotine, nichlorfos, niclofen, niclosamide, nicobifen, nicosulfuron, nicotine, nifluridide, nikkomycins, ningnamycin, ningnanmycin, NIP, nipyraclofen, nipyralofen, nitenpyram, nithiazine, nitralin, nitrapyrin, nitrilacarb, nitrofen, nitrofluorfen, nitrostyrene, nitrothal-isopropyl, NNM, nobormide, nonanol, norbormide, norea, norflurazon, nornicotine, noruron, novaluron, noviflumuron, NPA, nuarimol, nuranone, OCH, octachlorodipropyl ether, octhilinone, *o*-dichlorobenzene, ofurace, omethoate, *o*-phenylphenol, orbencarb, orfralure, orthobencarb, *ortho*-dichlorobenzene, orthosulfamuron, oryctalure, orysastrobin, oryzalin, osthol, osthole, ostramone, ovatron, ovex, oxabetrinil, oxadiargyl, oxadiazon, oxadixyl, oxamate, oxamyl, oxapyrazon, oxapyrazone, oxasulfuron, oxathiapiprolin, oxaziclomefone, oxazosulfyl, oxine-copper, oxine-Cu, oxolinic acid, oxpoconazole, oxycarboxin, oxydemeton-methyl, oxydeprofos, oxydisulfoton, oxyenadenine, oxyfluorfen, oxymatrine, oxytetracycline, oxythioquinox, PAC, paclobutrazol, paichongding, palléthrine, PAP, *para*-dichlorobenzene, parafluron, paraquat, parathion, parathion-methyl, parinol, Paris green, PCNB, PCP, PCP-Na, *p*-dichlorobenzene, PDJ, pebulate, pédinex, pefurazoate, pelargonic acid, penconazole, pencycuron, pendimethalin, penfenate, penflufen, penfluron, penoxalin, penoxsulam, pentachlorophenol, pentachlorophenyl laurate, pentanochlor, penthiopyrad, pentmethrin, pentoxazone, perchlordecone, perfluidone, permethrin, pethoxamid, PHC, phenamacril, phenamacrilethyl, phénaminosulf, phenazine oxide, phénétacarbe, phenisopham, phenkapton, phenmedipham, phenmedipham-ethyl, phenobenzuron, phenothiol, phenothrin, phenproxide, phenthoate, phenylmercuriurea, phenylmercury acetate, phenylmercury chloride, phenylmercury derivative of pyrocatechol, phenylmercury nitrate, phenylmercury salicylate, phorate, phosacetim, phosalone, phosametine, phosazetim, phosazetin, phoscyclotin, phosdiphen, phosethyl, phosfolan, phosfolan-methyl, phosglycin, phosmet, phosnichlor, phosphamide, phosphamidon, phosphine, phosphinothricin, phosphocarb, phosphorus, phostin, phoxim, phoxim-methyl, phthalide, phthalophos, phthalthrin, picarbutrazox, picaridin, picloram, picolinafen, picoxystrobin, pimaricin, pindone, pinoxaden, piperalin, piperazine, piperonyl butoxide, piperonyl cyclonene, piperophos, piproctanly, piproctanyl, piprotal, pirimetaphos, pirimicarb, piriminil, pirimioxyphos, pirimiphos-ethyl, pirimiphos-methyl, pival, pivaldione, plifenate, PMA, PMP, polybutenes, polycarbamate, polychlorcamphene, polyethoxyquinoline, polyoxin D, polyoxins, polyoxorim, polythialan, potassium arsenite, potassium azide, potassium cyanate, potassium ethylxanthate, potassium naphthenate, potassium polysulfide, potassium thiocyanate, pp'-DDT, prallethrin, precocene I, precocene II, precocene III, pretilachlor, primidophos, primisulfuron, probenazole, prochloraz, proclonol, procyazine, procymidone, prodiamine, profenofos, profluazol, profluralin, profluthrin, profoxydim, profuriteaminium, proglinazine, prohexadione, prohydrojasmon, promacyl, promecarb, prometon, prometryn, prometryne, promurit, pronamide, pronitridine, propachlor, propafos, propamidine, propamocarb, propanil, propaphos, propaquizafop, propargite, proparthrin, propazine, propetamphos, propham, propiconazole, propidine, propineb, propisochlor, propoxur, propoxycarbazone, propyl isome, propyrisulfuron, propyzamide, proquinazid, prosuler, prosulfalin, prosulfocarb, prosulfuron, prothidathion, prothiocarb, prothioconazole, prothiofos, prothoate, protrifenbute, proxan, prymidophos, prynachlor, psoralen, psoralene, pydanon, pydiflumetofen, pyflubumide, pymetrozine, pyracarbolid, pyraclofos, pyraclonil, pyraclostrobin, pyraflufen, pyrafluprole, pyramat, pyrametostrobin, pyraoxystrobin, pyrapropoyne, pyrasulfotole, pyraziflumid, pyrazolate, pyrazolynate, pyrazon, pyrazophos, pyrazosulfuron, pyrazothion, pyrazoxyfen, pyresmethrin, pyrethrin I, pyrethrin II, pyrethrins, pyribambenz-isopropyl, pyribambenz-propyl, pyribencarb, pyribenzoxim, pyributicarb, pyriclor, pyridaben, pyridachlometyl, pyridafol, pyridalyl, pyridaphenthion, pyridaphenthione, pyridate, pyridinitril, pyrifenox, pyrifluquinazon, pyriftalid, pyrimétaphos, pyrimethanil, pyrimicarbe, pyrimidifen, pyriminobac, pyriminostrobin, pyrimiphos-éthyl, pyrimiphos-méthyl, pyrimisulfan, pyrimitate, pyrinuron, pyriofenone, pyriprole, pyripropanol, pyriproxyfen, pyrisoxazole, pyrithiobac, pyrolan, pyroquilon, pyroxasulfone, pyroxsulam, pyroxychlor, pyroxyfur, qincaosuan, qingkuling, quassia, quinacetol, quinalphos, quinalphos-methyl, quinazamid, quinclorac, quinconazole, quinmerac, quinoclamine, quinofumelin, quinomethionate, quinonamid, quinothion, quinoxyfen, quintiofos, quintozene, quintrione, quizalofop, quizalofop-P, quwenzhi, quyingding, rabenzazole, rafoxanide, *R*-diniconazole, rebemide, reglone, renofluthrin, renriduron, rescalure, resmethrin, rhodethanil, rhodojaponin-III, ribavirin, rimsulfuron, rizazole, *R*-metalaxyl, rodéthanil, ronnel, rotenone, ryania, sabadilla, saflufenacil, saijunmao, saisentong, salicylanilide, salifluofen, sanguinarine, santonin, Sanzuohuangcaotong, sarolaner, *S*-bioallethrin, schradan, scilliroside, sebuthylazine, secbumeton, sedaxane, selamectin, semiamitraz, sesamex, sesamolin, sesone, sethoxydim, sevin, shuangjiaancaolin, shuangjianancaolin, *S*-hydroprene, siduron, sifumijvzhi, siglure, silafluofen, silatrane, silica aerogel, silica gel, silthiofam, silthiopham, silthiophan, silvex, simazine, simeconazole, simeton, simetryn, simetryne, sintofen, *S*-kinoprene, slaked lime, SMA, *S*-methoprene, *S*-metolachlor, sodium arsenite, sodium azide, sodium chlorate, sodium cyanide, sodium fluoride, sodium fluoroacetate, sodium hexafluorosilicate, sodium naphthenate, sodium orthophenylphenoxide, sodium pentachlorophenate, sodium pentachlorophenoxide, sodium polysulfide, sodium silicofluoride, sodium tetrathiocarbonate, sodium thiocyanate, sodium *o*-phenylphenoxide, solan, sophamide, spinetoram, spinosad, spirodiclofen, spiromesifen, spiropidion, spirotetramat, spiroxamine, stirofos, streptomycin, strychnine, sulcatol, sulcofuron, sulcotrione, sulfallate, sulfentrazone, sulfiram, sulfluramid, sulfodiazole, sulfometuron, sulfosate, sulfosulfuron, sulfotep, sulfotepp, sulfoxaflor, sulfoxide, sulfoxime, sulfur, sulfuric acid, sulfuryl fluoride, sulglycapin, sulphosate, sulprofos, sultropen, swep, tartar emetic, tau-fluvalinate, tavron, tazimcarb, TBTO, TBZ, TCA, TCBA, TCMTB, TCNB, TDE, tebuconazole, tebufenozide, tebufenpyrad, tebufloquin, tebupirimfos, tebutam, tebuthiuron, tecloftalam, tecnazene, tecoram, tedion, teflubenzuron, tefluthrin, tefuryltrione, tembotrione, temefos, temephos, tepa, TEPP, tepraloxydim, teproloxydim, terallethrin, terbacil, terbucarb, terbuchlor, terbufos, terbumeton, terbuthylazine, terbutol, terbutryn, terbutryne, terraclor, terramicin, terramycin, tetcyclacis, tetflupyrolimet, tetrachlorantraniliprole, tetrachloroethane, tetrachlorvinphos, tetraconazole, tetradifon, tetradisul, tetrafluron, tetramethrin, tetramethylfluthrin, tetramine, tetranactin, tetraniliprole, tetrapion, tetrasul, thallium sulfate, thallous sulfate, thenylchlor, *theta*-cypermethrin, thiabendazole, thiacloprid, thiadiazine, thiadifluor, thiamethoxam, thiameturon, thiapronil, thiazafluron, thiazfluron, thiazone, thiazopyr, thicrofos, thicyofen, thidiazimin, thidiazuron, thiencarbazone, thifensulfuron, thifluzamide, thimerosal, thimet, thiobencarb, thiocarboxime, thiochlorfenphim, thiochlorphenphime, thiocyanatodinitrobenzenes, thiocyclam, thiodan, thiodiazole-copper, thiodicarb, thiofanocarb, thiofanox, thiofluoximate, thiohempa, thiomersal, thiometon, thionazin, thiophanate, thiophanate-ethyl, thiophanate-methyl, thiophos, thioquinox, thiosemicarbazide, thiosultap, thiotepa, thioxamyl, thiram, thiuram, thuringiensin, tiabendazole, tiadinil, tiafenacil, tiaojiean, TIBA, tifatol, tiocarbazil, tioclorim, tioxazafen, tioxymid, tirpate, TMTD, tolclofos-methyl, tolfenpyrad, tolprocarb, tolpyralate, tolyfluanid, tolylfluanid, tolylmercury acetate, tomarin, topramezone, toxaphene, TPN, tralkoxydim, tralocythrin, tralomethrin, tralopyril, transfluthrin, transpermethrin, tretamine, triacontanol, triadimefon, triadimenol, triafamone, triallate, triallate, triamiphos, triapenthenol, triarathene, triarimol, triasulfuron, triazamate, triazbutil, triaziflam, triazophos, triazothion, triazoxide, tribasic copper chloride, tribasic copper sulfate, tribenuron, tribufos, tributyltin oxide, tricamba, trichlamide, trichlopyr, trichlorfon, trichlormetaphos-3, trichloronat, trichloronate, trichlorotrinitrobenzenes, trichlorphon, triclopyr, triclopyricarb, tricresol, tricyclazole, tricyclohexyltin hydroxide, tridemorph, tridiphane, trietazine, trifenmorph, trifenofos, trifloxystrobin, trifloxysulfuron, trifludimoxazin, triflumezopyrim, triflumizole, triflumuron, trifluralin, triflusulfuron, trifop, trifopsime, triforine, trihydroxytriazine, trimedlure, trimethacarb, trimeturon, trinexapac, triphenyltin, triprene, tripropindan, triptolide, tripyrasulfone, tritac, trithialan, triticonazole, tritosulfuron, trunc-call, tuoyelin, tyclopyrazoflor, uniconazole, uniconazole-P, urbacide, uredepa, valerate, validamycin, validamycin A, valifenalate, valone, vamidothion, vangard, vaniliprole, vernolate, vinclozolin, vitamin D3, warfarin, xiaochongliulin, xinjunan, xiwojunan, xiwojunzhi, XMC, xylachlor, xylenols, xylylcarb, xymiazole, yishijing, zarilamid, zeatin, zengxiaoan, zengxiaolin, *zeta*-cypermethrin, zinc naphthenate, zinc phosphide, zinc thiazole, zinc thiozole, zinc trichlorophenate, zinc trichlorophenoxide, zineb, ziram, zolaprofos, zoocoumarin, zoxamide, zuoanjunzhi, zuocaoan, zuojunzhi, zuomihuanglong, $\alpha$-chlorohydrin, $\alpha$-ecdysone,

α-multistriatin, α-naphthaleneacetic acids, and β-ecdysone.

As used in this disclosure, each of the above is an active ingredient. For more information consult the materials listed in the "**Compendium of Pesticide Common Names**," located at **Alanwood.net**, and various editions, including the on-line edition, of "**The Pesticide Manual**" located at **bcpcdata.com**.

A particularly preferred selection of active ingredients are chlorantraniliprole, chlorpyrifos, cyantraniliprole, hexaflumuron, methomyl, methoxyfenozide, noviflumuron, oxamyl, spinetoram, spinosad, sulfoxaflor, and triflumezopyrim (hereafter "**AIGA-2**").

Additionally, another particularly preferred selection of active ingredients are acequinocyl, acetamiprid, acetoprole, avermectin, azinphos-methyl, bifenazate, bifenthrin, carbaryl, carbofuran, chlorfenapyr, chlorfluazuron, chromafenozide, clothianidin, cyfluthrin, cypermethrin, deltamethrin, diafenthiuron, emamectin benzoate, endosulfan, esfenvalerate, ethiprole, etoxazole, fipronil, flonicamid, fluacrypyrim, *gamma*-cyhalothrin, halofenozide, indoxacarb, *lambda*-cyhalothrin, lufenuron, malathion, methomyl, novaluron, permethrin, pyridalyl, pyrimidifen, spirodiclofen, tebufenozide, thiacloprid, thiamethoxam, thiodicarb, tolfenpyrad, and *zeta*-cypermethrin (hereafter "**AIGA-3**").

Seed treatments are used alone or in combination to address or prevent a number of pests, diseases, nutrient deficiencies, and to enhance plant growth. These seed treatments may include fungicides, insecticides, inoculants, plant growth regulators, fertilizers, and fertilizer enhancers. Currently, the following fungicides may be used with molecule F1 (disclosed hereafter) (R)-flutriafol, (R)-hexaconazole, (S)-flutriafol, (S)-hexaconazole, 10,10'-oxybisphenoxarsine, 2-(thiocyanomethylthio)benzothiazole, 2,2-dibromo-3-nitrilopropionamide, 2,4,5-trichlorophenol, 2,4-dimethylphenol, 2,5-dichlorobenzoic acid methyl ester, 2,6-dichloro-N-((4-(trifluoromethyl)phenyl)methyl-benzamide, 24-epibrassinolide, 2-allyphenol, 2-aminobutane, 2-methoxyethylmercury acetate, 2-methoxyethylmercury chloride, 2-phenylphenol, 8-hydroxyquinoline, Acibenzolar-S-methyl, Aldimorph, Ametoctradin, Amisulbrom, Ammonium acetate, Ammonium carbonate, Ampropylfos, Anilazine, Anthracene oil, Asomate, Azaconazole, Azithiram, Azoxystrobin, Barium polysulphide, Benalaxyl, Benalaxyl-M, Benodanil, Benomyl, Benquinox, Bentaluron, Benthiavalicarb, Benthiavalicarb isopropyl, Benzalkonium chloride, Benzamacril, Benzamacril isobutyl, Benzamorf, Benzoic acid, Benzovindiflupyr, Bethoxazin, Binapacryl, Biphenyl, Bis(methylmercury) sulphate, Bismerthiazol, Bis-trichloromethyl sulfone, Bitertanol, Bithionol, Bixafen, Bordeaux mixture, Boric acid, Boscalid, Bromuconazole, Bronopol, Bupirimate, Buthiobate, Calcium carbonate, Calcium chloride, Calcium cyanamide, Calcium hydroxide, Calcium phosphate, Captafol, Captan, Carbamorph, Carbendazim, Carboxin, Carpropamid, Chinomethionat, Chlobenthiazone, Chloraniformethan, Chloranil, Chlordecone, Chlorfenazole, Chloroneb, Chlorothalonil, Chloroxylenol, Chlorquinox, Chlozolinate, Cis-propiconazole, Climbazole, Copper (1) oxide, Copper abietate, Copper bis(3-phenylsalicylate), Copper II acetate, Copper II carbonate, Copper II chloride, Copper II hydroxide, Copper naphthenate, Copper oxychloride, Copper sulphate, COS-OGA, Coumethoxystrobin, Coumoxystrobin, Cufraneb, Cuprobam, Cyazofamid, Cycloheximide, Cyflufenamid, Cymoxanil, Cypendazole, Cyproconazole, Cyprodinil, Cyprofuram, Dazomet, D-D, Debacarb, Decafentin, Dehydroacetic acid, Diammonium ethylenebis(dithiocarbamate), Dibromochloropropane, Dichlobentiazox, Dichlofluanid, Dichlone, Dichlorophen, Diclobutrazol, Diclocymet, Diclomezine, Dicloran, Didecyldimethylammonium chloride, Diethofencarb, Difenoconazole, Difenzoquat, Difenzoquat metilsulfate, Diflumetorim, Dimetachlone, Dimethirimol, Dimethomorph, Dimethyl disulfide, Dimoxystrobin, Diniconazole, Diniconazole-M, Dinobuton, Dinocap, Dinocton, Dinopenton, Dinosulfon, Diphenylamine, Dipymetitrone, Dipyrithione, Disodium octaborate tetrahydrate, Disodium phosphonate, Ditalimfos, Dithianon, DNOC, Dodemorph, Dodemorph acetate, Dodine, Drazoxolon, Edifenphos, Enoxastrobin, Epoxiconazole, Etaconazole, Etem, Ethaboxam, Ethirimol, Ethoxyquin, Ethylene bisisothiocyanate sulphide, Ethylicin, Ethylmercury bromide, Etridiazole, Famoxadone, Fenamidone, Fenaminosulf, Fenaminstrobin, Fenapanil, Fenarimol, Fenbuconazole, Fenfuram, Fenhexamid, Fenitropan, Fenoxanil, Fenpiclonil, Fenpicoxamid, Fenpropidin, Fenpropimorph, Fenpyrazamine, Fentin acetate, Fentin chloride, Fentin hydroxide, Ferbam, Florylpicoxamid, Fluazinam, Flubeneteram, Flubenzimine, Fludioxonil, Flufenoxystrobin, Flumorph, Fluopicolide, Fluopimomide, Fluopyram, Fluoroimide, Fluotrimazole, Fluoxapiprolin, Fluoxastrobin, Fluquinconazole, Flusilazole, Flusulfamide, Flutianil, Flutolanil, Flutriafol, Fluxapyroxad, Folpet, Formaldehyde, Fosetyl, Fosetyl-aluminium, Fuberidazole, Furalaxyl, Furalaxyl-M, Furametpyr, Furconazole, Furconazole-cis, Furfural, Furmecyclox, Furyloxyfen, Gliotoxin, Glutaraldehyde, Glyodin, Griseofulvin, Guazatine, Halacrinate, Hexachlorobenzene, Hexachlorophene, Hexaconazole, Hexylthiofos, Huanjunzuo, Hydrogen peroxide, Hymexazol, Imazalil, Imibenconazole, Iminoctadine, Iminoctadine triacetate, Iminoctadine tris(albesilate), Inezin, Ipconazole, Ipfentrifluconazole, Ipflufenoquin, Iprobenfos, Iprodione, Iprovalicarb, Isobutyric acid, Isofetamid, Isoflucypram, Isopamphos, Isoprothiolane, Isopyrazam, Isotianil, Izopamfos, Kresoxim-methyl, Lime sulphur, Mancopper, Mancozeb, Mandestrobin, Mandipropamid, Maneb, Mebenil, Mecarbinzid, Mefentrifluconazole, Mepanipyrim, Mepronil, Meptyldinocap, Mercuric oxide, Mercurous chloride, Metalaxyl, Metalaxyl-M, Metam-potassium, Metam-sodium, Metazoxolon, Metconazole, Methasulfocarb, Methfuroxam, Methyl isothiocyanate, Methylarsenic sulphide, Methylene bisthiocyanate, Metiram, Metominostrobin, Metrafenone, Metsulfovax, Metyltetraprole, Mucochloric anhydride, Myclobutanil, Myclozolin, N-(3-chloro-2,6-dimethylphenyl)-2-methoxy-N-(tetrahydr-2-oxo-3-furanyl)acetamide, Nabam, Nickel bis(dimethyldithiocarbamate), Niclosamide, Nitrothal isopropyl, Nuarimol, Octhilinone, Ofurace, Orysastrobin, Oxadixyl, Oxathiapiprolin, Oxazosulfyl, Oxine-copper, Oxpoconazole fumarate, Oxycarboxin, Paclobutrazol, Paraffin oil (C11-C25) (4a), Paraffin oil (C11-C30) (4c), Paraffin oil (C15-C30) (4b),

Parinol, Penconazole, Pencycuron, Penflufen, Pentachlorophenol, Penthiopyrad, Peroxyacetic acid, Phenyl mercuric acetate, Phenylmercury chloride, Phenylmercury nitrate, Phosdiphen, Phthalide, Picarbutrazox, Picoxystrobin, Piperalin, Potassium bicarbonate, Potassium iodide, Potassium phosphonates, Potassium thiocyanate, Probenazole, Prochloraz, Procymidone, Propamidine, Propamocarb, Propamocarb hydrochloride, Propiconazole, Propineb, Propionic acid, Proquinazid, Prothiocarb, Prothioconazole, Pydiflumetofen, Pyracarbolid, Pyraclostrobin, Pyrametostrobin, Pyraoxystrobin, Pyrapropoyne, Pyraziflumid, Pyrazophos, Pyribencarb, Pyridachlometyl, Pyridinitril, Pyrifenox, Pyrimethanil, Pyrimorph, Pyriofenone, Pyrisoxazole, Pyroquilone, Quinofumelin, Quinoxyfen, Quintozene, Saisentong, Sedaxane, Silthiofam, Simeconazole, Sodium arsenite, Sodium carbonate, Sodium hydrogen carbonate, Sodium hypochlorite, Sodium tetraborate pentahydrate, Spiropidion, Spiroxamine, Sulfuryl fluoride, Sulphur, Tebuconazole, Tebufloquin, Tecloftalam, Tecnazene, Tetraconazole, Thiabendazole, Thicyofen, Thifluzamide, Thiomersal, Thiophanate, Thiophanate-methyl, Thioquinox, Thiram, Tiadinil, Tolclofos-methyl, Tolfenpyrad, Tolprocarb, Tolylfluanid, Trans-propiconazole, Triadimefon, Triadimenol, Triamiphos, Triazoxide, Tributyltin oxide, Trichlamide, Triclopyricarb, Tricyclazole, Tridemorph, Trifloxystrobin, Triflumizole, Triforine, Trioxymethylene, Triticonazole, Urea, Valifenalate, Vinclozolin, Zarilamid, Zinc borate, Zinc oxide, Zineb, Ziram, and Zoxamide, this fungicide group is hereafter "**FGK-1**."

Another preferred group of fungicides for use with molecule F1 (disclosed hereafter) in seed treatments is Azoxystrobin, Benomyl, Benzovindiflupyr, Bixafen, Carbendazim, Chlorothalonil, Cymoxanil, Cyproconazole, Dichlobentiazox, Difenoconazole, Ethaboxam, Famoxadone, Fenbuconazole, Fluopyram, Fluindapyr, Fludioxonil, Folpet, Inpyrfluxam, Ipconazole, Ipfentrifluconazole, Isoflucypram, Mancozeb, Maneb, Mefentrifluconazole, Meptyldinocap, Metalaxyl, and Metalaxyl-M (Mefenoxam), Oxathiapiprolin, Penflufen, Picoxystrobin, Prochloraz, Proquinazid, Prothioconazole, Pyraclostrobin, Quinoxyfen, Sedaxane, Thiabendazole, Thiram, Tricyclazole, and Trifloxystrobin, this fungicide group is hereafter "**FGK-2**."

The following two fungicide molecules are also preferred to be used with molecule F1;

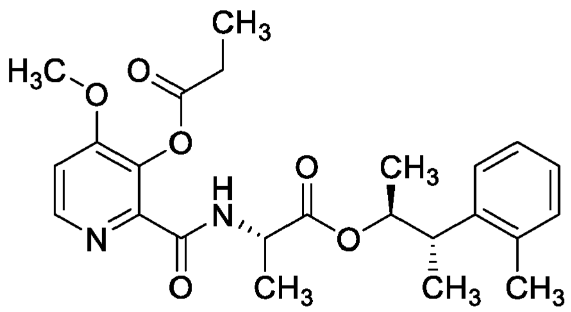

(2*S*,3*S*)-3-(*o*-tolyl)butan-2-yl (4-methoxy-3-(propionyloxy)picolinoyl)-*L*-alaninate
**hereafter "FGK-3"** ; and

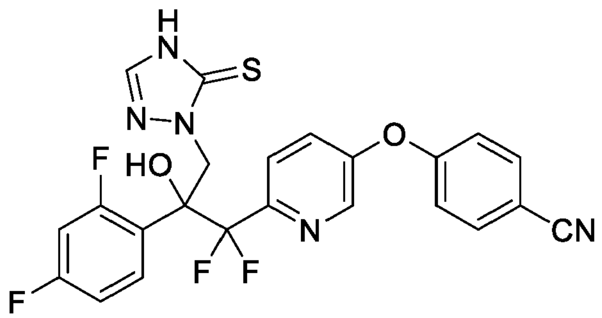

4-((6-(2-(2,4-difluorophenyl)-1,1-difluoro-2-hydroxy-3-(5-thioxo-4,5-dihydro-1*H*-1,2,4-triazol-1-yl)propyl)pyridin-3-yl)oxy)benzonitrile
**hereafter "FGK-4"**

**FGK-3** described in WO2019173665 as Compound Number 278, and **FGK-4** is described in WO2016187201, example 2.

The term "**biopesticide**" means a microbial biological pest control agent that, in general, is applied in a similar manner to chemical pesticides. Commonly they are bacterial, such as *Bacillus* spp., *Burkholderia* spp., *Pseudomonas* spp., *Saccaropolyspora* spp. *Wolbachie pipientis (Zap),* but there are also examples of fungal control agents, including

*Trichoderma* spp. and *Ampelomyces quisqualis.* One well-known biopesticide example is *Bacillus* species, a bacterial disease of Lepidoptera, Coleoptera, and Diptera. Biopesticides include products based on entomopathogenic fungi (*e.g. Beauveria bassiana* strains, *Metarhizium anisopliae strain F52, Paecilomyces fumosoroseus Apopka strain 97, Lecanicillium* spp., and *Isaria* spp.), entomopathogenic nematodes (*e.g. Steinernema feltiae*), and entomopathogenic viruses (*e.g. Cydia pomonella* granulovirus (GV), Nuclear polyhedrosis virus (NPV)). Other examples of entomopathogenic organisms include, but are not limited to, baculoviruses, such as *Thaumatotibia leucotreta GV, Anticarsia gemmatalis MNPV, and Helicoverpa armigera NPV;* protozoa; and Microsporidia. Some include botanical essences including synthetic, extracts and unrefined oils (*e.g. Chenopodium ambrosioides near ambrosioides* extract, Fatty acid monoesters with glycerol or propanediol, Neem oil). For the avoidance of doubt, biopesticides are active ingredients. For further information, see Kachhawa D, Journal of Entomology and Zoology Studies 2007, 5, 468-473.

The term "**locus**" means a habitat, breeding ground, plant, seed, soil, material, or environment, in which a pest is growing, may grow, or may traverse. For example, a locus may be: where crops, trees, fruits, cereals, fodder species, vines, turf, and/or ornamental plants, are growing; where domesticated animals are residing; the interior or exterior surfaces of buildings (such as places where grains are stored); the materials of construction used in buildings (such as impregnated wood); and the soil around buildings.

The phrase "**MoA Material**" means an active ingredient having a mode of action ("**MoA**") as indicated in IRAC MoA Classification v. 9.3, located at irac-online.org., which describes the following groups.

**(1) Acetylcholinesterase (AChE) inhibitors,** includes the following active ingredients *Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC, Xylylcarb, Acephate, Azamethiphos, Azinphos-ethyl, Azinphos-methyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/ DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Isofenphos, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phosalone, Phorate, Phosmet, Phosphamidon, Phoxim, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Trichlorfon, Vamidothion, Pirimiphos-methyl, Imicyafos, and Isopropyl O-(methoxyaminothio-phosphoryl) salicylate.*

**(2) GABA-gated chloride channel blockers**, includes the following active ingredients *Chlordane, Endosulfan, Ethiprole, and Fipronil.*

**(3) Sodium channel modulators**, includes the following active ingredients *Acrinathrin, Allethrin, d-cis-trans Allethrin, d-trans Allethrin, Bifenthrin, Bioallethrin, Bioallethrin S-cyclopentenyl, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(IR)-trans- isomers], Deltamethrin, Empenthrin [(EZ)- (1R)- isomers], Esfenvalerate, Etofenprox, Fenpropathrin, Fenvalerate, Flucythrinate, Flumethrin, tau-Fluvalinate, Kadathrin, Pyrethrins (pyrethrum), Halfenprox, Phenothrin [(1R)-transisomer], Prallethrin, Resmethrin, Silafluofen, Tefluthrin, Tetramethrin, Tetramethrin [(1R)- isomers], Tralomethrin, Transfluthrin, Permethrin DDT, and Methoxychlor.*

**(4) Nicotinic acetylcholine receptor (nAChR) competitive modulators,** includes the following active ingredients

- **(4A)** *Acetamiprid, Clothianidin, Dinotefuran, Imidacloprid, Nitenpyram, Thiacloprid, Thiamethoxam*
- **(4B)** *Nicotine,*
- **(4C)** *Sulfoxaflor,*
- **(4D)** *Flupyradifurone, and*
- **(4E)** *Triflumezopyrim.*

**(5) Nicotinic acetylcholine receptor (nAChR) allosteric modulators** - **Site I**, includes the following active ingredients *Spinetoram and Spinosad.*

**(6) Glutamate-gated chloride channel (GLUCL) allosteric modulators**, includes the following active ingredients *Abamectin, Emamectin benzoate, Lepimectin, and Milbemectin.*

**(7) Juvenile hormone mimics**, includes the following active ingredients *Hydroprene, Kinoprene, Methoprene, Fenoxycarb, and Pyriproxyfen.*

**(8) Miscellaneous nonspecific (multi-site) inhibitors**, includes the following active ingredients *Methyl Bromide, Chloropicrin, Cryolite, Sulfuryl fluoride, Borax, Boric acid, Disodium octaborate, Sodium borate, Sodium metaborate, Tartar emetic, Diazomet, and Metam.*

**(9) Chordotonal organ TRPV channel modulators**, includes the following active ingredients *Afidopyropen,*

*Pymetrozine and Pyrifluquinazon.*

**(10) Mite growth inhibitors**, includes the following active ingredients *Clofentezine, Hexythiazox, Diflovidazin, and Etoxazole.*

**(11) Microbial disruptors of insect midgut membranes**, includes the following active ingredients *Bacillus thuringiensis (B.t.) var. israelensis, B.t. var. aizawai, B.t. var. kurstaki, B.t. var. tenebrionenis, and Bacillus sphaericus.*

**(12) Inhibitors of mitochondrial ATP synthase**, includes the following active ingredients *Tetradifon, Propargite, Azocyclotin, Cyhexatin, Fenbutatin oxide, and Diafenthiuron.*

**(13) Uncouplers of oxidative phosphorylation via disruption of the proton gradient**, includes the following active ingredients *Chlorfenapyr, DNOC, and Sulfluramid.*

**(14) Nicotinic acetylcholine receptor (nAChR) channel blockers**, includes the following active ingredients *Bensultap, Cartap hydrochloride, Thiocyclam, and Thiosultap-sodium.*

**(15) Inhibitors of chitin biosynthesis, type 0**, includes the following active ingredients *Bistrifluron, Chlorfluazuron, Diflubenzuron, Flucycloxuron, Flufenoxuron, Hexaflumuron, Lufenuron, Novaluron, Noviflumuron, Teflubenzuron, and Triflumuron.*

**(16) Inhibitors of chitin biosynthesis, type 1**, includes the following active ingredient *Buprofezin.*

**(17) Moulting disruptor, Dipteran**, includes the following active ingredient Cyromazine.

**(18) Ecdysone receptor agonists**, includes the following active ingredients *Chromafenozide, Halofenozide, Methoxyfenozide, and Tebufenozide.*

**(19) Octopamine receptor agonists**, includes the following active ingredient *Amitraz.*

**(20) Mitochondrial complex III electron transport inhibitors**, includes the following active ingredients *Hydramethylnon, Acequinocyl, Bifenazate and Fluacrypyrim.*

**(21) Mitochondrial complex I electron transport inhibitors**, includes the following active ingredients *Fenazaquin, Fenpyroximate, Pyrimidifen, Pyridaben, Tebufenpyrad, Tolfenpyrad, and Rotenone.*

**(22) Voltage-dependent sodium channel blockers**, includes the following active ingredients *Indoxacarb and Metaflumizone.*

**(23) Inhibitors of acetyl CoA carboxylase**, includes the following active ingredients *Spirodiclofen, Spiromesifen, Spiropidion, and Spirotetramat.*

**(24) Mitochondrial complex IV electron transport inhibitors**, includes the following active ingredients, *Aluminium phosphide, Calcium phosphide, Phosphine, Zinc phosphide, Calcium cyanide, Potassium cyanide, and Sodium cyanide.*

**(25) Mitochondrial complex II electron transport inhibitors**, includes the following active ingredients *Cyenopyrafen, Cyflumetofen, and Pyflubumide.*

**(28) Ryanodine receptor modulators**, includes the following active ingredients *Chlorantraniliprole, Cyantraniliprole, Cyclaniliprole, Flubendiamide, Tetraniliprole.*

**(29) Chordotonal Organ Modulators** - **undefined target site,** includes the following active ingredient *Flonicamid.*

**(30) GABA-Gated chloride channel allosteric modulators**, includes the following active ingredients *Broflanilide and Fluxametamide.*

**(31) Baculoviruses,** includes the following active ingredients *Cydia pomonella GV, Thaumatotibia leucotreta GV, Anticarsia gemmatalis MNPV, and Helicoverpa armigera NPV.*

**(32) Nicotinic acetylcholine receptor (nAChR) allosteric modulators** - **Site II**, includes the following active ingredients *GS-omega/kappa HXTX-Hv1a peptide.*

Groups 26 and 27 are unassigned in this version of the classification scheme. Additionally, there is a **Group UN** that contains active ingredients of unknown or uncertain mode of action. This group includes the following active ingredients, *Azadirachtin, Benzoximate, Bromopropylate, Chinomethionat, Dicofol, Lime Sulfur, Pyridalyl, and Sulfur.* There is a **Group UNB** that contains bacterial agents (non-Bt) of unknown or uncertain mode of action. This group includes the following active ingredients *Burkholderia spp, Wolbachie pipientis (Zap).* There is a **Group UNE** that contains botanical essence including synthetic, extracts and unrefined oils with unknown or uncertain mode of action. This group includes the following active ingredients *Chenopodium ambrosioides near ambrosioides extract, Fatty acid monoesters with glycerol or propanediol, Neem oil.* There is a **Group UNF** that contains fungal agents of unknown or uncertain mode of action. This group includes the following active ingredients *Beauveria bassiana strains, Metarhizium anisopliae strain F52, Paecilomyces fumosoroseus Apopka strain 97.* There is a **Group UNM** that contains non-specific mechanical disruptors. This group includes the following active ingredient *Diatomaceous earth.*

The term "**pest**" means an organism that is detrimental to humans, or human concerns (such as, crops, food, livestock, etc.), where said organism is from Phyla Arthropoda, Mollusca, or Nematoda. Particular examples are ants, aphids, bed bugs, beetles, bristletails, caterpillars, cockroaches, crickets, earwigs, fleas, flies, grasshoppers, grubs, hornets, jassids, leafhoppers, lice, locusts, maggots, mealybugs, mites, mosquitoes, moths, nematodes, plantbugs, planthoppers, psyllids, sawflies, scales, sea lice, silverfish, slugs, snails, spiders, springtails, stink bugs, symphylans,

termites, thrips, ticks, wasps, whiteflies, and wireworms.

Additional examples are pests in

**(1) Subphyla Chelicerata, Myriapoda, Hexapoda, and Crustacea.**

**(2) Classes of Arachnida, Symphyla, and Insecta.**

**(3) Order Anoplura.** A non-exhaustive list of particular genera includes, but is not limited to, *Haematopinus* spp., *Hoplopleura* spp., *Linognathus* spp., *Pediculus* spp., *Polyplax* spp., *Solenopotes* spp., and *Neohaematopinis* spp. A non-exhaustive list of particular species includes, but is not limited to, *Haematopinus asini, Haematopinus suis, Linognathus setosus, Linognathus ovillus, Pediculus humanus capitis, Pediculus humanus humanus,* and *Pthirus pubis.*

**(4) Order Coleoptera.** A non-exhaustive list of particular genera includes, but is not limited to, *Acanthoscelides* spp., *Agriotes* spp., *Anthonomus* spp., *Apion* spp., *Apogonia* spp., *Araecerus* spp., *Aulacophora* spp., *Bruchus* spp., *Cerosterna* spp., *Cerotoma* spp., *Ceutorhynchus* spp., *Chaetocnema* spp., *Colaspis* spp., *Ctenicera* spp., *Curculio* spp., *Cyclocephala* spp., *Diabrotica* spp., *Dinoderus* spp., *Gnathocerus* spp., *Hemicoelus* spp., *Heterobostruchus* spp., *Hypera* spp., *Ips* spp., *Lyctus* spp., *Megascelis* spp., *Meligethes* spp., *Mezium* spp., *Niptus* spp., *Otiorhynchus* spp., *Pantomorus* spp., *Phyllophaga* spp., *Phyllotreta* spp., *Ptinus* spp., *Rhizotrogus* spp., *Rhynchites* spp., *Rhynchophorus* spp., *Scolytus* spp., *Sphenophorus* spp., *Sitophilus* spp., *Tenebrio* spp., and *Tribolium* spp. A non-exhaustive list of particular species includes, but is not limited to, *Acanthoscelides obtectus, Agrilus planipennis, Ahasverus advena, Alphitobius diaperinus, Anoplophora glabripennis, Anthonomus grandis, Anthrenus verbasci, Anthrenus falvipes, Ataenius spretulus, Atomaria linearis, Attagenus unicolor, Bothynoderes punctiventris, Bruchus pisorum, Callosobruchus maculatus, Carpophilus hemipterus, Cassida vittata, Cathartus quadricollis, Cerotoma trifurcata, Ceutorhynchus assimilis, Ceutorhynchus napi, Conoderus scalaris, Conoderus stigmosus, Conotrachelus nenuphar, Cotinis nitida, Crioceris asparagi, Cryptolestes ferrugineus, Cryptolestes pusillus, Cryptolestes turcicus, Cylindrocopturus adspersus, Deporaus marginatus, Dermestes lardarius, Dermestes maculatus, Diabrotica virgifera virgifera, Epilachna varivestis, Euvrilletta peltata, Faustinus cubae, Hylobius pales, Hylotrupes bajulus, Hypera postica, Hypothenemus hampei, Lasioderma serricorne, Leptinotarsa decemlineata, Limonius canus, Liogenys fuscus, Liogenys suturalis, Lissorhoptrus oryzophilus, Lophocateres pusillus, Lyctus planicollis, Maecolaspis joliveti, Melanotus communis, Meligethes aeneus, Melolontha melolontha, Necrobia rufipes, Oberea brevis, Oberea linearis, Oryctes rhinoceros, Oryzaephilus mercator, Oryzaephilus surinamensis, Oulema melanopus, Oulema oryzae, Phyllophaga cuyabana, Polycaon stoutti, Popillia japonica, Prostephanus truncatus, Rhyzopertha dominica, Sitona lineatus, Sitophilus granarius, Sitophilus oryzae, Sitophilus zeamais, Stegobium paniceum, Tenebroides mauritanicus, Tribolium castaneum, Tribolium confusum, Trogoderma granarium, Trogoderma variabile, Xestobium rufovillosum,* and *Zabrus tenebrioides.*

**(5) Order Dermaptera.** A non-exhaustive list of particular species includes, but is not limited to, *Forficula auricularia.*

**(6) Order Blattaria.** A non-exhaustive list of particular species includes, but is not limited to, *Blattella germanica, Blattella asahinai, Blatta orientalis, Blatta lateralis, Parcoblatta pennsylvanica, Periplaneta americana, Periplaneta australasiae, Periplaneta brunnea, Periplaneta fuliginosa, Pycnoscelus surinamensis,* and *Supella longipalpa.*

**(7) Order Diptera.** A non-exhaustive list of particular genera includes, but is not limited to, *Aedes* spp., *Agromyza* spp., *Anastrepha* spp., *Anopheles* spp., *Bactrocera* spp., *Ceratitis* spp., *Chrysops* spp., *Cochliomyia* spp., *Contarinia* spp., *Culex* spp., *Culicoides* spp., *Dasineura* spp., *Delia* spp., *Drosophila* spp., *Fannia* spp., *Hylemya* spp., *Liriomyza* spp., *Musca* spp., *Phorbia* spp., *Pollenia* spp., *Psychoda* spp., *Simulium* spp., *Tabanus* spp., and *Tipula* spp. A non-exhaustive list of particular species includes, but is not limited to, *Agromyza frontella, Anastrepha suspensa, Anastrepha ludens, Anastrepha obliqua, Bactrocera cucurbitae, Bactrocera dorsalis, Bactrocera invadens, Bactrocera zonata, Ceratitis capitata, Dasineura brassicae, Delia platura, Fannia canicularis, Fannia scalaris, Gasterophilus intestinalis, Gracillia perseae, Haematobia irritans, Hypoderma lineatum, Liriomyza brassicae, Liriomyza sativa, Melophagus ovinus, Musca autumnalis, Musca domestica, Oestrus ovis, Oscinella frit, Pegomya betae, Piophila casei, Psila rosae, Rhagoletis cerasi, Rhagoletis pomonella, Rhagoletis mendax, Sitodiplosis mosellana,* and *Stomoxys calcitrans.*

**(8) Order Hemiptera.** A non-exhaustive list of particular genera includes, but is not limited to, *Adelges* spp., *Aulacaspis* spp., *Aphrophora* spp., *Aphis* spp., *Bemisia* spp., *Ceroplastes* spp., *Chionaspis* spp., *Chrysomphalus* spp., *Coccus* spp., *Empoasca* spp., *Euschistus* spp., *Lepidosaphes* spp., *Lagynotomus* spp., *Lygus* spp., *Macrosiphum* spp., *Nephotettix* spp., *Nezara* spp., *Nilaparvata* spp., *Philaenus* spp., *Phytocoris* spp., *Piezodorus* spp., *Planococcus* spp., *Pseudococcus* spp., *Rhopalosiphum* spp., *Saissetia* spp., *Therioaphis* spp., *Toumeyella* spp., *Toxoptera* spp., *Trialeurodes* spp., *Triatoma* spp., and *Unaspis* spp. A non-exhaustive list of particular species includes, but is not limited to, *Acrosternum hilare, Acyrthosiphon pisum, Aleyrodes proletella, Aleurodicus dispersus, Aleurothrixus floccosus, Amrasca biguttula biguttula, Aonidiella aurantii, Aphis fabae, Aphis gossypii, Aphis glycines, Aphis pomi, Aulacorthum solani, Bactericera cockerelli, Bagrada hilaris, Bemisia argentifolii, Bemisia tabaci, Blissus leucopterus, Boisea trivittata, Brachycorynella asparagi, Brevennia rehi, Brevicoryne brassicae, Cacopsylla pyri,*

*Cacopsylla pyricola, Calocoris norvegicus, Ceroplastes rubens, Cimex hemipterus, Cimex lectularius, Coccus pseudomagnoliarum, Dagbertus fasciatus, Dichelops furcatus, Diuraphis noxia, Diaphorina citri, Dysaphis plantaginea, Dysdercus suturellus, Edessa meditabunda, Empoasca vitis, Eriosoma lanigerum, Erythroneura elegantula, Eurygaster maura, Euschistus conspersus, Euschistus heros, Euschistus servus, Halyomorpha halys, Helopeltis antonii, Hyalopterus pruni, Helopeltis antonii, Helopeltis theivora, Icerya purchasi, Idioscopus nitidulus, Jacobiasca formosana, Laodelphax striatellus, Lecanium corni, Leptocorisa oratorius, Leptocorisa varicornis, Lygus hesperus, Maconellicoccus hirsutus, Macrosiphum euphorbiae, Macrosiphum granarium, Macrosiphum rosae, Macrosteles quadrilineatus, Mahanarva fimbriolata, Megacopta cribraria, Metopolophium dirhodum, Mictis longicornis, Myzus persicae, Nasonovia ribisnigri, Nephotettix cincticeps, Neurocolpus longirostris, Nezara viridula, Nilaparvata lugens, Paracoccus marginatus, Paratrioza cockerelli, Parlatoria pergandii, Parlatoria ziziphi, Peregrinus maidis, Phylloxera vitifoliae, Physokermes piceae, Phytocoris californicus, Phytocoris relativus, Piezodorus guildinii, Planococcus citri, Planococcus ficus, Poecilocapsus lineatus, Psallus vaccinicola, Pseudacysta perseae, Pseudococcus brevipes, Quadraspidiotus perniciosus, Rhopalosiphum maidis, Rhopalosiphum padi, Saissetia oleae, Scaptocoris castanea, Schizaphis graminum, Sitobion avenae, Sogatella furcifera, Trialeurodes vaporariorum, Trialeurodes abutiloneus, Unaspis yanonensis,* and *Zulia entrerriana.*

**(9) Order Hymenoptera.** A non-exhaustive list of particular genera includes, but is not limited to, *Acromyrmex* spp., *Atta* spp., *Camponotus* spp., *Diprion* spp., *Dolichovespula* spp., *Formica* spp., *Monomorium* spp., *Neodiprion* spp., *Paratrechina* spp., *Pheidole* spp., *Pogonomyrmex* spp., *Polistes* spp., *Solenopsis* spp., *Technomyrmex,* spp., *Tetramorium* spp., *Vespula* spp., *Vespa* spp., and *Xylocopa* spp. A non-exhaustive list of particular species includes, but is not limited to, *Athalia rosae, Atta texana, Caliroa cerasi, Cimbex americana, Iridomyrmex humilis, Linepithema humile, Mellifera Scutellata, Monomorium minimum, Monomorium pharaonis, Neodiprion sertifer, Solenopsis invicta, Solenopsis geminata, Solenopsis molesta, Solenopsis richtery, Solenopsis xyloni, Tapinoma sessile,* and *Wasmannia auropunctata.*

**(10) Order Isoptera.** A non-exhaustive list of particular genera includes, but is not limited to, *Coptotermes* spp., *Cornitermes* spp., *Cryptotermes* spp., *Heterotermes* spp., *Kalotermes* spp., *Incisitermes* spp., *Macrotermes* spp., *Marginitermes* spp., *Microcerotermes* spp., *Procornitermes* spp., *Reticulitermes* spp., *Schedorhinotermes* spp., and *Zootermopsis* spp. A non-exhaustive list of particular species includes, but is not limited to, *Coptotermes acinaciformis, Coptotermes curvignathus, Coptotermes frenchi, Coptotermes formosanus, Coptotermes gestroi, Cryptotermes brevis, Heterotermes aureus, Heterotermes tenuis, Incisitermes minor, Incisitermes snyderi, Microtermes obesi, Nasutitermes corniger, Odontotermes formosanus, Odontotermes obesus, Reticulitermes banyulensis, Reticulitermes grassei, Reticulitermes flavipes, Reticulitermes hageni, Reticulitermes hesperus, Reticulitermes santonensis, Reticulitermes speratus, Reticulitermes tibialis,* and *Reticulitermes virginicus.*

**(11) Order Lepidoptera.** A non-exhaustive list of particular genera includes, but is not limited to, *Adoxophyes* spp., *Agrotis* spp., *Argyrotaenia* spp., *Cacoecia* spp., *Caloptilia* spp., *Chilo* spp., *Chrysodeixis* spp., *Colias* spp., *Crambus* spp., *Diaphania* spp., *Diatraea* spp., *Earias* spp., *Ephestia* spp., *Epimecis* spp., *Feltia* spp., *Gortyna* spp., *Helicoverpa* spp., *Heliothis* spp., *Indarbela* spp., *Lithocolletis* spp., *Loxagrotis* spp., *Malacosoma* spp., *Nemapogon* spp., *Peridroma* spp., *Phyllonorycter* spp., *Pseudaletia* spp., *Plutella* spp., *Sesamia* spp., *Spodoptera* spp., *Synanthedon* spp., and *Yponomeuta* spp. A non-exhaustive list of particular species includes, but is not limited to, *Achaea janata, Adoxophyes orana, Agrotis ipsilon, Alabama argillacea, Amorbia cuneana, Amyelois transitella, Anacamptodes defectaria, Anarsia lineatella, Anomis sabulifera, Anticarsia gemmatalis, Archips argyrospila, Archips rosana, Argyrotaenia citrana, Autographa gamma, Bonagota cranaodes, Borbo cinnara, Bucculatrix thurberiella, Capua reticulana, Carposina niponensis, Chlumetia transversa, Choristoneura rosaceana, Cnaphalocrocis medinalis, Conopomorpha cramerella, Corcyra cephalonica, Cossus cossus, Cydia caryana, Cydia funebrana, Cydia molesta, Cydia nigricana, Cydia pomonella, Darna diducta, Diaphania nitidalis, Diatraea saccharalis, Diatraea grandiosella, Earias insulana, Earias vittella, Ecdytolopha aurantianum, Elasmopalpus lignosellus, Ephestia cautella, Ephestia elutella, Ephestia kuehniella, Epinotia aporema, Epiphyas postvittana, Erionota thrax, Estigmene acrea, Eupoecilia ambiguella, Euxoa auxiliaris, Galleria mellonella, Grapholita molesta, Hedylepta indicata, Helicoverpa armigera, Helicoverpa zea, Heliothis virescens, Hellula undalis, Keiferia lycopersicella, Leucinodes orbonalis, Leucoptera coffeella, Leucoptera malifoliella, Lobesia botrana, Loxagrotis albicosta, Lymantria dispar, Lyonetia clerkella, Mahasena corbetti, Mamestra brassicae, Manduca sexta, Maruca testulalis, Metisa plana, Mythimna unipuncta, Neoleucinodes elegantalis, Nymphula depunctalis, Operophtera brumata, Ostrinia nubilalis, Oxydia vesulia, Pandemis cerasana, Pandemis heparana, Papilio demodocus, Pectinophora gossypiella, Peridroma saucia, Perileucoptera coffeella, Phthorimaea operculella, Phyllocnistis citrella, Phyllonorycter blancardella, Pieris rapae, Plathypena scabra, Platynota idaeusalis, Plodia interpunctella, Plutella xylostella, Polychrosis viteana, Prays endocarpa, Prays oleae, Pseudaletia unipuncta, Pseudoplusia includens, Rachiplusia nu, Scirpophaga incertulas, Sesamia inferens, Sesamia nonagrioides, Setora nitens, Sitotroga cerealella, Sparganothis pilleriana, Spodoptera exigua, Spodoptera frugiperda, Spodoptera eridania, Theda basilides, Tinea pellionella, Tineola bisselliella, Trichoplusia ni, Tuta absoluta, Zeuzera coffeae,* and *Zeuzea pyrina.*

**(12) Order Mallophaga.** A non-exhaustive list of particular genera includes, but is not limited to, *Anaticola* spp., *Bovicola* spp., *Chelopistes* spp., *Goniodes* spp., *Menacanthus* spp., and *Trichodectes* spp. A non-exhaustive list of particular species includes, but is not limited to, *Bovicola bovis, Bovicola caprae, Bovicola ovis, Chelopistes meleagridis, Goniodes dissimilis, Goniodes gigas, Menacanthus stramineus, Menopon gallinae,* and *Trichodectes canis.*

**(13) Order Orthoptera.** A non-exhaustive list of particular genera includes, but is not limited to, *Melanoplus* spp. and *Pterophylla* spp. A non-exhaustive list of particular species includes, but is not limited to, *Acheta domesticus, Anabrus simplex, Gryllotalpa africana, Gryllotalpa australis, Gryllotalpa brachyptera, Gryllotalpa hexadactyla, Locusta migratoria, Microcentrum retinerve, Schistocerca gregaria,* and *Scudderia furcata.*

**(14) Order Psocoptera.** A non-exhaustive list of particular species includes, but is not limited to, *Liposcelis decolor, Liposcelis entomophila, Lachesilla quercus,* and *Trogium pulsatorium.*

**(15) Order Siphonaptera.** A non-exhaustive list of particular species includes, but is not limited to, *Ceratophyllus gallinae, Ceratophyllus niger, Ctenocephalides canis, Ctenocephalides felis,* and *Pulex irritans.*

**(16) Order Thysanoptera.** A non-exhaustive list of particular genera includes, but is not limited to, *Caliothrips* spp., *Frankliniella* spp., *Scirtothrips* spp., and *Thrips* spp. A non-exhaustive list of particular species includes, but is not limited to, *Caliothrips phaseoli, Frankliniella bispinosa, Frankliniella fusca, Frankliniella occidentalis, Frankliniella schultzei, Frankliniella tritici, Frankliniella williamsi, Heliothrips haemorrhoidalis, Rhipiphorothrips cruentatus, Scirtothrips citri, Scirtothrips dorsalis, Taeniothrips rhopalantennalis, Thrips hawaiiensis, Thrips nigropilosus, Thrips orientalis, Thrips palmi,* and *Thrips tabaci.*

**(17) Order Thysanura.** A non-exhaustive list of particular genera includes, but is not limited to, *Lepisma* spp. and *Thermobia* spp.

**(18) Order Acarina.** A non-exhaustive list of particular genera includes, but is not limited to, *Acarus* spp., *Aculops* spp., *Argus* spp., *Boophilus* spp., *Demodex* spp., *Dermacentor* spp., *Epitrimerus* spp., *Eriophyes* spp., *Ixodes* spp., *Oligonychus* spp., *Panonychus* spp., *Rhizoglyphus* spp., and *Tetranychus* spp. A non-exhaustive list of particular species includes, but is not limited to, *Acarapis woodi, Acarus siro, Aceria mangiferae, Aculops lycopersici, Aculus pelekassi, Aculus schlechtendali, Amblyomma americanum, Brevipalpus obovatus, Brevipalpus phoenicis, Dermacentor variabilis, Dermatophagoides pteronyssinus, Eotetranychus carpini, Liponyssoides sanguineus, Notoedres cati, Oligonychus coffeae, Oligonychus ilicis, Ornithonyssus bacoti, Panonychus citri, Panonychus ulmi, Phyllocoptruta oleivora, Polyphagotarsonemus latus, Rhipicephalus sanguineus, Sarcoptes scabiei, Tegolophus perseaflorae, Tetranychus urticae, Tyrophagus longior,* and *Varroa destructor.*

**(19) Order Araneae.** A non-exhaustive list of particular genera includes, but is not limited to, *Loxosceles* spp., *Latrodectus* spp., and *Atrax* spp. A non-exhaustive list of particular species includes, but is not limited to, *Loxosceles reclusa, Latrodectus mactans,* and *Atrax robustus.*

**(20) Class Symphyla.** A non-exhaustive list of particular species includes, but is not limited to, *Scutigerella immaculata.*

**(21) Subclass Collembola.** A non-exhaustive list of particular species includes, but is not limited to, *Bourletiella hortensis, Onychiurus armatus, Onychiurus fimetarius,* and *Sminthurus viridis.*

**(22) Phylum Nematoda.** A non-exhaustive list of particular genera includes, but is not limited to, *Aphelenchoides* spp., *Belonolaimus* spp., *Criconemella* spp., *Ditylenchus* spp., *Globodera* spp., *Heterodera* spp., *Hirschmanniella* spp., *Hoplolaimus* spp., *Meloidogyne* spp., *Pratylenchus* spp., and *Radopholus* spp. A non-exhaustive list of particular species includes, but is not limited to, *Dirofilaria immitis, Globodera pallida, Heterodera glycines, Heterodera zeae, Meloidogyne incognita, Meloidogyne javanica, Onchocerca volvulus, Pratylenchus penetrans, Radopholus similis,* and *Rotylenchulus reniformis.*

**(23) Phylum Mollusca.** A non-exhaustive list of particular species includes, but is not limited to, *Arion vulgaris, Cornu aspersum, Deroceras reticulatum, Limax flavus, Milax gagates,* and *Pomacea canaliculata.*

A particularly preferred pest group to control is sap-feeding pests. **Sap-feeding pests**, in general, have piercing and/or sucking mouthparts and may feed on the sap and inner plant tissues of plants or on the blood of hosts. Examples of sap-feeding pests of particular concern to agriculture include, but are not limited to, aphids, leafhoppers, lice, scales, thrips, psyllids, planthoppers, mealybugs, mosquitoes, stinkbugs, and whiteflies. Specific examples of Orders that have sap-feeding pests of concern in agriculture include but are not limited to, Diptera, Hemiptera, Phthiraptera, and Thysanoptera. Specific examples of Hemiptera that are of concern in agriculture include, but are not limited to, *Aulacaspis* spp., *Aphrophora* spp., *Aphis* spp., *Bemisia* spp., *Coccus* spp., *Euschistus* spp., *Lygus* spp., *Macrosiphum* spp., *Nezara* spp., *Rhopalosiphum* spp., *Sogatella* spp., *Nilaparvata* spp., *Laodelphax spp.,* and *Nephotettix spp.*

Another particularly preferred pest group to control is chewing pests. **Chewing pests**, in general, have mouthparts that allow them to chew on the plant tissue including roots, stems, leaves, buds, and reproductive tissues (including, but not limited to flowers, fruit, and seeds). Examples of chewing pests of particular concern to agriculture include, but are not limited to, caterpillars, beetles, grasshoppers, and locusts. Specific examples of Orders that have chewing pests of concern in agriculture include but are not limited to, Coleoptera, Lepidoptera, and Orthoptera. Specific examples of

Coleoptera that are of concern in agriculture include, but are not limited to, *Anthonomus* spp., *Cerotoma* spp., *Chaetocnema* spp., *Colaspis* spp., *Cyclocephala* spp., *Diabrotica* spp., *Hypera* spp., *Phyllophaga* spp., *Phyllotreta* spp., *Sphenophorus* spp., *Sitophilus* spp.

The phrase "**pesticidally effective amount**" means the amount of a pesticide needed to achieve an observable effect on a pest, for example, the effects of necrosis, death, retardation, prevention, removal, destruction, or otherwise diminishing the occurrence and/or activity of a pest in a locus. This effect may come about when pest populations are repulsed from a locus, pests are incapacitated in, or around, a locus, and/or pests are exterminated in, or around, a locus. Of course, a combination of these effects can occur. Generally, pest populations, activity, or both are desirably reduced more than fifty percent, preferably more than 90 percent, and most preferably more than 99 percent. In general, a pesticidally effective amount, for agricultural purposes, is from about 0.0001 grams per hectare to about 5000 grams per hectare, preferably from about 0.0001 grams per hectare to about 500 grams per hectare, and it is even more preferably from about 0.0001 grams per hectare to about 50 grams per hectare. Alternatively, about 150 grams per hectare to about 250 grams per hectare may be used against pests.

## Detailed description of this disclosure

This document discloses the molecule *N*-(4-chloro-2-(pyridin-3-yl)thiazol-5-yl)-*N*-ethyl-3-(methylsulfonyl)propanamide:

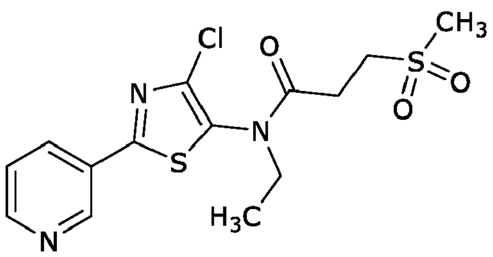

**Formula One also known as F1**

Formula One may exist in different tautomeric forms. This disclosure covers all such tautomers.

The structures disclosed in the present disclosure may be drawn in only one geometric form for clarity, but are intended to represent all geometric forms of the molecule.

## Synthesis of Formula One (F1)

Starting materials, reagents, and solvents that were obtained from commercial sources were used without further purification. Anhydrous solvents were purchased as Sure/Seal™ from Aldrich and were used as received. Melting points were obtained on a Thomas Hoover Unimelt capillary melting point apparatus or an OptiMelt Automated Melting Point System from Stanford Research Systems and are uncorrected. Examples using "room temperature" were conducted in climate controlled laboratories with temperatures ranging from about 20 °C to about 24 °C. Molecules are given their known names, named according to naming programs within Symyx Draw, ChemDraw, or ACD Name Pro. If such programs are unable to name a molecule, such molecule is named using conventional naming rules. $^{1}H$ NMR spectral data are in ppm (δ) and were recorded at 300, 400, 500, or 600 MHz; $^{13}C$ NMR spectral data are in ppm (δ) and were recorded at 75, 100, or 150 MHz; and $^{19}F$ NMR spectral data are in ppm (δ) and were recorded at 376 MHz, unless otherwise stated.

A person skilled in the art will recognize that it may be possible to achieve the synthesis of desired molecules by performing some of the steps of the synthetic routes in a different order to that described. A person skilled in the art will also recognize that it may be possible to perform standard functional group interconversions or substitution reactions on desired molecules to introduce or modify substituents.

## Synthesis of Formula One (F1)

Formula One **(F1)** may be synthesized by methods disclosed in WO 2010/129497 A1 or via the route described below.

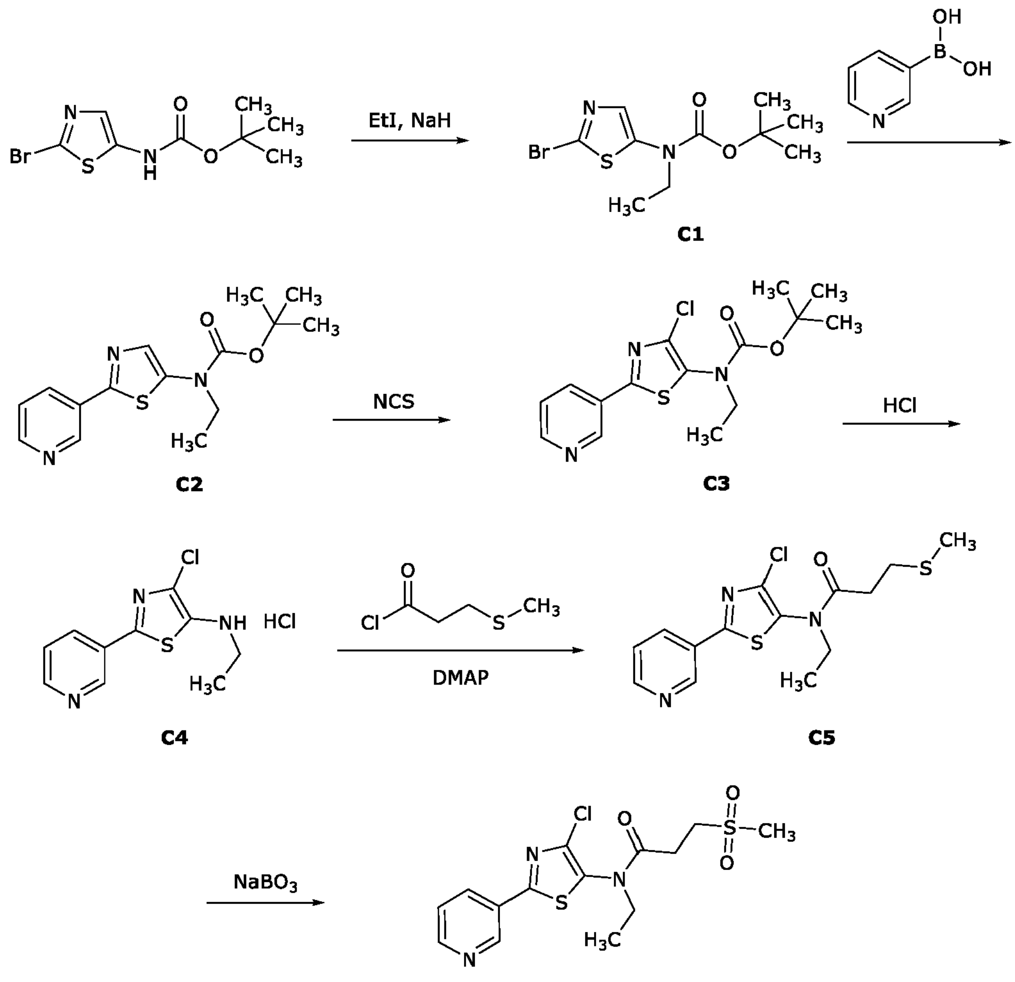


C1

C2

C3

C4

C5

**Formula One**

**Example 1: Preparation of *N*-(4-chloro-2-(pyridin-3-yl)thiazol-5-yl)-*N*-ethyl-3-(methylsulfonyl)propanamide (Formula One)**

Step 1 - Preparation of *tert*-butyl (2-bromothiazol-5-yl)(ethyl)carbamate **(C1):** To a solution of commercially available *tert*-butyl (2-bromothiazol-5-yl)carbamate (2 grams (g), 7.16 millimoles (mmol)) in *N,N*-dimethylformamide (DMF; 14.3 milliliters (mL)) at 0 °C was added portionwise sodium hydride (60% dispersion in mineral oil; 0.43 g, 10.8 mmol), and the suspension was stirred for 1 hour (h). Iodoethane (0.63 mL, 7.88 mmol) was added in one portion. The reaction mixture was allowed to stir overnight as it gradually warmed to ambient temperature. Water and ethyl acetate were added and the resulting biphasic mixture was separated. The aqueous layer was extracted one time with ethyl acetate. The combined organic extracts were washed twice with brine, dried over sodium sulfate, filtered and concentrated to dryness under reduced pressure. Purification by silica gel chromatography (0-100% ethyl acetate-hexanes) provided the title compound as a clear oil (2.0 g, 91%): $^1H$ NMR (500 MHz, $CDCl_3$) $\delta$ 7.08 (s, 1H), 3.78 (d, $J$ = 7.1 Hz, 2H), 1.54 (s, 10H), 1.26 (t, $J$ = 7.1 Hz, 3H); $^{13}C$ NMR (126 MHz, $CDCl_3$) $\delta$ 130.36, 83.17, 28.20, 12.49; ESIMS *m/z* 309 ($[M+2]^+$).

Step 2 - Preparation of *tert*-butyl ethyl(2-(pyridin-3-yl)thiazol-5-yl)carbamate **(C2):** To a solution of *tert*-butyl 2-bromothiazol-5-yl(ethyl)carbamate (**C1**; 7.0 g, 22.8 mmol) in toluene (88 mL) were added sequentially pyridin-3-ylboronic acid (3.36 g, 27.3 mmol), ethanol (44 mL) and a 2.0 molar (M) solution of potassium carbonate (22.8 mL, 45.6 mmol). Tetrakis(triphenylphosphine)palladium(0) (1.32 g, 1.14 mmol) was added, and the reaction mixture was heated to 110 °C and stirred for 16 h. The mixture was cooled and diluted with ethyl acetate. The organic layer was washed with saturated aqueous sodium bicarbonate, dried over sodium sulfate, filtered, and concentrated. Purification by silica gel chromatography (0-100% ethyl acetate-hexanes) afforded the title compound as an orange solid (6.96 g, 80%): $^1H$ NMR (400 MHz, $CDCl_3$) $\delta$ 9.12 (d, $J$ = 2.2 Hz, 1H), 8.60 (dd, $J$ = 4.8, 1.6 Hz, 1H), 8.17 (dt, $J$ = 7.9, 1.9 Hz, 1H), 7.44 (s, 1H), 7.35 (dd, $J$ = 8.0, 4.8 Hz, 1H), 3.87 (q, $J$ = 7.1 Hz, 2H), 1.57 (s, 9H), 1.32 (t, $J$ = 7.1 Hz, 3H); $^{13}C$ NMR (126 MHz, $CDCl_3$) $\delta$ 152.48, 150.01, 147.02, 140.87, 132.69, 130.11, 123.63, 82.85, 44.18, 28.22, 12.71; ESIMS *m/z* 306 ($[M+1]^+$).

Step 3 - Preparation of *tert*-butyl (4-chloro-2-(pyridin-3-yl)thiazol-5-yl)(ethyl)carbamate **(C3):** To a solution of

*tert*-butyl ethyl(2-(pyridin-3-yl)thiazol-5-yl)carbamate (**C2**; 3.0 g, 9.8 mmol) in acetonitrile (58 mL) was added in one portion *N*-chlorosuccinimide (2.62 g, 19.6 mmol), and the reaction mixture was stirred at 45 °C for 16 h. The reaction mixture was concentrated. Purification of the residue by silica gel chromatography (0-100% ethyl acetate-hexanes) afforded the title compound as a red oil (2.24 g, 67%): $^1$H NMR (300 MHz, $CDCl_3$) δ 9.09 (d, *J* = 1.9 Hz, 1H), 8.68 (dd, *J* = 4.8, 1.6 Hz, 1H), 8.19 (dd, *J* = 5.9, 4.2 Hz, 1H), 7.39 (dd, *J* = 7.6, 5.2 Hz, 1H), 3.68 (q, *J* = 7.2 Hz, 2H), 1.45 (s, 9H), 1.22 (t, *J* = 7.0 Hz, 3H); $^{13}$C NMR (126 MHz, $CDCl_3$) δ 160.30, 153.30, 152.08, 146.51, 136.29, 134.06, 133.09, 129.59, 123.77, 82.34, 45.26, 28.13, 13.33; ESIMS *m/z* 340 ($[M+1]^+$).

Step 4 - Preparation of 4-chloro-*N*-ethyl-2-(pyridin-3-yl)thiazol-5-amine hydrochloride **(C4):** To a solution of *tert*-butyl (4-chloro-2-(pyridin-3-yl)thiazol-5-yl)(ethyl)carbamate (**C3**; 2.03 g, 5.97 mmol) in 1,4-dioxane (3 mL) was added hydrogen chloride (4 M solution in dioxane; 7.47 mL, 29.9 mmol), and the mixture was stirred at ambient temperature for 24 h. Diethyl ether (~ 15 mL) was added to the vial; the mixture was stirred for 1 minute; and the clear solution was removed with a pipette. This sequence was repeated three times. The slurry was filtered, and the red solid was washed with ether three times. The resulting solid was dried under high vacuum. The title compound was isolated as a brown solid (1.33 g, 4.82 mmol): $^1$H NMR (400 MHz, DMSO-$d_6$) δ 9.10 (d, *J* = 2.1 Hz, 1H), 8.74 (dd, *J* = 5.5, 1.1 Hz, 1H), 8.67 - 8.59 (m, 1H), 7.95 (dd, *J* = 8.2, 5.5 Hz, 1H), 6.54 (s, 5H), 3.20 (q, *J* = 7.1 Hz, 2H), 1.24 (t, *J* = 7.1 Hz, 3H); ESIMS *m/z* 241 ($[M+2]^+$).

Step 4 - Preparation of *N*-(4-chloro-2-(pyridin-3-yl)thiazol-5-yl)-*N*-ethyl-3-(methylthio)propanamide **(C5):** *N,N*-Dimethylaminopyridine (2.42 g, 19.8 mmol) and 3-(methylthio)propanoyl chloride (2.99 g, 21.6 mmol) were added sequentially to a solution of 4-chloro-*N*-ethyl-2-(pyridin-3-yl)thiazol-5-amine hydrochloride (**C4**; 4.97 g, 18 mmol) in dichloroethane (2 mL). The reaction mixture was stirred at ambient temperature for 4 h. To this mixture was added *N,N*-dimethylaminopyridine (2.42, 19.8 mmol) and a white precipitate formed immediately. The reaction mixture was concentrated. Purification of the concentrated mixture by silica gel chromatography (0-100% ethyl acetate-hexanes) afforded the title compound as a yellow oil (5.59 g, 91%): IR (KBr) 1680 cm$^{-1}$; $^1$H NMR (300 MHz, $CDCl_3$) δ 9.11 (s, 1H), 8.73 (d, *J* = 3.4 Hz, 1H), 8.28 - 8.14 (m, 1H), 7.43 (dd, *J* = 8.2, 5.0 Hz, 1H), 3.77 (br s, 2H), 2.81 (t, *J* = 7.2 Hz, 2H), 2.56 (t, *J* = 7.2 Hz, 2H), 2.08 (s, 3H), 1.21 (t, *J* = 7.2 Hz, 3H); ESIMS *m/z* 342 ($[M+1]^+$).

Step 5 - Preparation of *N*-(4-chloro-2-(pyridin-3-yl)thiazol-5-yl)-*N*-ethyl-3-(methylsulfonyl)propanamide **(Formula One):** To a solution of *N*-(4-chloro-2-(pyridin-3-yl)thiazol-5-yl)-*N*-ethyl-3-(methylthio)propanamide (**C5**; 147 mg, 0.43 mmol) in glacial acetic acid (3.6 mL) was added sodium perborate tetrahydrate (139 mg, 0.90 mmol), and the mixture was heated at 65 °C for 16 h. The reaction mixture was carefully poured into a separatory funnel containing saturated aqueous sodium bicarbonate resulting in gas evolution. When the gas evolution had ceased, dichloromethane was added and the layers were separated. The aqueous layer was extracted twice with dichloromethane, and the organic layers were combined, dried over sodium sulfate, filtered, and concentrated under reduced pressure. Purification of the concentrated mixture by silica gel column chromatography (0-10% methanol-dichloromethane) gave the title compound as a yellow oil (110 mg, 69%): $^1$H NMR (300 MHz, $CDCl_3$) δ 9.12 (dd, *J* = 2.4, 0.9 Hz, 1H), 8.74 (dd, *J* = 4.8, 1.6 Hz, 1H), 8.22 (ddd, *J* = 8.0, 2.4, 1.6 Hz, 1H), 7.45 (ddd, *J* = 8.0, 4.8, 0.9 Hz, 1H), 3.79 (q, *J* = 7.2 Hz, 2H), 3.43 (s, 2H), 2.96 (s, 3H), 2.80 (t, *J* = 7.1 Hz, 2H), 1.23 (t, *J* = 7.2 Hz, 3H); $^{13}$C NMR (126 MHz, $CDCl_3$) δ 160.30, 153.30, 152.08, 146.51, 136.29, 134.06, 133.09, 129.59, 123.77, 82.34, 53.44, 45.26, 28.13, 13.33; ESIMS *m/z* 374 ($[M+1]^+$).

**Biological Assays**

The following bioassays were conducted against Green Peach Aphid *(Myzus persicae),* Sweetpotato Whitefly *(Bemisia tabaci),* Western Flower Thrips (*Frankliniella occidentalis*), Western Tarnished Plant Bug (*Lygus hesperus*), Neotropical Brown Stink Bug (*Euschistus heros*), Beet Armyworm (*Spodoptera exigua*), and Diamondback Moth (*Plutella xylostella*) which are good indicator species for a broad range of agricultural pests. The results with these indicator species show the broad usefulness of various pesticides (also referred to as active ingredients) mixed with Formula One in controlling pest insects.

**Bioassay 1: Green Peach Aphid (*Myzus persicae,* MYZUPE) ("GPA").**

GPA is the most significant aphid pest of peach trees, causing decreased growth, shriveling of the leaves, and the death of various tissues. It is also hazardous because it acts as a vector for the transport of plant viruses, such as potato virus Y and potato leafroll virus to members of the nightshade/potato family *Solanaceae,* and various mosaic viruses to many other food crops. GPA attacks such plants as broccoli, burdock, cabbage, carrot, cauliflower, daikon, eggplant, green beans, lettuce, macadamia, papaya, peppers, sweet potatoes, tomatoes, watercress, and zucchini, among other crops. GPA also attacks many ornamental crops such as carnation, chrysanthemum, flowering white cabbage, poinsettia, and roses. GPA has developed resistance to many pesticides. Currently, it is a pest that has the third largest number of reported cases of insect resistance (Sparks et al.). Consequently, because of the above factors control of this pest is important. Furthermore, molecules that control GPA, which is a sap-feeding pest, are useful in

controlling other pests that feed on the sap from plants.

Stock solutions of Formula One and one or more active ingredients were prepared at a concentration of 0.1 mg/mL using a 1:1 mixture of acetone:methanol as a diluent. The stock solutions were prepared with Formula One as well as for each of the active ingredients individually. Test solutions were prepared from the stock solutions. Test solutions were prepared containing Formula One, the individual active ingredients, and mixtures of Formula One with each of the active ingredients. The test solutions for Formula One and the individual active ingredients were prepared by adding 750 microliters (μL) of stock solution to a 25 mL glass vial, then adding 750 μL of 1:1 acetone: methanol solvent, followed by the addition of 13.5 mL water with 0.025% Tween® 20 to create a 0.0005% (weight/volume (w/v)) solution. The test solutions containing mixtures of Formula One and the individual active ingredients were prepared by adding 750 μL of the active ingredient stock solution to a 25 mL glass vial, followed by 750 μL of the Formula One stock solution, then by the addition of 13.5 mL water with 0.025% Tween® 20 to create a test solution containing 0.0005% (w/v) Formula One and 0.0005% (w/v) of the active ingredient. Each test solution was serially diluted to create desired doses of test solutions (0.0005% (w/v), 0.000125% (w/v), 0.00003125% (w/v), 0.0000078% (w/v), 0.00000195% (w/v), and 0.0000005% (w/v)).

The test solutions were tested against GPA using the following procedure: Cabbage seedlings, grown in 3 inch pots with 2-3 small (3-5 centimeter (cm)) true leaves, were used as test substrate. The seedlings were infested with 20-50 GPA (wingless adult and nymph stages) one day prior to chemical application. Four pots with individual seedlings were used for each treatment. A hand-held aspirator-type sprayer was used for spraying a solution to both sides of cabbage leaves until runoff. Reference plants (solvent check) were sprayed with the diluent only (0.025% Tween® 20 and 10% acetone:methanol (1:1) in water). Treated plants were held in a holding room for three days at approximately 25 °C and ambient relative humidity (RH about 20% to about 45%) prior to grading. Evaluation was conducted by counting the number of live aphids per plant under a microscope three days after treatment. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live aphids on solvent check plants and Y = No. of live aphids on treated plants. In Table B1 the "Expected % Control" was calculated using the method described in Colby S. R., Weeds, 1967, 15, 20-22. The results are indicated in Table B1 in the Table Section.

**Bioassay 2: Sweet potato Whitefly (*Bemisia tabaci,* BEMITA) ("SPW").**

Sweet potato Whitefly is a major destructive pest to cotton. It is also a serious pest to many vegetable crops, such as melons, cole crops, tomatoes, and head lettuce, as well as ornamental plants. SPW causes damage both through direct feeding damage and virus transmission. SPW is a sap-feeding insect, and its feeding removes nutrients from the plant. This may result in stunted growth, defoliation, reduced yields, and boll shed in cotton. SPW produces large quantities of honeydew, which supports the growth of sooty molds on the plant leaves. SPW is also a vector for viruses, such as cotton leaf crumple virus and tomato yellow leaf curl virus.

Stock solutions of Formula One and one or more active ingredients were prepared at a concentration of 0.2 mg/mL using acetone as a diluent. Stock solutions were prepared with Formula One as well as for each of the active ingredients individually. Test solutions were prepared from the stock solutions. Test solutions were prepared containing Formula One, the individual active ingredients, and mixtures of Formula One with each of the active ingredients. The test solutions for Formula One and the individual active ingredients were prepared by adding 500 μL of stock solution to a 25 mL glass vial, then adding 500 μL of acetone, followed by the addition of 9 mL water with 0.025% Tween® 20 to create a 0.001% (w/v) solution. The test solutions containing mixtures of Formula One and the individual active ingredients were prepared by adding 500 μL of the active ingredient stock solution to a 25 mL glass vial, followed by 500 μL of the Formula One stock solution, then by the addition of 9 mL water with 0.025% Tween® 20 to create a test solution containing 0.001% (w/v) Formula One and 0.001% (w/v) of the active ingredient. Each test solution was serially diluted to create desired doses of test solutions (0.001% (w/v), 0.0001% (w/v), 0.00001% (w/v), 0.000001% (w/v), 0.0000001% (w/v), and 0.00000001% (w/v)).

The test solutions were tested against SPW using the following procedure: Cotton seedlings grown in 3-inch pots, pruned so that only one true leaf remained, were used as test substrate. Adult *B. tabaci* were allowed to colonize the cotton plants and lay eggs for 24 hours after which all adults were removed from the plants using compressed air. Plants were monitored for egg development and, when crawler emergence was underway (>25% emergence based on visual examination using a microscope), the plants were sprayed using the test solutions and methods described above for green peach aphids (GPA). Treated plants were held in a holding room at approximately 25 °C and ambient relative humidity (RH) prior to grading. Evaluation was conducted by counting the number of developed 2-3 instar nymphs per

plant under a microscope 7-9 days after treatment. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live nymphs on solvent check plants and Y = No. of live nymphs on treated plants. In Table B2 the "Expected % Control" was calculated using the method described in Colby S. R., Weeds, 1967, 15, 20-22. The results are indicated in Table B2 in the Table Section.

**Bioassay 3: Western Flower Thrips (*Frankliniella occidentalis,* FRANOC) ("WFT").**

Western Flower Thrips is a major destructive pest on a wide variety of commercially-relevant plant species (over 500 species of host plants have been documented) including many fruits, vegetables, and ornamental plants. WFT is a sap-feeding insect and feeds on a variety of plant parts, destroying plant cells as they feed. WFT is also known to act as a vector for plant diseases and is one of the major vectors of tomato spotted wilt virus.

Stock solutions of Formula One and various active ingredients were prepared initially at a concentration of 8 mg/mL for Formula One and 1 mg/mL for the active ingredients, respectively, using acetone as a diluent. Stock solutions were prepared with Formula One as well as for each of the active ingredients individually. Test solutions were prepared from the stock solutions. Test solutions were prepared containing Formula One, the individual active ingredients, and mixtures of Formula One with each of the active ingredients. The test solution for Formula One was prepared by adding 500 μL of the stock solution to a 25 mL glass vial, then adding 500 μL of acetone, followed by the addition of 9 mL water with 0.025% Tween® 20 to create a 0.04% (w/v) solution. The test solutions of the individual active ingredients were prepared by adding 500 μL of stock solution to a 25 mL glass vial, then adding 500 μL of acetone, followed by the addition of 9 mL water with 0.025% Tween® 20 to create a 0.005% (w/v) solution. The test solutions containing mixtures of Formula One and the individual active ingredients were prepared by adding 500 μL of the active ingredient stock solution to a 25 mL glass vial, followed by 500 μL of the Formula One stock solution, then by the addition of 9 mL water with 0.025% Tween® 20 to create a test solution containing 0.04% (w/v) Formula One and 0.005% (w/v) of the active ingredient. Each test solution was serially diluted to create desired doses of test solutions (0.005% (w/v), 0.00125% (w/v), 0.0003125% (w/v), 0.000078% (w/v), and 0.0000195% (w/v)). In test solutions containing mixtures of Formula One and the active ingredients, the active ingredients were diluted as described above, but the Concentration of Formula One was held constant (0.04% (w/v)).

The test solutions were tested against WFT using the following procedure: Leaf discs (2.7 cm in diameter) were cut from the true leaves of cotton plants. Leaf discs were dipped into the test solutions and shaken to ensure complete coverage of the leaf disc and then placed in Millipore® PetriSlides containing a filter paper disc. Treated leaf discs were air dried for approximately 1 hour. Each leaf disc was infested with 5 WFT (9-10 day old nymphs) by placement on each leaf disc, and the PetriSlides were capped to prevent escape. Each treatment was replicated three times and the test treatments were held at approximately 26 °C and ambient relative humidity (RH) prior to grading. Reference discs (solvent check) were treated with the diluent only. Evaluation was conducted by counting the number of live WFT under magnification 3 days after treatment. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live nymphs on solvent check leaf discs and Y = No. of live nymphs on treated leaf discs. In Table B3 the "Expected % Control" was calculated using the method described in Colby S. R., Weeds, 1967, 15, 20-22. The results are indicated in Table B3 in the Table Section.

**Bioassay 4: Western Tarnished Plant Bug (*Lygus hesperus,* LYGUHE) ("WTPB").**

The Western Tarnished Plant Bug is a serious pest of cotton, fruits and vegetables. WTPB is a sap-feeding insect that damages plant cells and parts during feeding and oviposition.

Stock solutions of Formula One and one or more active ingredients were prepared at a concentration of 8 mg/mL for Formula One and 1 mg/mL for the active ingredients, respectively, using acetone as a diluent. Stock solutions were prepared with Formula One as well as for each of the active ingredients individually. Test solutions were prepared from the stock solutions. Test solutions were prepared containing Formula One, the individual active ingredients, and mixtures of Formula One with each of the active ingredients. The test solution for Formula One was prepared by adding

500 μL of the stock solution to a 25 mL glass vial, then adding 500 μL of acetone, followed by the addition of 9 mL water with 0.025% Tween® 20 to create a 0.04% (w/v) solution. The test solutions of the individual active ingredients were prepared by adding 500 μL of stock solution to a 25 mL glass vial, then adding 500 μL of acetone, followed by the addition of 9 mL water with 0.025% Tween® 20 to create a 0.005% (w/v) solution. The test solutions containing mixtures of Formula One and the individual active ingredients were prepared by adding 500 μL of the active ingredient stock solution to a 25 mL glass vial, followed by 500 μL of the Formula One stock solution, then by the addition of 9 mL water with 0.025% Tween® 20 to create a test solution containing 0.04% (w/v) Formula One and 0.005% (w/v) of the active ingredient. Each test solution was serially diluted to create desired doses of test solutions (0.005% (w/v), 0.00125% (w/v), 0.0003125% (w/v), 0.000078% (w/v), and 0.0000195% (w/v)). In test solutions containing mixtures of Formula One and the active ingredients, the active ingredients were diluted as described above, but the Concentration of Formula One was held constant (0.04% (w/v)).

The test solutions were tested against WTPB using the following procedure: Fresh green beans were cut into segments approximately 1.5 inches long. Four bean segments were added to each 25 mL vial containing the test solutions and soaked for approximately 15 minutes. After soaking, a single bean fragment was removed and placed into a single well of a 32-well rearing tray (Frontier Agricultural Sciences™), on top of a round filter paper disc. A reference treatment (solvent check) was treated with the diluent only. Each treatment was replicated four times and the test treatments were held at approximately 26 °C and ambient relative humidity (RH) prior to grading. Bean segments were allowed to air dry for ~30 minutes. Three WTPB nymphs were added to and contained in each well with a clear perforated adhesive lid. The total number of living WTPB nymphs was recorded 3 days after application. Scoring was based off the total number of living nymphs out of all four replicates. Percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live nymphs on solvent check and Y = No. of live nymphs on treated bean segments. In Table B4 the "Expected % Control" was calculated using the method described in Colby S. R., Weeds, 1967, 15, 20-22. The results are indicated in Table B4 in the Table Section.

**Bioassay 5: Neotropical Brown Stink Bug (*Euschistus heros,* EUSCHE) ("BSB").**

The Neotropical Brown Stink Bug is a major pest of soybean, cotton, sunflower, and other economically-important crops. BSB is a sap-feeding insect that damages plant cells and seeds during feeding. Feeding on plant seeds can reduce the viability of seeds and reduce yield.

Stock solutions of Formula One and one or more active ingredients were prepared at a concentration of 8 mg/mL for Formula One and 1 mg/mL for the active ingredients, respectively, using acetone as a diluent. Stock solutions were prepared with Formula One as well as for each of the active ingredients individually. Test solutions were prepared from the stock solutions. Test solutions were prepared containing Formula One, the individual active ingredients, and mixtures of Formula One with each of the active ingredients. The test solution for Formula One was prepared by adding 500 μL of the stock solution to a 25 mL glass vial, then adding 500 μL of acetone, followed by the addition of 9 mL water with 0.025% Tween® 20 to create a 0.04% (w/v) solution. The individual active ingredients were prepared by adding 500 μL of stock solution to a 25 mL glass vial, then adding 500 μL of acetone, followed by the addition of 9 mL water with 0.025% Tween® 20 to create a 0.005% (w/v) solution. The test solutions containing mixtures of Formula One and the individual active ingredients were prepared by adding 500 μL of the active ingredient stock solution to a 25 mL glass vial, followed by 500 μL of the Formula One stock solution, then by the addition of 9 mL water with 0.025% Tween® 20 to create a test solution containing 0.04% (w/v) Formula One and 0.005% (w/v) of the active ingredient. Each test solution was serially diluted to create desired doses of test solutions ( 0.01% (w/v), 0.0025% (w/v), 0.000625% (w/v), 0.000156% (w/v), and 0.000039%(w/v)). In test solutions containing mixtures of Formula One and the active ingredients, the active ingredients were diluted as described above, but the Concentration of Formula One was held constant (0.04% (w/v)).

The test solutions that were tested against BSB were similar to those described above for WTPB. Fresh green beans were cut into segments approximately 1.5 inches long. Four bean segments were added to each test solution and soaked for approximately 15 minutes. After soaking, a single bean fragment was removed and placed into a single well of a 32-well rearing tray (Frontier Agricultural Sciences™), on top of a round filter paper disc. A reference treatment (solvent check) was treated with the diluent only. Each treatment was replicated four times and the test treatments were held at approximately 26 °C and ambient relative humidity (RH) prior to grading. Bean segments were allowed to air dry for ~30 minutes. Three BSB nymphs were added to and contained in each well with a clear perforated adhesive lid. The total number of living BSB nymphs was recorded 3 days after application. Scoring was based off the total number of living nymphs out of all four replicates. Percent control was measured using Abbott's correction formula (W. S. Abbott,

J. Econ. Entomol. 18 (1925), pp. 265-267) as follows:

$$\text{Corrected \% Control} = (1-(Y/X))*100$$

where X = No. of live nymphs on solvent check and Y = No. of live nymphs on treated bean segments. In Table B5 the "Expected % Control" was calculated using the method described in Colby S. R., Weeds, 1967, 15, 20-22. The results are indicated in Table B5 in the Table Section.

**Bioassay 6: Beet Armyworm (*Spodoptera exigua,* LAPHEG) (BAW), and Diamondback Moth (*Plutella xylostella,* PLUTMA) (DBM).**

Beet Armyworm is a global pest of many agriculturally important plant species, including asparagus, beans, beets, celery, cole crops, lettuce, peas, potato, tomato, cotton, and many more. The larvae of BAW are chewing pest insects and damage plants by feeding on the foliage and fruit that can reduce yield and even kill their host plants. Similarly, Diamondback Moth is a common and devastating pest of host plants in the family Brassicaceae, including cabbage, brussel sprouts, broccoli, cauliflower, kale, radish, amongst others. Both BAW and DBM are good representatives of damaging larval Lepidopteran pests.

Stock solutions of Formula One and one or more active ingredients were prepared at a concentration of 4 mg/mL, using a 9:1 mixture of acetone:water as a diluent. Stock solutions were prepared with Formula One as well as for each of the active ingredients individually. Test solutions were prepared from the stock solutions. Test solutions were prepared containing Formula One, the individual active ingredients, and mixtures of Formula One with each of the active ingredients. The test solution for Formula One was prepared by adding 500 μL of the stock solution to a 25 mL glass vial, then adding 500 μL of a 9:1 mixture of acetone:water. The individual active ingredients were prepared by adding 500 μL of stock solution to a 25 mL glass vial, then adding 500 μL of a 9:1 mixture of acetone:water. The test solutions containing mixtures of Formula One and the individual active ingredients were prepared by adding 500 μL of the active ingredient stock solution to a 25 mL glass vial, followed by 500 μL of the Formula One stock solution, creating a test solution containing 4000 ppm Formula One and 0.4% (w/v) of the active ingredient. Each test solution was serially diluted to create desired doses of test solutions (0.4% (w/v), 0.04% (w/v), 0.004% (w/v), 0.0004% (w/v), 0.00004% (w/v), and 0.000004% (w/v)). In test solutions containing mixtures of Formula One and the active ingredients, the active ingredients were diluted as described above, but the Concentration of Formula One was held constant (0.4%(w/v)). The highest dose test solution (0.4% (w/v)) was discarded, leaving 5 test solution concentrations used in the test.

The test solutions were tested against BAW and DBM using the following procedure: An artificial lepidopteran diet (Multispecies Lepidopteran Diet, Southland Products) was distributed in 128-cell bioassay trays (Frontier Agricultural Sciences™). 50 μL of test solution was pipetted into a cell in the bioassay tray. (The test solution doses of 0.04% (w/v), 0.004% (w/v), 0.0004% (w/v), 0.00004% (w/v), and 0.000004% (w/v) translated to concentrations of 5, 0.5, 0.05, 0.005, and 0.0005 ug/cm$^2$ on the diet, respectively.) A reference treatment (solvent check) was treated with the diluent only. Each treatment was replicated 8 times for each species. A 2$^{nd}$ instar BAW or DBM larvae was placed on top of the diet in each cell and was contained with a clear perforated adhesive lid. Test trays were held at approximately 26 °C and ambient relative humidity (RH) prior to grading. After 5 days, the number of live larvae were recorded from each cell and percent control was measured using Abbott's correction formula (W. S. Abbott, J. Econ. Entomol. 18 (1925), pp. 265-267) as follows:

$$\text{Corrected \% Control} = (1-(Y/X))*100$$

where X = No. of live larvae on solvent check and Y = No. of live larvae on treated diet. In Table B6 the "Expected % Control" was calculated using the method described in Colby S. R., Weeds, 1967, 15, 20-22. The results are indicated in Table B6 in the Table Section.

**Agriculturally acceptable acid addition salts, salt derivatives, solvates, ester derivatives, polymorphs, isotopes, and radionuclides**

Formula One may be formulated into agriculturally acceptable acid addition salts. By way of a non-limiting example, an amine function can form salts with hydrochloric, hydrobromic, sulfuric, phosphoric, acetic, benzoic, citric, malonic, salicylic, malic, fumaric, oxalic, succinic, tartaric, lactic, gluconic, ascorbic, maleic, aspartic, benzenesulfonic, methanesulfonic, ethanesulfonic, hydroxyl-methanesulfonic, and hydroxyethanesulfonic acids.

Formula One may be formulated into salt derivatives. By way of a non-limiting example, a salt derivative may

be prepared by contacting a free base with a sufficient amount of the desired acid to produce a salt. A free base may be regenerated by treating the salt with a suitable dilute aqueous base solution such as dilute aqueous sodium hydroxide, potassium carbonate, ammonia, and sodium bicarbonate. As an example, in many cases, a pesticide such as 2,4-D is made more water-soluble by converting it to its dimethylamine salt.

Formula One may be formulated into stable complexes with a solvent, such that the complex remains intact after the non-complexed solvent is removed. These complexes are often referred to as "solvates." However, it is particularly desirable to form stable hydrates with water as the solvent.

Formula One may be made as various crystal polymorphs. Polymorphism is important in the development of agrochemicals since different crystal polymorphs or structures of the same molecule can have vastly different physical properties and biological performances.

Formula One may be made with different isotopes. Of particular importance are molecules having $^{2}H$ (also known as deuterium) or $^{3}H$ (also known as tritium) in place of $^{1}H$. Formula One may be made with different radionuclides. Of particular importance are molecules having $^{14}C$ (also known as radiocarbon). Formula One having deuterium, tritium, or $^{14}C$ may be used in biological studies allowing tracing in chemical and physiological processes and half-life studies, as well as, MoA studies.

**Combinations**

In another embodiment of this invention, Formula One may be used in combination (such as, in a compositional mixture, or a simultaneous or sequential application) with one or more active ingredients.

In another embodiment of this invention, Formula One may be used in combination (such as, in a compositional mixture, or a simultaneous or sequential application) with one or more active ingredients each having a MoA that is the same as, similar to, or, preferably, different from, the MoA of Formula One.

In another embodiment, Formula One may be used in combination (such as, in a compositional mixture, or a simultaneous or sequential application) with one or more molecules having acaricidal, algicidal, avicidal, bactericidal, fungicidal, herbicidal, insecticidal, molluscicidal, nematicidal, rodenticidal, and/or virucidal properties.

In another embodiment, Formula One may be used in combination (such as, in a compositional mixture, or a simultaneous or sequential application) with one or more molecules that are antifeedants, bird repellents, chemosterilants, herbicide safeners, insect attractants, insect repellents, mammal repellents, mating disrupters, plant activators, plant growth regulators, plant health stimulators or promoters, nitrification inhibitors, and/or synergists.

In another embodiment, Formula One may also be used in combination (such as in a compositional mixture, or a simultaneous or sequential application) with one or more biopesticides.

In another embodiment, in a pesticidal composition combinations of Formula One and an active ingredient may be used in a wide variety of weight ratios. For example, in a two-component mixture, the weight ratio of Formula One to an active ingredient, the weight ratios in Table 3 may be used.

| TABLE 3 |
|---|
| **Weight Ratios Formula One : active ingredient** |
| 10000:1 to 1:10000 |
| 1000:1 to 1:1000 |
| 500:1 to 1:500 |
| 100:1 to 1:100 |
| 50:1 to 1:50 |
| 20:1 to 1:20 |
| 10:1 to 1:10 |
| 5:1 to 1:5 |
| 3:1 to 1:3 |
| 2:1 to 1:2 |
| 1:1 |

Weight ratios of a molecule of Formula One to an active ingredient may also be depicted as *X: Y*; wherein *X*

is the parts by weight of Formula One and *Y* is the parts by weight of the active ingredient. The numerical range of the parts by weight for *X* is $0 < X \leq 100$ and the parts by weight for *Y* is $0 < Y \leq 100$ and is shown graphically in Table 4. By way of non-limiting example, the weight ratio of Formula One to an active ingredient may be 20:1.

| TABLE 4 | | | | | | | | | | |
|---|---|---|---|---|---|---|---|---|---|---|
| active ingredient (*Y*) *Parts by weight* | **100** | ***X,Y*** | | ***X,Y*** | | | ***X,Y*** | | | |
| | **50** | ***X,Y*** | ***X,Y*** | ***X,Y*** | | | ***X,Y*** | ***X,Y*** | | |
| | **20** | ***X,Y*** | | ***X,Y*** | ***X,Y*** | | ***X,Y*** | | ***X,Y*** | |
| | **15** | ***X,Y*** | ***X,Y*** | | | | | ***X,Y*** | ***X,Y*** | ***X,Y*** |
| | **10** | ***X,Y*** | | ***X,Y*** | | | | | | |
| | **5** | ***X,Y*** | ***X,Y*** | ***X,Y*** | | | | ***X,Y*** | | |
| | **3** | ***X,Y*** | ***X,Y*** | | ***X,Y*** | ***X,Y*** | | ***X,Y*** | ***X,Y*** | ***X,Y*** |
| | **2** | ***X,Y*** | | ***X,Y*** | ***X,Y*** | | ***X,Y*** | | ***X,Y*** | |
| | **1** | ***X,Y*** | ***X,Y*** | ***X,Y*** | ***X,Y*** | ***X,Y*** | ***X,Y*** | ***X,Y*** | ***X,Y*** | ***X,Y*** |
| | | **1** | **2** | **3** | **5** | **10** | **15** | **20** | **50** | **100** |
| | Formula One, also known as **F1,** (*X*) *Parts by weight* | | | | | | | | | |

Ranges of weight ratios of Formula One to an active ingredient may be depicted as $X_1:Y_1$ to $X_2:Y_2$, wherein *X* and *Y* are defined as above.

In one embodiment, the range of weight ratios may be $X_1:Y_1$ to $X_2:Y_2$, wherein $X_1 > Y_1$ and $X_2 < Y_2$. By way of non-limiting example, the range of a weight ratio of Formula One to an active ingredient may be between 3:1 and 1:3, inclusive of the endpoints.

In another embodiment, the range of weight ratios may be $X_1:Y_1$ to $X_2:Y_2$, wherein $X_1 > Y_1$ and $X_2 > Y_2$. By way of non-limiting example, the range of weight ratio of Formula One to an active ingredient may be between 15:1 and 3:1, inclusive of the endpoints.

In another embodiment, the range of weight ratios may be $X_1:Y_1$ to $X_2:Y_2$, wherein $X_1 < Y_1$ and $X_2 < Y_2$. By way of non-limiting example, the range of weight ratios of Formula One to an active ingredient may be between about 1:3 and about 1:20, inclusive of the endpoints.

**Formulations**

A pesticide is often not suitable for application in its pure form. It is usually necessary to add other substances so that the pesticide may be used at the required concentration and in an appropriate form, permitting ease of application, handling, transportation, storage, and maximum pesticidal activity. Thus, pesticides are formulated into, for example, baits, concentrated emulsions, dusts, emulsifiable concentrates, fumigants, gels, granules, microencapsulations, seed treatments, suspension concentrates, suspoemulsions, tablets, water soluble liquids, water dispersible granules or dry flowables, wettable powders, and ultra-low volume solutions.

Pesticides are applied most often as aqueous suspensions or emulsions prepared from concentrated formulations of such pesticides. Such water-soluble, water-suspendable, or emulsifiable formulations may be solids usually known as wettable powders, water dispersible granules, liquids usually known as emulsifiable concentrates, or aqueous suspensions. Wettable powders, which may be compacted to form water dispersible granules, comprise an intimate mixture of the pesticide, a carrier, and surfactants. The concentration of the pesticide is usually from about 10% to about 90% by weight. The carrier is usually selected from among the attapulgite clays, the montmorillonite clays, the diatomaceous earths, or the purified silicates. Effective surfactants, comprising from about 0.5% to about 10% of the wettable powder, are found among sulfonated lignins, condensed naphthalenesulfonates, naphthalenesulfonates, alkylbenzenesulfonates, alkyl sulfates, and non-ionic surfactants such as ethylene oxide adducts of alkyl phenols.

Emulsifiable concentrates of pesticides comprise a convenient concentration of a pesticide, such as from about 50 to about 500 grams per liter of liquid dissolved in a carrier that is either a water miscible solvent or a mixture of water-immiscible organic solvent and emulsifiers. Useful organic solvents include aromatics, especially xylenes and petroleum fractions, especially the high-boiling naphthalenic and olefinic portions of petroleum such as heavy aromatic naphtha. Other organic solvents may also be used, such as the terpenic solvents including rosin derivatives, aliphatic ketones such as cyclohexanone, and complex alcohols such as 2-ethoxyethanol. Suitable emulsifiers for emulsifiable concentrates are selected from conventional anionic and non-ionic surfactants.

Aqueous suspensions comprise suspensions of water-insoluble pesticides dispersed in an aqueous carrier at a concentration in the range from about 5% to about 50% by weight. Suspensions are prepared by finely grinding the pesticide and vigorously mixing it into a carrier comprised of water and surfactants. Ingredients, such as inorganic salts and synthetic or natural gums may, also be added to increase the density and viscosity of the aqueous carrier. It is often most effective to grind and mix the pesticide at the same time by preparing the aqueous mixture and homogenizing it in an implement such as a sand mill, ball mill, or piston-type homogenizer. The pesticide in suspension might be microencapsulated in plastic polymer.

Oil dispersions (OD) comprise suspensions of organic solvent-insoluble pesticides finely dispersed in a mixture of organic solvent and emulsifiers at a concentration in the range from about 2% to about 50% by weight. One or more pesticides might be dissolved in the organic solvent. Useful organic solvents include aromatics, especially xylenes and petroleum fractions, especially the high-boiling naphthalenic and olefinic portions of petroleum such as heavy aromatic naphtha. Other solvents may include vegetable oils, seed oils, and esters of vegetable and seed oils. Suitable emulsifiers for oil dispersions are selected from conventional anionic and non-ionic surfactants. Thickeners or gelling agents are added in the formulation of oil dispersions to modify the rheology or flow properties of the liquid and to prevent separation and settling of the dispersed particles or droplets.

Pesticides may also be applied as granular compositions that are particularly useful for applications to the soil. Granular compositions usually contain from about 0.5% to about 10% by weight of the pesticide, dispersed in a carrier that comprises clay or a similar substance. Such compositions are usually prepared by dissolving the pesticide in a suitable solvent and applying it to a granular carrier, which has been preformed to the appropriate particle size, in the range of from about 0.5 mm to about 3 mm. Such compositions may also be formulated by making a dough or paste of the carrier and molecule, and then crushing and drying to obtain the desired granular particle size. Another form of granules is a water emulsifiable granule (EG). It is a formulation consisting of granules to be applied as a conventional oil-in-water emulsion of the active ingredient(s), either solubilized or diluted in an organic solvent, after disintegration and dissolution in water. Water emulsifiable granules comprise one or several active ingredient(s), either solubilized or diluted in a suitable organic solvent that is (are) absorbed in a water soluble polymeric shell or some other type of soluble or insoluble matrix.

Dusts containing a pesticide are prepared by intimately mixing the pesticide in powdered form with a suitable dusty agricultural carrier, such as kaolin clay, ground volcanic rock, and the like. Dusts can suitably contain from about 1% to about 10% of the pesticide. Dusts may be applied as a seed dressing or as a foliage application with a dust blower machine.

It is equally practical to apply a pesticide in the form of a solution in an appropriate organic solvent, usually petroleum oil, such as the spray oils, which are widely used in agricultural chemistry.

Pesticides can also be applied in the form of an aerosol composition. In such compositions, the pesticide is dissolved or dispersed in a carrier, which is a pressure-generating propellant mixture. The aerosol composition is packaged in a container from which the mixture is dispensed through an atomizing valve.

Pesticide baits are formed when the pesticide is mixed with food or an attractant or both. When the pests eat the bait, they also consume the pesticide. Baits may take the form of granules, gels, flowable powders, liquids, or solids. Baits may be used in pest harborages.

Fumigants are pesticides that have a relatively high vapor pressure and hence can exist as a gas in sufficient concentrations to kill pests in soil or enclosed spaces. The toxicity of the fumigant is proportional to its concentration and the exposure time. They are characterized by a good capacity for diffusion and act by penetrating the pest's respiratory system or being absorbed through the pest's cuticle. Fumigants are applied to control stored product pests under gas proof sheets, in gas sealed rooms or buildings, or in special chambers.

Pesticides may be microencapsulated by suspending the pesticide particles or droplets in polymers of various types. By altering the chemistry of the polymer or by changing factors in the processing, microcapsules may be formed of various sizes, solubility, wall thicknesses, and degrees of penetrability. These factors govern the speed with which the active ingredient within is released, which in turn, affects the residual performance, speed of action, and odor of the product. The microcapsules might be formulated as suspension concentrates or water dispersible granules.

Oil solution concentrates are made by dissolving pesticide in a solvent that will hold the pesticide in solution. Oil solutions of a pesticide usually provide faster knockdown and kill of pests than other formulations due to the solvents themselves having pesticidal action and the dissolution of the waxy covering of the integument increasing the speed of uptake of the pesticide. Other advantages of oil solutions include better storage stability, better penetration of crevices, and better adhesion to greasy surfaces.

Another embodiment is an oil-in-water emulsion, wherein the emulsion comprises oily globules which are each provided with a lamellar liquid crystal coating and are dispersed in an aqueous phase, wherein each oily globule comprises at least one molecule which is agriculturally active, and is individually coated with a monolamellar or oligolamellar layer comprising: (1) at least one non-ionic lipophilic surface-active agent, (2) at least one non-ionic hydrophilic surface-active

agent, and (3) at least one ionic surface-active agent, wherein the globules having a mean particle diameter of less than 800 nanometers.

**Other formulation components**

Generally, when Formula One is used in a formulation, such formulation can also contain other components. These components include, but are not limited to (this is a non-exhaustive and non-mutually exclusive list), wetters, spreaders, stickers, penetrants, buffers, sequestering agents, drift reduction agents, compatibility agents, anti-foam agents, cleaning agents, and emulsifiers. A few components are described forthwith.

A wetting agent is a substance that when added to a liquid increases the spreading or penetration power of the liquid by reducing the interfacial tension between the liquid and the surface on which it is spreading. Wetting agents are used for two main functions in agrochemical formulations: during processing and manufacture to increase the rate of wetting of powders in water to make concentrates for soluble liquids or suspension concentrates; and during mixing of a product with water in a spray tank to reduce the wetting time of wettable powders and to improve the penetration of water into water-dispersible granules. Examples of wetting agents used in wettable powder, suspension concentrate, and water-dispersible granule formulations are: sodium lauryl sulfate, sodium dioctyl sulfosuccinate, alkyl phenol ethoxylates, and aliphatic alcohol ethoxylates.

A dispersing agent is a substance that adsorbs onto the surface of particles, helps to preserve the state of dispersion of the particles, and prevents them from reaggregating. Dispersing agents are added to agrochemical formulations to facilitate dispersion and suspension during manufacture, and to ensure the particles redisperse into water in a spray tank. They are widely used in wettable powders, suspension concentrates, and water-dispersible granules. Surfactants that are used as dispersing agents have the ability to adsorb strongly onto a particle surface and provide a charged or steric barrier to reaggregation of particles. The most commonly used surfactants are anionic, non-ionic, or mixtures of the two types. For wettable powder formulations, the most common dispersing agents are sodium lignosulfonates. For suspension concentrates, very good adsorption and stabilization are obtained using polyelectrolytes, such as sodium-naphthalene-sulfonate-formaldehyde-condensates. Tristyrylphenol ethoxylate phosphate esters are also used. Non-ionics such as alkylarylethylene oxide condensates and EO-PO block copolymers are sometimes combined with anionics as dispersing agents for suspension concentrates. In recent years, new types of very high molecular weight polymeric surfactants have been developed as dispersing agents. These have very long hydrophobic 'backbones' and a large number of ethylene oxide chains forming the 'teeth' of a 'comb' surfactant. These high molecular weight polymers can give very good long-term stability to suspension concentrates because the hydrophobic backbones have many anchoring points onto the particle surfaces. Examples of dispersing agents used in agrochemical formulations are: sodium lignosulfonates, sodium naphthalene sulfonate formaldehyde condensates, tristyrylphenol-ethoxylate-phosphate-esters, aliphatic alcohol ethoxylates, alkyl ethoxylates, EO-PO block copolymers, and graft copolymers.

An emulsifying agent is a substance that stabilizes a suspension of droplets of one liquid phase in another liquid phase. Without the emulsifying agent, the two liquids would separate into two immiscible liquid phases. The most commonly used emulsifier blends contain an alkylphenol or an aliphatic alcohol with twelve or more ethylene oxide units and the oil-soluble calcium salt of dodecylbenzenesulfonic acid. A range of hydrophile-lipophile balance ("HLB") values from about 8 to about 18 will normally provide good stable emulsions. Emulsion stability can sometimes be improved by the addition of a small amount of an EO-PO block copolymer surfactant.

A solubilizing agent is a surfactant that will form micelles in water at concentrations above the critical micelle concentration. The micelles are then able to dissolve or solubilize water-insoluble materials inside the hydrophobic part of the micelle. The types of surfactants usually used for solubilization are non-ionics, sorbitan monooleates, sorbitan monooleate ethoxylates, and methyl oleate esters.

Surfactants are sometimes used, either alone or with other additives such as mineral or vegetable oils as adjuvants to spray-tank mixes to improve the biological performance of the pesticide on the target. The types of surfactants used for bioenhancement depend generally on the nature and mode of action of the pesticide. However, they are often non-ionics such as: alkyl ethoxylates, linear aliphatic alcohol ethoxylates, and aliphatic amine ethoxylates.

A carrier or diluent in an agricultural formulation is a material added to the pesticide to give a product of the required strength. Carriers are usually materials with high absorptive capacities, while diluents are usually materials with low absorptive capacities. Carriers and diluents are used in the formulation of dusts, wettable powders, granules, and water-dispersible granules.

Organic solvents are used mainly in the formulation of emulsifiable concentrates, oil-in-water emulsions, suspoemulsions, oil dispersions, and ultra-low volume formulations, and to a lesser extent, granular formulations. Sometimes mixtures of solvents are used. The first main groups of solvents are aliphatic paraffinic oils such as kerosene or refined paraffins. The second main group (and the most common) comprises the aromatic solvents such as xylene and higher molecular weight fractions of C9 and C10 aromatic solvents. Chlorinated hydrocarbons are useful as cosolvents to prevent crystallization of pesticides when the formulation is emulsified into water. Alcohols are sometimes used as

cosolvents to increase solvent power. Other solvents may include vegetable oils, seed oils, and esters of vegetable and seed oils.

Thickeners or gelling agents are used mainly in the formulation of suspension concentrates, oil dispersions, emulsions and suspoemulsions to modify the rheology or flow properties of the liquid and to prevent separation and settling of the dispersed particles or droplets. Thickening, gelling, and anti-settling agents generally fall into two categories, namely water-insoluble particulates and water-soluble polymers. It is possible to produce suspension concentrate and oil dispersion formulations using clays and silicas. Examples of these types of materials, include, but are not limited to, montmorillonite, bentonite, magnesium aluminum silicate, and attapulgite. Water-soluble polysaccharides in water based suspension concentrates have been used as thickening-gelling agents for many years. The types of polysaccharides most commonly used are natural extracts of seeds and seaweeds or are synthetic derivatives of cellulose. Examples of these types of materials include, but are not limited to, guar gum, locust bean gum, carrageenan, alginates, methyl cellulose, sodium carboxymethyl cellulose (SCMC), and hydroxyethyl cellulose (HEC). Other types of anti-settling agents are based on modified starches, polyacrylates, polyvinyl alcohol, and polyethylene oxide. Another good anti-settling agent is xanthan gum.

Microorganisms can cause spoilage of formulated products. Therefore, preservation agents are used to eliminate or reduce their effect. Examples of such agents include, but are not limited to: propionic acid and its sodium salt, sorbic acid and its sodium or potassium salts, benzoic acid and its sodium salt, p-hydroxybenzoic acid sodium salt, methyl p-hydroxybenzoate, and 1,2-benzisothiazolin-3-one (BIT).

The presence of surfactants often causes water-based formulations to foam during mixing operations in production and in application through a spray tank. In order to reduce the tendency to foam, anti-foam agents are often added either during the production stage or before filling into bottles. Generally, there are two types of anti-foam agents, namely silicones and non-silicones. Silicones are usually aqueous emulsions of dimethyl polysiloxane, while the non-silicone anti-foam agents are water-insoluble oils, such as octanol and nonanol, or silica. In both cases, the function of the anti-foam agent is to displace the surfactant from the air-water interface.

"Green" agents (*e.g.*, adjuvants, surfactants, solvents) can reduce the overall environmental footprint of crop protection formulations. Green agents are biodegradable and generally derived from natural and/or sustainable sources, *e.g*. plant and animal sources. Specific examples are: vegetable oils, seed oils, and esters thereof, also alkoxylated alkyl polyglucosides.

## Applications

Formula One may be applied to any locus. Particular loci to apply such molecules include loci where alfalfa, almonds, apples, barley, beans, canola, corn, cotton, crucifers, flowers, fodder species (Rye Grass, Sudan Grass, Tall Fescue, Kentucky Blue Grass, and Clover), fruits, lettuce, oats, oil seed crops, oranges, peanuts, pears, peppers, potatoes, rice, sorghum, soybeans, strawberries, sugarcane, sugarbeets, sunflowers, tobacco, tomatoes, wheat (for example, Hard Red Winter Wheat, Soft Red Winter Wheat, White Winter Wheat, Hard Red Spring Wheat, and Durum Spring Wheat), and other valuable crops are growing or the seeds thereof are going to be planted.

Formula One may also be applied where plants, such as crops, are growing and where there are low levels (even no actual presence) of pests that can commercially damage such plants. Applying such molecules in such locus is to benefit the plants being grown in such locus. Such benefits, may include, but are not limited to: helping the plant grow a better root system; helping the plant better withstand stressful growing conditions; improving the health of a plant; improving the yield of a plant (*e.g*. increased biomass and/or increased content of valuable ingredients); improving the vigor of a plant (*e.g*. improved plant growth and/or greener leaves); improving the quality of a plant (*e.g*. improved content or composition of certain ingredients); and improving the tolerance to abiotic and/or biotic stress of the plant.

Formula One may be applied with ammonium sulfate when growing various plants as this may provide additional benefits.

Formula One may be applied on, in, or around plants, both the above ground as well as below ground portions, genetically modified to express specialized traits, such as *Bacillus thuringiensis* (for example, Cry1Ab, Cry1Ac, Cry1Fa, Cry1A.105, Cry2Ab, Vip3A, mCry3A, Cry3Ab, Cry3Bb, Cry34Ab1/Cry35Ab1), other insecticidal toxins, or those expressing herbicide tolerance, or those with "stacked" foreign genes expressing insecticidal toxins, herbicide tolerance, nutrition-enhancement, or any other beneficial traits. Furthermore, in additional details, transgenic plants may comprise a stack of one or more insecticidal polynucleotides disclosed herein with one or more additional polynucleotides resulting in the production or suppression of multiple polypeptide sequences. Transgenic plants comprising stacks of polynucleotide sequences can be obtained by either or both of traditional breeding methods or through genetic engineering methods. These methods include, but are not limited to, breeding individual lines each comprising a polynucleotide of interest, transforming a transgenic plant comprising a gene disclosed herein with a subsequent gene and co- transformation of genes into a single plant cell. As used herein, the term "stacked" includes having the multiple traits present in the same plant (i.e., both traits are incorporated into the nuclear genome, one trait is incorporated into the nuclear genome and

one trait is incorporated into the genome of a plastid or both traits are incorporated into the genome of a plastid). In one non-limiting example, "stacked traits" comprise a molecular stack where the sequences are physically adjacent to each other. A trait, as used herein, refers to the phenotype derived from a particular sequence or groups of sequences. Co-transformation of genes can be carried out using single transformation vectors comprising multiple genes or genes carried separately on multiple vectors. If the sequences are stacked by genetically transforming the plants, the polynucleotide sequences of interest can be combined at any time and in any order. The traits can be introduced simultaneously in a co-transformation protocol with the polynucleotides of interest provided by any combination of transformation cassettes. For example, if two sequences will be introduced, the two sequences can be contained in separate transformation cassettes (trans) or contained on the same transformation cassette (cis). Expression of the sequences can be driven by the same promoter or by different promoters. In certain cases, it may be desirable to introduce a transformation cassette that will suppress the expression of the polynucleotide of interest. This may be combined with any combination of other suppression cassettes or overexpression cassettes to generate the desired combination of traits in the plant. It is further recognized that polynucleotide sequences can be stacked at a desired genomic location using a site-specific recombination system. See, for example, WO 1999/25821, WO 1999/25854, WO 1999/25840, WO 1999/25855 and WO 1999/25853, all of which are herein incorporated by reference.

In some embodiments, one or more of the polynucleotides encoding the Cry toxin polypeptide(s) disclosed herein, alone or stacked with one or more additional insect resistance traits can be stacked with one or more additional input traits (e.g., herbicide resistance, fungal resistance, virus resistance, stress tolerance, disease resistance, male sterility, stalk strength, and the like) or output traits (e.g., increased yield, modified starches, improved oil profile, balanced amino acids, high lysine or methionine, increased digestibility, improved fiber quality, drought resistance, and the like). Thus, the polynucleotide embodiments can be used to provide a complete agronomic package of improved crop quality with the ability to flexibly and cost effectively control any number of agronomic pests.

Transgenes useful for stacking include but are not limited to: transgenes that confer resistance to an herbicide; transgenes that confer or contribute to an altered grain characteristic; genes that control male-sterility; genes that create a site for site specific DNA integration; genes that affect abiotic stress resistance; genes that confer increased yield, genes that confer plant digestibility; and transgenes that confer resistance to insects or disease.

Examples of transgenes that confer resistance to insects include genes encoding a *Bacillus thuringiensis* protein, a derivative thereof or a synthetic polypeptide modeled thereon. See, for example, Geiser, et al., (1986) Gene 48:109, who disclose the cloning and nucleotide sequence of a *Bt* delta-endotoxin gene. Moreover, DNA molecules encoding delta-endotoxin genes can be purchased from American Type Culture Collection (Rockville, Md.), for example, under ATCC® Accession Numbers 40098, 67136, 31995 and 31998. Other non-limiting examples of *Bacillus thuringiensis* transgenes being genetically engineered are given in the following patents and patent applications: US Patent Numbers 5,188,960; 5,689,052; 5,880,275; 5,986,177; 6,023,013, 6,060,594, 6,063,597, 6,077,824, 6,620,988, 6,642,030, 6,713,259, 6,893,826, 7,105,332; 7,179,965, 7,208,474; 7,227,056, 7,288,643, 7,323,556, 7,329,736, 7,449,552, 7,468,278, 7,510,878, 7,521,235, 7,544,862, 7,605,304, 7,696,412, 7,629,504, 7,705,216, 7,772,465, 7,790,846, 7,858,849 and WO 1991/14778; WO 1999/31248; WO 2001/12731; WO 1999/24581 and WO 1997/40162.

Genes encoding pesticidal proteins may also be stacked including but are not limited to: insecticidal proteins from *Pseudomonas* sp. such as PSEEN3174 (Monalysin, (2011) PLoS Pathogens, 7:1-13), from *Pseudomonas protegens strain CHAO and Pf-5 (previously fluorescens)* (Pechy-Tarr, (2008) Environmental Microbiology 10:2368-2386: GenBank Accession No. EU400157); from *Pseudomonas taiwanensis* (Liu, et al., (2010) J. Agric. Food Chem. 58:12343-12349) and from *Pseudomonas pseudoalcaligenes* (Zhang, et al., (2009) Annals of Microbiology 59:45-50 and Li, et al., (2007) Plant Cell Tiss. Organ Cult. 89:159-168); insecticidal proteins from *Photorhabdus* sp. and *Xenorhabdus* sp. (Hinchliffe, et al., (2010) The Open Toxinology Journal 3:101-118 and Morgan, et al., (2001) Applied and Envir. Micro. 67:2062-2069), US Patent Number 6,048,838, and US Patent Number 6,379,946; a PIP-1 polypeptide of US Patent Number 9,688,730; an AfIP-1A and/or AfIP-1B polypeptide of US Patent Number 9,475,847; a PIP-47 polypeptide of US Patent Number 10,006,045; an IPD045 polypeptide, an IPD064 polypeptide, an IPD074 polypeptide, an IPD075 polypeptide, and an IPD077 polypeptide of PCT Publication Number WO 2016/114973; an IPD080 polypeptide of International Patent Application Publication Number WO2018/075350; an IPD078 polypeptide, an IPD084 polypeptide, an IPD085 polypeptide, an IPD086 polypeptide, an IPD087 polypeptide, an IPD088 polypeptide, and an IPD089 polypeptide of International Patent Application Publication Number WO2018/084936; PIP-72 polypeptide of US Patent Publication Number US20160366891; a PtIP-50 polypeptide and a PtIP-65 polypeptide of US Patent Application Publication Number US20170166921; an IPD098 polypeptide, an IPD059 polypeptide, an IPD108 polypeptide, an IPD109 polypeptide of International Patent Application Publication Number WO2018/232072; a PtIP-83 polypeptide of US Publication Number US20160347799; a PtIP-96 polypeptide of US Publication Number US20170233440; an IPD079 polypeptide of PCT Publication Number WO2017/23486; an IPD082 polypeptide of International Patent Application Publication Number WO 2017/105987, an IPD090 polypeptide of International Patent Application Publication Number WO2017/192560, an IPD093 polypeptide of International Patent Application Publication Number WO2018/111551; an IPD103 polypeptide of International Patent Application Publication Number WO2018/005411; an IPD101 polypeptide of International Patent

Application Publication Number WO2018/118811; an IPD121 polypeptide of International Patent Application Publication Number WO2018/208882, and δ-endotoxins including, but not limited to, the Cry1, Cry2, Cry3, Cry4, Cry5, Cry6, Cry7, Cry8, Cry9, Cry10, Cry11, Cry12, Cry13, Cry14, Cry15, Cry16, Cry17, Cry18, Cry19, Cry20, Cry21, Cry22, Cry23, Cry24, Cry25, Cry26, Cry27, Cry 28, Cry 29, Cry 30, Cry31, Cry32, Cry33, Cry34, Cry35,Cry36, Cry37, Cry38, Cry39, Cry40, Cry41, Cry42, Cry43, Cry44, Cry45, Cry 46, Cry47, Cry49, Cry50, Cry51, Cry52, Cry53, Cry 54, Cry55, Cry56, Cry57, Cry58, Cry59, Cry60, Cry61, Cry62, Cry63, Cry64, Cry65, Cry66, Cry67, Cry68, Cry69, Cry70, Cry71, and Cry 72 classes of δ-endotoxin genes and the *B. thuringiensis* cytolytic Cyt1 and Cyt2 genes.

Examples of δ-endotoxins also include but are not limited to Cry1A proteins of US Patent Numbers 5,880,275 and 7,858,849; a DIG-3 or DIG-11 toxin (N-terminal deletion of α-helix 1 and/or α-helix 2 variants of Cry proteins such as Cry1A) of US Patent Numbers 8,304,604 and 8.304,605, Cry1B of US Patent Application Serial Number 10/525,318; Cry1C of US Patent Number 6,033,874; Cry1F of US Patent Numbers 5,188,960, 6,218,188; Cry1A/F chimeras of US Patent Numbers 7,070,982; 6,962,705 and 6,713,063); a Cry2 protein such as Cry2Ab protein of US Patent Number 7,064,249); a Cry3A protein including but not limited to an engineered hybrid insecticidal protein (eHIP) created by fusing unique combinations of variable regions and conserved blocks of at least two different Cry proteins (US Patent Application Publication Number 2010/0017914); a Cry4 protein; a Cry5 protein; a Cry6 protein; Cry8 proteins of US Patent Numbers 7,329,736, 7,449,552, 7,803,943, 7,476,781, 7,105,332, 7,378,499 and 7,462,760; a Cry9 protein such as such as members of the Cry9A, Cry9B, Cry9C, Cry9D, Cry9E, and Cry9F families; a Cry15 protein of Naimov, et al., (2008) Applied and Environmental Microbiology 74:7145-7151; a Cry22, a Cry34Ab1 protein of US Patent Numbers 6,127,180, 6,624,145 and 6,340,593; a CryET33 and CryET34 protein of US Patent Numbers 6,248,535, 6,326,351, 6,399,330, 6,949,626, 7,385,107 and 7,504,229; a CryET33 and CryET34 homologs of US Patent Publication Number 2006/0191034, 2012/0278954, and PCT Publication Number WO 2012/139004; a Cry35Ab1 protein of US Patent Numbers 6,083,499, 6,548,291 and 6,340,593; a Cry46 protein, a Cry 51 protein, a Cry binary toxin; a TIC901 or related toxin; TIC807 of US 2008/0295207; ET29, ET37, TIC809, TIC810, TIC812, TIC127, TIC128 of PCT US 2006/033867; and Cry proteins such as Cry1A and Cry3A having modified proteolytic sites of US Patent Number 8,319,019; and a Cry1Ac, Cry2Aa and Cry1Ca toxin protein from *Bacillus thuringiensis* strain VBTS 2528 of US Patent Application Publication Number 2011/0064710. Other Cry proteins are well known to one skilled in the art (see, Crickmore, et al., "Bacillus thuringiensis toxin nomenclature" (2011), at lifesci.sussex.ac.uk/home/Neil_Crickmore/Bt/ which can be accessed on the world-wide web using the "www" prefix). The insecticidal activity of Cry proteins is well known to one skilled in the art (for review, see, van Frannkenhuyzen, (2009) J. Invert. Path. 101:1-16). The use of Cry proteins as transgenic plant traits is well known to one skilled in the art and Cry-transgenic plants including but not limited to Cry1Ac, Cry1Ac+Cry2Ab, Cry1Ab, Cry1A.105, Cry1F, Cry1Fa2, Cry1F+Cry1Ac, Cry2Ab, Cry3A, mCry3A, Cry3Bb1, Cry34Ab1, Cry35Ab1, Vip3A, mCry3A, Cry9c and CBI-Bt have received regulatory approval (see, Sanahuja, (2011) Plant Biotech Journal 9:283-300 and the CERA (2010) GM Crop Database Center for Environmental Risk Assessment (CERA), ILSI Research Foundation, Washington D.C. at cera gmc.org/index.php?action=gm_crop_database which can be accessed on the world-wide web using the "www" prefix). More than one pesticidal proteins well known to one skilled in the art can also be expressed in plants such as Cry1F & CryCa (US2012/0317681) and Cry1DA & Cry1Fa (US2012/0331589). Pesticidal proteins also include insecticidal lipases including lipid acyl hydrolases of US Patent Number 7,491,869, and cholesterol oxidases such as from *Streptomyces* (Purcell et al. (1993) Biochem Biophys Res Commun 15:1406-1413). Pesticidal proteins also include VIP (vegetative insecticidal proteins) toxins of US Patent Numbers 5,877,012, 6,107,279, 6,137,033, 7,244,820, 7,615,686, and 8,237,020, and the like. Other VIP proteins are well known to one skilled in the art (see, lifesci.sussex.ac.uk/home/Neil_Crickmore/Bt/vip.html which can be accessed on the world-wide web using the "www" prefix). Pesticidal proteins also include toxin complex (TC) proteins, obtainable from organisms such as *Xenorhabdus, Photorhabdus* and *Paenibacillus* (see, US Patent Numbers 7,491,698 and 8,084,418). Some TC proteins have "stand alone" insecticidal activity and other TC proteins enhance the activity of the stand-alone toxins produced by the same given organism. The toxicity of a "stand-alone" TC protein (from *Photorhabdus, Xenorhabdus* or *Paenibacillus,* for example) can be enhanced by one or more TC protein "potentiators" derived from a source organism of a different genus. There are three main types of TC proteins. As referred to herein, Class A proteins ("Protein A") are stand-alone toxins. Class B proteins ("Protein B") and Class C proteins ("Protein C") enhance the toxicity of Class A proteins. Examples of Class A proteins are TcbA, TcdA, XptA1 and XptA2. Examples of Class B proteins are TcaC, TcdB, XptB1Xb and XptC1Wi. Examples of Class C proteins are TccC, XptC1Xb and XptB1Wi. Pesticidal proteins also include spider, snake and scorpion venom proteins. Examples of spider venom peptides include but are not limited to lycotoxin-1 peptides and mutants thereof (US Patent Number 8,334,366).

Further transgenes that confer resistance to insects may down-regulation of expression of target genes in insect pest species by interfering ribonucleic acid (RNA) molecules through RNA interference. RNA interference refers to the process of sequence-specific post-transcriptional gene silencing in animals mediated by short interfering RNAs (siRNAs) (Fire, et al., (1998) Nature 391:806). RNAi transgenes may include but are not limited to expression of dsRNA, siRNA, miRNA, iRNA, antisense RNA, or sense RNA molecules that down-regulate expression of target genes in insect pests. PCT Publication WO 2007/074405 describes methods of inhibiting expression of target genes in invertebrate pests including

Colorado potato beetle. PCT Publication WO 2005/110068 describes methods of inhibiting expression of target genes in invertebrate pests including in particular Western corn rootworm as a means to control insect infestation. Furthermore, PCT Publication WO 2009/091864 describes compositions and methods for the suppression of target genes from insect pest species including pests from the Lygus genus.

RNAi transgenes are provided for targeting the vacuolar ATPase H subunit, useful for controlling a coleopteran pest population and infestation as described in US Patent Application Publication 2012/0198586. PCT Publication WO 2012/055982 describes ribonucleic acid (RNA or double stranded RNA) that inhibits or down regulates the expression of a target gene that encodes: an insect ribosomal protein such as the ribosomal protein L19, the ribosomal protein L40 or the ribosomal protein S27A; an insect proteasome subunit such as the Rpn6 protein, the Pros 25, the Rpn2 protein, the proteasome beta 1 subunit protein or the Pros beta 2 protein; an insect β-coatomer of the COPI vesicle, the γ-coatomer of the COPI vesicle, the β'- coatomer protein or the ζ-coatomer of the COPI vesicle; an insect Tetraspanine 2 A protein which is a putative transmembrane domain protein; an insect protein belonging to the actin family such as Actin 5C; an insect ubiquitin-5E protein; an insect Sec23 protein which is a GTPase activator involved in intracellular protein transport; an insect crinkled protein which is an unconventional myosin which is involved in motor activity; an insect crooked neck protein which is involved in the regulation of nuclear alternative mRNA splicing; an insect vacuolar H+-ATPase G-subunit protein and an insect Tbp-1 such as Tat-binding protein. PCT publication WO 2007/035650 describes ribonucleic acid (RNA or double stranded RNA) that inhibits or down regulates the expression of a target gene that encodes Snf7. US Patent Application publication 2011/0054007 describes polynucleotide silencing elements targeting RPS10. PCT publication WO 2016/205445 describes polynucleotide silencing elements that reduce fecundity, with target polynucleotides, including NCLB, MAEL, BOULE, and VgR. US Patent Application publication 2014/0275208 and US2015/0257389 describes polynucleotide silencing elements targeting RyanR (DvSSJ1) and PAT3. PCT publications WO/2016/138106, WO 2016/060911, WO 2016/060912, WO 2016/060913, and WO 2016/060914 describe polynucleotide silencing elements targeting COPI coatomer subunit nucleic acid molecules that confer resistance to Coleopteran and Hemipteran pests. US Patent Application Publications 2012/029750, US 20120297501, and 2012/0322660 describe interfering ribonucleic acids (RNA or double stranded RNA) that functions upon uptake by an insect pest species to down-regulate expression of a target gene in said insect pest, wherein the RNA comprises at least one silencing element wherein the silencing element is a region of double-stranded RNA comprising annealed complementary strands, one strand of which comprises or consists of a sequence of nucleotides which is at least partially complementary to a target nucleotide sequence within the target gene. US Patent Application Publication 2012/0164205 describe potential targets for interfering double stranded ribonucleic acids for inhibiting invertebrate pests including: a Chd3 Homologous Sequence, a Beta-Tubulin Homologous Sequence, a 40 kDa V-ATPase Homologous Sequence, a EF1α Homologous Sequence, a 26S Proteosome Subunit p28 Homologous Sequence, a Juvenile Hormone Epoxide Hydrolase Homologous Sequence, a Swelling Dependent Chloride Channel Protein Homologous Sequence, a Glucose-6-Phosphate 1-Dehydrogenase Protein Homologous Sequence, an Act42A Protein Homologous Sequence, a ADP-Ribosylation Factor 1 Homologous Sequence, a Transcription Factor IIB Protein Homologous Sequence, a Chitinase Homologous Sequences, a Ubiquitin Conjugating Enzyme Homologous Sequence, a Glyceraldehyde-3-Phosphate Dehydrogenase Homologous Sequence, an Ubiquitin B Homologous Sequence, a Juvenile Hormone Esterase Homolog, and an Alpha Tubuliln Homologous Sequence.

Molecule F1 may be used with seeds having such traits and not having such traits.

Formula One may be applied to the foliar and/or fruiting portions of plants to control pests. Either such molecules will come in direct contact with the pest, or the pest will consume such molecules when eating the plant or while extracting sap or other nutrients from the plant.

Formula One may also be applied to the soil, and when applied in this manner, root and stem feeding pests may be controlled. The roots may absorb such molecules thereby taking it up into the foliar portions of the plant to control above ground chewing and sap feeding pests.

Systemic movement of pesticides in plants may be utilized to control pests on one portion of the plant by applying (for example by spraying a locus) a molecule of Formula One to a different portion of the plant. For example, control of foliar-feeding insects may be achieved by drip irrigation or furrow application, by treating the soil with for example pre- or post-planting soil drench, or by treating the seeds of a plant before planting.

Formula One may be used with baits and attractant. Generally, with baits, the baits are placed in the ground where, for example, termites can come into contact with, and/or be attracted to, the bait. Baits can also be applied to a surface of a building, (horizontal, vertical, or slant surface) where, for example, ants, termites, cockroaches, and flies, can come into contact with, and/or be attracted to, the bait.

Formula One may be encapsulated inside, or placed on the surface of a capsule. The size of the capsules can range from nanometer size (about 100-900 nanometers in diameter) to micrometer size (about 10-900 microns in diameter).

Formula One may be applied to eggs of pests. Because of the unique ability of the eggs of some pests to resist certain pesticides, repeated applications of such molecules may be desirable to control newly emerged larvae.

Formula One may be applied as seed treatments. Seed treatments may be applied to all types of seeds, including those from which plants genetically modified to express specialized traits will germinate. Representative examples include those expressing proteins toxic to invertebrate pests, such as *Bacillus thuringiensis* or other insecticidal toxins, those expressing herbicide tolerance, such as "Roundup Ready" seed, or those with "stacked" foreign genes expressing insecticidal toxins, herbicide tolerance, nutrition-enhancement, drought tolerance, or any other beneficial traits. Furthermore, such seed treatments with Formula One may further enhance the ability of a plant to withstand stressful growing conditions better. This results in a healthier, more vigorous plant, which can lead to higher yields at harvest time. Generally, about 0.0025 mg of Formula One per seed to about 2.0 mg of Formula One per seed is useful, amounts of about 0.01 mg of Formula One per seed to about 1.75 mg of Formula One per seed is useful, amounts of 0.1 mg of Formula One per seed to about 1.5 mg of Formula One per seed is useful, amounts of 0.25 mg of Formula One per seed to about 0.75 mg of Formula One per seed is useful. In general, an amount of about 0.5 mg of Formula One per seed in useful.

Formula One may be applied with one or more active ingredients in a soil amendment.

Formula One may be used for controlling endoparasites and ectoparasites in the veterinary medicine sector or in the field of non-human-animal keeping. Such molecules may be applied by oral administration in the form of, for example, tablets, capsules, drinks, granules, by dermal application in the form of, for example, dipping, spraying, pouring on, spotting on, and dusting, and by parenteral administration in the form of, for example, an injection.

Formula One may also be employed advantageously in livestock keeping, for example, cattle, chickens, geese, goats, pigs, sheep, and turkeys. They may also be employed advantageously in pets such as, horses, dogs, and cats. Particular pests to control would be flies, fleas, and ticks that are bothersome to such animals. Suitable formulations are administered orally to the animals with the drinking water or feed. The dosages and formulations that are suitable depend on the species.

Formula One may also be used for controlling parasitic worms, especially of the intestine, in the animals listed above.

Formula One may also be applied to invasive pests. Pests around the world have been migrating to new environments (for such pest) and thereafter becoming a new invasive species in such new environment. Such molecules may also be used on such new invasive species to control them in such new environments.

Plant viruses cause an estimated US$60 billion loss in crop yields worldwide each year. Many plant viruses need to be transmitted by a vector, most often insects, examples of which are leafhoppers and plant hoppers. However, nematodes also have been shown to transmit viruses. Nematodes transmit plant viruses by feeding on roots. Formula One may also be applied to a plant in order to inhibit pests that carry plant virus so that this reduces the chance that such plant viruses are transmitted from the pest to the plant.

Consequently, in light of the above the following additional, non-exhaustive, **details (D)** are provided.

1D. A composition comprising

(a) a molecule of Formula One (F1)

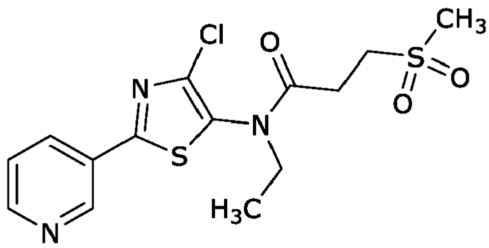

**Formula One also known as F1**,

and (b) a second active ingredient ("**2AI**").

2D. A composition according to 1D wherein said 2AI is abamectin.
3D. A composition according to 1D wherein said 2AI is acephate.
4D. A composition according to 1D wherein said 2AI is acetamiprid.
5D. A composition according to 1D wherein said 2AI is acequinocyl.
6D. A composition according to 1D wherein said 2AI is acrinathrin.
7D. A composition according to 1D wherein said 2AI is afidopyropen.
8D. A composition according to 1D wherein said 2AI is afoxolaner.

9D. A composition according to 1D wherein said 2AI is allethrin.
10D. A composition according to 1D wherein said 2AI is allicin.
11D. A composition according to 1D wherein said 2AI is allosamidin.
12D. A composition according to 1D wherein said 2AI is alpha-cypermethrin.
13D. A composition according to 1D wherein said 2AI is amitraz.
14D. A composition according to 1D wherein said 2AI is anabasine.
15D. A composition according to 1D wherein said 2AI is azadirachtin.
16D. A composition according to 1D wherein said 2AI is azinphos-methyl.
17D. A composition according to 1D wherein said 2AI is barthrin.
18D. A composition according to 1D wherein said 2AI is benclothiaz.
19D. A composition according to 1D wherein said 2AI is benfuracarb.
20D. A composition according to 1D wherein said 2AI is bensultap.
21D. A composition according to 1D wherein said 2AI is benzoximate.
22D. A composition according to 1D wherein said 2AI is benzpyrimoxan.
23D. A composition according to 1D wherein said 2AI is beta-cyfluthrin.
24D. A composition according to 1D wherein said 2AI is beta-cypermethrin.
25D. A composition according to 1D wherein said 2AI is bifenazate.
26D. A composition according to 1D wherein said 2AI is bifenthrin.
27D. A composition according to 1D wherein said 2AI is bioallethrin S-cyclopentenyl.
28D. A composition according to 1D wherein said 2AI is bioallethrin.
29D. A composition according to 1D wherein said 2AI is bioethanomethrin.
30D. A composition according to 1D wherein said 2AI is biopermethrin.
31D. A composition according to 1D wherein said 2AI is bioresmethrin.
32D. A composition according to 1D wherein said 2AI is bistrifluron.
33D. A composition according to 1D wherein said 2AI is brofenvalerate.
34D. A composition according to 1D wherein said 2AI is broflanilide.
35D. A composition according to 1D wherein said 2AI is brofluthrinate.
36D. A composition according to 1D wherein said 2AI is bromethrin.
37D. A composition according to 1D wherein said 2AI is bromopropylate.
38D. A composition according to 1D wherein said 2AI is buprofezin.
39D. A composition according to 1D wherein said 2AI is carbaryl.
40D. A composition according to 1D wherein said 2AI is carbofuran.
41D. A composition according to 1D wherein said 2AI is cartap.
42D. A composition according to 1D wherein said 2AI is chinomethionat.
43D. A composition according to 1D wherein said 2AI is chlorantraniliprole.
44D. A composition according to 1D wherein said 2AI is chlorbenzuron.
45D. A composition according to 1D wherein said 2AI is chlordimeform.
46D. A composition according to 1D wherein said 2AI is chlorempenthrin.
47D. A composition according to 1D wherein said 2AI is chlorfenapyr.
48D. A composition according to 1D wherein said 2AI is chlorfenvinphos.
49D. A composition according to 1D wherein said 2AI is chlorfluazuron.
50D. A composition according to 1D wherein said 2AI is chlorpyrifos.
51D. A composition according to 1D wherein said 2AI is chlorpyrifos-methyl.
52D. A composition according to 1D wherein said 2AI is chromafenozide.
53D. A composition according to 1D wherein said 2AI is cinerins.
54D. A composition according to 1D wherein said 2AI is cismethrin.
55D. A composition according to 1D wherein said 2AI is clofentezine.
56D. A composition according to 1D wherein said 2AI is closantel.
57D. A composition according to 1D wherein said 2AI is clothianidin.
58D. A composition according to 1D wherein said 2AI is copper oleate.
59D. A composition according to 1D wherein said 2AI is crotamiton.
60D. A composition according to 1D wherein said 2AI is cryolite.
61D. A composition according to 1D wherein said 2AI is cyantraniliprole.
62D. A composition according to 1D wherein said 2AI is cyclaniliprole.
63D. A composition according to 1D wherein said 2AI is cyclethrin.
64D. A composition according to 1D wherein said 2AI is cyclobutrifluram.
65D. A composition according to 1D wherein said 2AI is cycloprothrin.
66D. A composition according to 1D wherein said 2AI is cycloxaprid.

67D. A composition according to 1D wherein said 2AI is cyenopyrafen.
68D. A composition according to 1D wherein said 2AI is cyflumetofen.
69D. A composition according to 1D wherein said 2AI is cyfluthrin.
70D. A composition according to 1D wherein said 2AI is cyhalodiamide.
71D. A composition according to 1D wherein said 2AI is cyhalothrin.
72D. A composition according to 1D wherein said 2AI is cyhexatin.
73D. A composition according to 1D wherein said 2AI is cypermethrin.
74D. A composition according to 1D wherein said 2AI is cyphenothrin.
75D. A composition according to 1D wherein said 2AI is cyphenothrin[(1R)-*trans*-isomers].
76D. A composition according to 1D wherein said 2AI is cyromazine.
77D. A composition according to 1D wherein said 2AI is dayoutong.
78D. A composition according to 1D wherein said 2AI is dazomet.
79D. A composition according to 1D wherein said 2AI is DBCP.
80D. A composition according to 1D wherein said 2AI is DCIP.
81D. A composition according to 1D wherein said 2AI is *d-cis-trans* allethrin.
82D. A composition according to 1D wherein said 2AI is deltamethrin.
83D. A composition according to 1D wherein said 2AI is demeton-S.
84D. A composition according to 1D wherein said 2AI is DFDT.
85D. A composition according to 1D wherein said 2AI is diafenthiuron.
86D. A composition according to 1D wherein said 2AI is diazinon.
87D. A composition according to 1D wherein said 2AI is dichlorvos.
88D. A composition according to 1D wherein said 2AI is dicloromezotiaz.
89D. A composition according to 1D wherein said 2AI is dicofol.
90D. A composition according to 1D wherein said 2AI is dicyclanil.
91D. A composition according to 1D wherein said 2AI is diflovidazin.
92D. A composition according to 1D wherein said 2AI is diflubenzuron.
93D. A composition according to 1D wherein said 2AI is dimefluthrin.
94D. A composition according to 1D wherein said 2AI is dimethoate.
95D. A composition according to 1D wherein said 2AI is dimpropyridaz.
96D. A composition according to 1D wherein said 2AI is dinex.
97D. A composition according to 1D wherein said 2AI is dinoprop.
98D. A composition according to 1D wherein said 2AI is dinosam.
99D. A composition according to 1D wherein said 2AI is dinotefuran.
100D. A composition according to 1D wherein said 2AI is diofenolan.
101D. A composition according to 1D wherein said 2AI is *d*-limonene.
102D. A composition according to 1D wherein said 2AI is DNOC.
103D. A composition according to 1D wherein said 2AI is doramectin.
104D. A composition according to 1D wherein said 2AI is d-trans-allethrin.
105D. A composition according to 1D wherein said 2AI is ecdysterone.
106D. A composition according to 1D wherein said 2AI is emamectin benzoate.
107D. A composition according to 1D wherein said 2AI is emamectin.
108D. A composition according to 1D wherein said 2AI is empenthrin.
109D. A composition according to 1D wherein said 2AI is empenthrin[(*EZ*)-(1*R*)-isomers].
110D. A composition according to 1D wherein said 2AI is endosulfan.
111D. A composition according to 1D wherein said 2AI is epofenonane.
112D. A composition according to 1D wherein said 2AI is eprinomectin.
113D. A composition according to 1D wherein said 2AI is epsilon-metofluthrin.
114D. A composition according to 1D wherein said 2AI is epsilon-momfluorothrin.
115D. A composition according to 1D wherein said 2AI is esfenvalerate.
116D. A composition according to 1D wherein said 2AI is ethion.
117D. A composition according to 1D wherein said 2AI is ethiprole.
118D. A composition according to 1D wherein said 2AI is ethylene dibromide.
119D. A composition according to 1D wherein said 2AI is etofenprox.
120D. A composition according to 1D wherein said 2AI is etoxazole.
121D. A composition according to 1D wherein said 2AI is EXD.
122D. A composition according to 1D wherein said 2AI is fenamiphos.
123D. A composition according to 1D wherein said 2AI is fenazaquin.
124D. A composition according to 1D wherein said 2AI is fenbutatin oxide.

125D. A composition according to 1D wherein said 2AI is fenitrothion.
126D. A composition according to 1D wherein said 2AI is fenobucarb.
127D. A composition according to 1D wherein said 2AI is fenoxycarb.
128D. A composition according to 1D wherein said 2AI is fenpirithrin.
129D. A composition according to 1D wherein said 2AI is fenpropathrin.
130D. A composition according to 1D wherein said 2AI is fenpyroximate.
131D. A composition according to 1D wherein said 2AI is fenvalerate.
132D. A composition according to 1D wherein said 2AI is fipronil.
133D. A composition according to 1D wherein said 2AI is flometoquin.
134D. A composition according to 1D wherein said 2AI is flonicamid.
135D. A composition according to 1D wherein said 2AI is fluacrypyrim.
136D. A composition according to 1D wherein said 2AI is fluazaindolizine.
137D. A composition according to 1D wherein said 2AI is flubendiamide.
138D. A composition according to 1D wherein said 2AI is flucofuron.
139D. A composition according to 1D wherein said 2AI is flucycloxuron.
140D. A composition according to 1D wherein said 2AI is flucythrinate.
141D. A composition according to 1D wherein said 2AI is fluensulfone.
142D. A composition according to 1D wherein said 2AI is flufenerim.
143D. A composition according to 1D wherein said 2AI is flufenoxuron.
144D. A composition according to 1D wherein said 2AI is flufenprox.
145D. A composition according to 1D wherein said 2AI is flufiprole.
146D. A composition according to 1D wherein said 2AI is fluhexafon.
147D. A composition according to 1D wherein said 2AI is flumethrin.
148D. A composition according to 1D wherein said 2AI is flupyradifurone.
149D. A composition according to 1D wherein said 2AI is flupyrimin.
150D. A composition according to 1D wherein said 2AI is fluralaner.
151D. A composition according to 1D wherein said 2AI is flursulamid.
152D. A composition according to 1D wherein said 2AI is fluvalinate.
153D. A composition according to 1D wherein said 2AI is fluxametamide.
154D. A composition according to 1D wherein said 2AI is formetanate.
155D. A composition according to 1D wherein said 2AI is formparanate.
156D. A composition according to 1D wherein said 2AI is fosthiazate.
157D. A composition according to 1D wherein said 2AI is furamethrin.
158D. A composition according to 1D wherein said 2AI is furan tebufenozide.
159D. A composition according to 1D wherein said 2AI is furethrin.
160D. A composition according to 1D wherein said 2AI is furfural.
161D. A composition according to 1D wherein said 2AI is gamma-cyhalothrin.
162D. A composition according to 1D wherein said 2AI is halfenprox.
163D. A composition according to 1D wherein said 2AI is halofenozide.
164D. A composition according to 1D wherein said 2AI is heptafluthrin.
165D. A composition according to 1D wherein said 2AI is hexaflumuron.
166D. A composition according to 1D wherein said 2AI is hexythiazox.
167D. A composition according to 1D wherein said 2AI is hydramethylnon.
168D. A composition according to 1D wherein said 2AI is hydroprene.
169D. A composition according to 1D wherein said 2AI is imicyafos.
170D. A composition according to 1D wherein said 2AI is imidacloprid.
171D. A composition according to 1D wherein said 2AI is imidaclothiz.
172D. A composition according to 1D wherein said 2AI is imiprothrin.
173D. A composition according to 1D wherein said 2AI is indoxacarb.
174D. A composition according to 1D wherein said 2AI is isamidofos.
175D. A composition according to 1D wherein said 2AI is isocycloseram.
176D. A composition according to 1D wherein said 2AI is isoprocarb.
177D. A composition according to 1D wherein said 2AI is isoprothiolane.
178D. A composition according to 1D wherein said 2AI is isoxathion.
179D. A composition according to 1D wherein said 2AI is ivermectin.
180D. A composition according to 1D wherein said 2AI is jasmolin I.
181D. A composition according to 1D wherein said 2AI is jasmolin II.
182D. A composition according to 1D wherein said 2AI is jiahuangchongzong.

183D. A composition according to 1D wherein said 2AI is juvenile hormone I.
184D. A composition according to 1D wherein said 2AI is juvenile hormone II.
185D. A composition according to 1D wherein said 2AI is juvenile hormone III.
186D. A composition according to 1D wherein said 2AI is kadathrin.
187D. A composition according to 1D wherein said 2AI is kadethrin.
188D. A composition according to 1D wherein said 2AI is kappa-bifenthrin.
189D. A composition according to 1D wherein said 2AI is kappa-tefluthrin.
190D. A composition according to 1D wherein said 2AI is kinoprene.
191D. A composition according to 1D wherein said 2AI is lambda-cyhalothrin.
192D. A composition according to 1D wherein said 2AI is lepimectin.
193D. A composition according to 1D wherein said 2AI is lotilaner.
194D. A composition according to 1D wherein said 2AI is lufenuron.
195D. A composition according to 1D wherein said 2AI is malathion.
196D. A composition according to 1D wherein said 2AI is maltodextrin.
197D. A composition according to 1D wherein said 2AI is matrine.
198D. A composition according to 1D wherein said 2AI is medimeform.
199D. A composition according to 1D wherein said 2AI is metaflumizone.
200D. A composition according to 1D wherein said 2AI is metaldehyde.
201D. A composition according to 1D wherein said 2AI is methamidophos.
202D. A composition according to 1D wherein said 2AI is methidathion.
203D. A composition according to 1D wherein said 2AI is methomyl.
204D. A composition according to 1D wherein said 2AI is methoxyfenozide.
205D. A composition according to 1D wherein said 2AI is methyl isothiocyanate.
206D. A composition according to 1D wherein said 2AI is metofluthrin.
207D. A composition according to 1D wherein said 2AI is metoxadiazone.
208D. A composition according to 1D wherein said 2AI is milbemectin.
209D. A composition according to 1D wherein said 2AI is milbemycin oxime.
210D. A composition according to 1D wherein said 2AI is monocrotophos.
211D. A composition according to 1D wherein said 2AI is moxidectin.
212D. A composition according to 1D wherein said 2AI is niclosamide.
213D. A composition according to 1D wherein said 2AI is nifluridide.
214D. A composition according to 1D wherein said 2AI is nitenpyram.
215D. A composition according to 1D wherein said 2AI is nithiazine.
216D. A composition according to 1D wherein said 2AI is nornicotine.
217D. A composition according to 1D wherein said 2AI is novaluron.
218D. A composition according to 1D wherein said 2AI is noviflumuron.
219D. A composition according to 1D wherein said 2AI is omethoate.
220D. A composition according to 1D wherein said 2AI is oxamyl.
221D. A composition according to 1D wherein said 2AI is oxazosulfyl.
222D. A composition according to 1D wherein said 2AI is oxydemeton-methyl.
223D. A composition according to 1D wherein said 2AI is parathion.
224D. A composition according to 1D wherein said 2AI is parathion-methyl.
225D. A composition according to 1D wherein said 2AI is permethrin.
226D. A composition according to 1D wherein said 2AI is phorate.
227D. A composition according to 1D wherein said 2AI is phosphamidon.
228D. A composition according to 1D wherein said 2AI is pirimicarb.
229D. A composition according to 1D wherein said 2AI is pirimiphos-ethyl.
230D. A composition according to 1D wherein said 2AI is pirimiphos-methyl.
231D. A composition according to 1D wherein said 2AI is precocene I.
232D. A composition according to 1D wherein said 2AI is precocene II.
233D. A composition according to 1D wherein said 2AI is precocene III.
234D. A composition according to 1D wherein said 2AI is profenofos.
235D. A composition according to 1D wherein said 2AI is propargite.
236D. A composition according to 1D wherein said 2AI is propoxur.
237D. A composition according to 1D wherein said 2AI is prothiofos.
238D. A composition according to 1D wherein said 2AI is pyflubumide.
239D. A composition according to 1D wherein said 2AI is pymetrozine.
240D. A composition according to 1D wherein said 2AI is pyraclofos.

241D. A composition according to 1D wherein said 2AI is pyrethrin I.
242D. A composition according to 1D wherein said 2AI is pyrethrin II.
243D. A composition according to 1D wherein said 2AI is pyrethrins (pyrethrum).
244D. A composition according to 1D wherein said 2AI is pyrethrins.
245D. A composition according to 1D wherein said 2AI is pyridaben.
246D. A composition according to 1D wherein said 2AI is pyridalyl.
247D. A composition according to 1D wherein said 2AI is pyrifluquinazon.
248D. A composition according to 1D wherein said 2AI is pyrimidifen.
249D. A composition according to 1D wherein said 2AI is pyriprole.
250D. A composition according to 1D wherein said 2AI is pyriproxyfen.
251D. A composition according to 1D wherein said 2AI is quinalphos.
252D. A composition according to 1D wherein said 2AI is rafoxanide.
253D. A composition according to 1D wherein said 2AI is renofluthrin.
254D. A composition according to 1D wherein said 2AI is resmethrin.
255D. A composition according to 1D wherein said 2AI is rhodojaponin-III.
256D. A composition according to 1D wherein said 2AI is rotenone.
257D. A composition according to 1D wherein said 2AI is ryania.
258D. A composition according to 1D wherein said 2AI is sabadilla.
259D. A composition according to 1D wherein said 2AI is sanguinarine.
260D. A composition according to 1D wherein said 2AI is sarolaner.
261D. A composition according to 1D wherein said 2AI is selamectin.
262D. A composition according to 1D wherein said 2AI is semiamitraz.
263D. A composition according to 1D wherein said 2AI is silafluofen.
264D. A composition according to 1D wherein said 2AI is sodium thiocyanate.
265D. A composition according to 1D wherein said 2AI is spinetoram.
266D. A composition according to 1D wherein said 2AI is spinosad.
267D. A composition according to 1D wherein said 2AI is spirodiclofen.
268D. A composition according to 1D wherein said 2AI is spiromesifen.
269D. A composition according to 1D wherein said 2AI is spiropidion.
270D. A composition according to 1D wherein said 2AI is spirotetramat.
271D. A composition according to 1D wherein said 2AI is sulcofuron.
272D. A composition according to 1D wherein said 2AI is sulfluramid.
273D. A composition according to 1D wherein said 2AI is sulfoxaflor.
274D. A composition according to 1D wherein said 2AI is sulfoxime.
275D. A composition according to 1D wherein said 2AI is tau-fluvalinate.
276D. A composition according to 1D wherein said 2AI is tebufenozide.
277D. A composition according to 1D wherein said 2AI is tebufenpyrad.
278D. A composition according to 1D wherein said 2AI is teflubenzuron.
279D. A composition according to 1D wherein said 2AI is tefluthrin.
280D. A composition according to 1D wherein said 2AI is temephos.
281D. A composition according to 1D wherein said 2AI is terbufos.
282D. A composition according to 1D wherein said 2AI is tetrachlorantraniliprole.
283D. A composition according to 1D wherein said 2AI is tetradifon.
284D. A composition according to 1D wherein said 2AI is tetramethrin.
285D. A composition according to 1D wherein said 2AI is tetramethrin[(1R)-isomers].
286D. A composition according to 1D wherein said 2AI is tetramethylfluthrin.
287D. A composition according to 1D wherein said 2AI is tetraniliprole.
288D. A composition according to 1D wherein said 2AI is theta-cypermethrin.
289D. A composition according to 1D wherein said 2AI is thiacloprid.
290D. A composition according to 1D wherein said 2AI is thiamethoxam.
291D. A composition according to 1D wherein said 2AI is thiapronil.
292D. A composition according to 1D wherein said 2AI is thiocyclam.
293D. A composition according to 1D wherein said 2AI is thiodicarb.
294D. A composition according to 1D wherein said 2AI is thiometon.
295D. A composition according to 1D wherein said 2AI is thiosultap.
296D. A composition according to 1D wherein said 2AI is thiosultap-sodium.
297D. A composition according to 1D wherein said 2AI is thuringiensin.
298D. A composition according to 1D wherein said 2AI is tioxazafen.

299D. A composition according to 1D wherein said 2AI is tirpate.
300D. A composition according to 1D wherein said 2AI is tolfenpyrad.
301D. A composition according to 1D wherein said 2AI is tralocythrin.
302D. A composition according to 1D wherein said 2AI is tralomethrin.
303D. A composition according to 1D wherein said 2AI is transfluthrin.
304D. A composition according to 1D wherein said 2AI is transpermethrin.
305D. A composition according to 1D wherein said 2AI is triarathene.
306D. A composition according to 1D wherein said 2AI is triazophos.
307D. A composition according to 1D wherein said 2AI is trichlorfon.
308D. A composition according to 1D wherein said 2AI is triflumezopyrim.
309D. A composition according to 1D wherein said 2AI is triflumuron.
310D. A composition according to 1D wherein said 2AI is triptolide.
311D. A composition according to 1D wherein said 2AI is tyclopyrazoflor.
312D. A composition according to 1D wherein said 2AI is valerate.
313D. A composition according to 1D wherein said 2AI is vaniliprole.
314D. A composition according to 1D wherein said 2AI is yishijing.
315D. A composition according to 1D wherein said 2AI is zeta-cypermethrin.
316D. A composition according to 1D wherein said 2AI is $\alpha$-ecdysone.
317D. A composition according to 1D wherein said 2AI is selected from AIGA.
318D. A composition according to 1D wherein said 2AI is selected from acaricides, algicides, antifeedants, avicides, bactericides, bird repellents, chemosterilants, fungicides, herbicide safeners, herbicides, insect attractants, insect repellents, insecticides, mammal repellents, mating disrupters, molluscicides, nematicides, plant activators, plant health stimulators or promoters, nitrification inhibitors, plant growth regulators, rodenticides, synergists, and virucides.
319D. A composition according to 1D wherein said 2AI is selected from AIGA-2.
320D. A composition according to 1D wherein said 2AI is selected from AIGA-3.
321D. A composition according to 1D wherein said 2AI is a biopesticide.
322D. A composition according to 1D wherein said 2AI is selected from Acetylcholinesterase (AChE) inhibitors.
323D. A composition according to 1D wherein said 2AI is selected from GABA-gated chloride channel blockers.
324D. A composition according to 1D wherein said 2AI is selected from Sodium channel modulators.
324D. A composition according to 1D wherein said 2AI is selected from Nicotinic acetylcholine receptor (nAChR) competitive modulators.
325D. A composition according to any of the previous details, said composition further comprising an AI selected from Nicotinic acetylcholine receptor (nAChR) allosteric modulators - Site I.
325D. A composition according to 1D wherein said 2AI is selected from Glutamate-gated chloride channel (GLUCL) allosteric modulators.
326D. A composition according to 1D wherein said 2AI is selected from Juvenile hormone mimics.
327D. A composition according to 1D wherein said 2AI is selected from Miscellaneous nonspecific (multi-site) inhibitors.
328D. A composition according to 1D wherein said 2AI is selected from Chordotonal organ TRPV channel modulators.
329D. A composition according to 1D wherein said 2AI is selected from Mite growth inhibitors.
330D. A composition according to 1D wherein said 2AI is selected from Microbial disruptors of insect midgut membranes.
331D. A composition according to 1D wherein said 2AI is selected from Inhibitors of mitochondrial ATP synthase.
332D. A composition according to 1D wherein said 2AI is selected from Uncouplers of oxidative phosphorylation via disruption of the proton gradient.
333D. A composition according to 1D wherein said 2AI is selected from Nicotinic acetylcholine receptor (nAChR) channel blockers.
334D. A composition according to 1D wherein said 2AI is selected from Inhibitors of chitin biosynthesis, type 0.
335D. A composition according to 1D wherein said 2AI is selected from Inhibitors of chitin biosynthesis, type 1.
336D. A composition according to 1D wherein said 2AI is selected from Moulting disruptor, Dipteran.
337D. A composition according to 1D wherein said 2AI is selected from Ecdysone receptor agonists.
338D. A composition according to 1D wherein said 2AI is selected from Octopamine receptor agonists.
339D. A composition according to 1D wherein said 2AI is selected from Mitochondrial complex III electron transport inhibitors.
340D. A composition according to 1D wherein said 2AI is selected from Mitochondrial complex I electron transport inhibitors.
341D. A composition according to 1D wherein said 2AI is selected from Voltage-dependent sodium channel blockers.

342D. A composition according to 1D wherein said 2AI is selected from Inhibitors of acetyl CoA carboxylase.

343D. A composition according to 1D wherein said 2AI is selected from Mitochondrial complex IV electron transport inhibitors.

345D. A composition according to 1D wherein said 2AI is selected from Mitochondrial complex II electron transport inhibitors.

346D. A composition according to 1D wherein said 2AI is selected from Ryanodine receptor modulators.

347D. A composition according to 1D wherein said 2AI is selected from Chordotonal Organ Modulators - undefined target site.

348D. A composition according to 1D wherein said 2AI is selected from GABA-Gated chloride channel allosteric modulators.

349D. A composition according to 1D wherein said 2AI is selected from Baculoviruses.

350D. A composition according to any of the previous details, said composition further comprising Nicotinic acetylcholine receptor (nAChR) allosteric modulators - Site II.

351D. A composition according to 1D wherein said 2AI is selected from Group UN.

352D. A composition according to 1D wherein said 2AI is selected from Group UNB.

353D. A composition according to 1D wherein said 2AI is selected from Group UNE.

354D. A composition according to 1D wherein said 2AI is selected from Group UNF.

355D. A composition according to 1D wherein said 2AI is selected from Group UNM.

356D. A composition according to 1D wherein said 2AI is a fungicide.

357D. A composition according to 1D wherein said 2AI is a herbicide.

358D. A seed treatment composition according to 1D wherein said 2AI is azoxystrobin, and wherein said composition may optionally comprise one or more AI(s) selected from AIGA.

359D. A seed treatment composition according to 358D wherein said one or more AI(s) are selected from fludioxonil, mefenoxam, sedaxane, fipronil, pyraclostrobin, thiophanate-methyl, fluazinam, metalaxyl-M, thiabendazole, fluopicolide, fluoxastrobin, imidacloprid, tebuconazole, metalaxyl, and thiodicarb.

360D. A seed treated with said seed treatment composition according to 358D or 359D wherein said seed may optionally be genetically modified seed.

361D. A composition according to any of the previous details wherein the weight ratio of (a) a molecule of Formula One (F1) to (b) a second active ingredient is about 1000:1 to about 1:100o or is about 100:1 to about 1:100.

362D. A composition according to any of the previous details wherein the weight ratio of (a) a molecule of Formula One (F1) to (b) a second active ingredient is about 50:1 to about 1:50.

363D. A composition according to any of the previous details wherein the weight ratio of (a) a molecule of Formula One (F1) to (b) a second active ingredient is about 20:1 to about 1:20.

364D. A composition according to any of the previous details wherein the weight ratio of (a) a molecule of Formula One (F1) to (b) a second active ingredient is about 10:1 to about 1:10.

365D. A composition according to any of the previous details wherein the weight ratio of (a) a molecule of Formula One (F1) to (b) a second active ingredient is about 5:1 to about 1:5.

366D. A composition according to any of the previous details wherein the weight ratio of (a) a molecule of Formula One (F1) to (b) a second active ingredient is about 3:1 to about 1:3.

367D. A composition according to any of the previous details wherein the weight ratio of (a) a molecule of Formula One (F1) to (b) a second active ingredient is about 2:1 to about 1:2.

368D. A composition according to any of the previous details wherein the weight ratio of (a) a molecule of Formula One (F1) to (b) a second active ingredient is about 1:1.

369D A composition according to any of the previous details wherein the weight ratio of (a) a molecule of Formula One (F1) to (b) a second active ingredient is $X:Y$; wherein $X$ is the parts by weight of (a) a molecule of Formula One (F1) and $Y$ is the parts by weight of (b) a second active ingredient; further wherein the numerical range of the parts by weight for $X$ is $0 < X \leq 100$ and the parts by weight for $Y$ is $0 < Y \leq 100$; and further wherein $X$ and $Y$ are selected from Table 4.

370D. A process to control a pest said process comprising applying to a locus a pesticidally effective amount of a composition according to any one of the previous details 1D through 369D.

371.5D A process according to detail 370D wherein said pest is *Mahanarva fimbriolata or Nilaparvata lugens* or both.

371D. A process according to detail 370D wherein said pest is selected from the group consisting of the group consisting of ants, aphids, bed bugs, beetles, bristletails, caterpillars, cockroaches, crickets, earwigs, fleas, flies, grasshoppers, grubs, leafhoppers, lice, locusts, lygus bug, maggots, mealybugs, mites, mosquitos, nematodes, planthoppers, psyllids, rootworms, sawflies, scales, silverfish, slugs, snails, spiders, springtails, stink bugs, symphylans, termites, thrips, ticks, wasps, whiteflies, whitegrubs, and wireworms.

372D. A process according to detail 370D wherein said pest is a sap-feeding pest.

373D. A process according to detail 370D wherein said pest is a chewing pest.

374D. A process according to detail 370D wherein said composition is applied to the soil.
375D. A process according to detail 370D wherein said composition is applied to the foliar portions of a plant.
376D. A process according to detail 370D wherein said locus rice, bananas, corn, coffee beans, soybean, cotton, nuts, peanuts, potato, sorghum, sugarcane, canola, tea, grape, turf, ornamentals, wheat, barley, alfalfa, tree fruits, tropical fruits, oil palm, plantation crops, or other fruits or vegetables are growing.
377D. A composition according to detail 360D, wherein said seed is a cotton seed, sunflower seed, rice seed, sugarbeet seed, oilseed rape seed, corn seed, wheat seed, barley seed, millet seed, sorghum seed, buckwheat seed, oat seed, rye seed, soybean seed, or quinoa seed.
378D. A seed treatment composition comprising

(a) a molecule of Formula One (F1)

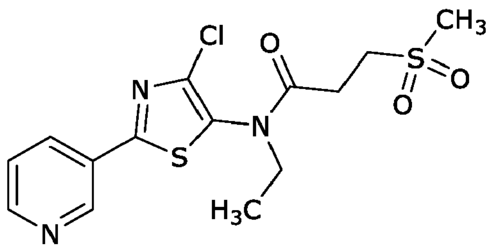

**Formula One also known as F1,**

and (b) a second active ingredient or combinations of second active ingredients ("**2AI**").

379D. A composition according to 378D wherein said **2AI** is

(1) abamectin;
(2) acibenzolar-S-methyl;
(3) azoxystrobin;
(4) a combination of azoxystrobin, fludioxonil, mefenoxam, and sedaxane;
(5) a combination of Bacillus amyloliquefaciens, and Trichoderma virens;
(6) Bacillus amyloliquefaciens MB600;
(7) Bacillus firmus I-1582;
(8) Bacillus amyloliquefaciens strain PTA-4838;
(9) Bradyrhizobium japonicum;
(10) Bradyrhizobium spp.;
(11) broflanilide;
(12) chlorantraniliprole
(13) a combination of chlorantraniliprole and fluopyram;
(14) a combination of chlorotraniliprole, oxathiapiprolin, ipconazole, and picoxystrobin;
(15) clothianidin;
(16) a combination of clothianidin, and Bacillus firmus I-1582;
(17) a combination of clothianidin, Bacillus firmus I-1582, and Bacillus thuringiensis;
(18) a combination of clothianidin, fluopicolide, and fluoxastrobin;
(19) a combination of clothianidin, penflufen, trifloxystrobin, metalaxyl;
(20) cyantraniliprole;
(21) a combination of cyantraniliprole, and thiamethoxam;
(22) difenoconazole;
(23) a combination of difenoconazole, and mefenoxam;
(24) dimethomorph;
(25) ethaboxam;
(26) fludioxonil;
(27) a combination of fludioxonil, and mefenoxam,
(28) a combination of fludioxonil, mefenoxam, azoxystrobin, and thiabendazole;
(29) a combination of fluopicolid, and fluoxastrobin;
(30) fluopyram;
(31) flupyradifurone;

(32) fluxapyroxad;
(33) imazamox;
(34) imidacloprid;
(35) a combination of imidacloprid, metalaxyl, and tebuconazole;
(36) a combination of imidacloprid, tebuconazole, metalaxyl, and fludioxonil;
(37) a combination of imidacloprid, and thiodicarb;
(38) ipconazole;
(39) a combination of ipconazole, and metalaxyl;
(40) a combination of ipconazole, metalaxyl, and imidacloprid;
(41) mefenoxam;
(42) a combination of mefenoxam, thiabendazole, and fludioxonil;
(43) mefentrifluconazole;
(44) metalaxyl;
(45) a combination of metalaxyl, fluxapyroxad, and pyraclostrobin;
(46) methiocarb;
(47) methoxyfenozide;
(48) myclobutanil;
(49) oxathiapiprolin;
(50) a combination of oxathiapiprolin, picoxystrobin, and ipconazole;
(51) picoxystrobin;
(52) a combination of prothioconazole, and metalaxyl;
(53) a combination of prothioconazole, penflufen, and metalaxyl;
(54) pyraclostrobin;
(55) a combination of pyraclostrobin, fluxapyroxad, triticonazole, and metalaxyl;
(56) sedaxane;
(57) spinetoram;
(58) spinosad;
(59) sulfoxaflor;
(60) tebuconazole;
(61) a combination of tebuconazole, prothioconazole, and metalaxyl;
(62) tefluthrin;
(63) thiamethoxam;
(64) a combination of thiamethoxam, difenoconazole, mefenoxam, fludioxonil, and sedaxane;
(65) a combination of thiamethoxam, fludioxonil, and mefenoxam;
(66) a combination of thiamethoxam, mefenoxam, and difenoconazole;
(67) thiram;
(68) tioxazafen; **OR**
(69) triflumezopyrim.

380D. A composition according to 379D wherein said **2AI** is

(1) Fenpicoxamid;
(2) Florylpicoxamid;
(3) one or more of a member of FGK-1;
(4) one or more of a member of FGK-2;
(5) FGK-3;
(6) FGK-4; **OR**
(7) any combination of 1, 2, 3, 4, 5, or 6.

**The headings in this document are for convenience only and must not be used to interpret any portion hereof.**

The **TABLE SECTION** follows. It contains Tables B1, B2, B3, B4, B5, and B6.

| Table B1 | | | | | | | |
|---|---|---|---|---|---|---|---|
| Name of AI | %F1 & %AI ($10^{-5}$) | Wt Ratio F1:AI | Average % Control F1 | Average % Control AI | Observed % Control of Mixture | Expected % Control | % Increase over Expected |
| Emamectin Benzoate | 3.125 | 1:1 | 35% | 21% | 70% | 49% | **43%** |
| Acetamiprid | 0.78 | 1:1 | 28% | 24% | 62% | 45% | **38%** |
| *Lambda* Cyhalothrin | 0.78 | 1:1 | 28% | 40% | 72% | 57% | **26%** |
| Bifenthrin | 0.78 | 1:1 | 28% | 52% | 84% | 65% | **29%** |
| Spirotetramat | 0.05 | 1:1 | 29% | 15% | 54% | 39% | **38%** |
| Methoxyfenozide | 0.195 | 1:1 | 13% | 5% | 25% | 18% | **39%** |
| Fluxametamide | 12.5 | 1:1 | 39% | 0% | 78% | 39% | **100%** |
| Ethiprole | 3.125 | 1:1 | 30% | 0% | 44% | 30% | **47%** |
| %F1 = Percent (W/V) of Formula One (F1) - where W is weight and V is volume | | | | | | | |
| %AI = Percent (W/V) of Active Ingredient (AI) - where W is weight and V is volume | | | | | | | |
| % increase =(((Observed % - Expected %)/Expected %)*100) | | | | | | | |

| TABLE B2 | | | | | | | |
|---|---|---|---|---|---|---|---|
| Name of AI | %F1 & %AI ($10^{-5}$) | Wt Ratio F1:AI | Average %Control F1 | Average %Control AI | Observed % Control of Mixture | Expected % Control | % Increase over Expected |
| Emamectin Benzoate | 0.1 | 1:1 | 9% | 0% | 46% | 9% | **411%** |
| Emamectin Benzoate | 1 | 1:1 | 8% | 5% | 77% | 13% | **492%** |
| Pyriproxyfen | 0.1 | 1:1 | 18% | 8% | 76% | 24% | **217%** |
| Acetamiprid | 1 | 1:1 | 60% | 29% | 94% | 71% | **32%** |
| *Lambda* - Cyhalothrin | 1 | 1:1 | 60% | 27% | 90% | 71% | **27%** |
| Bifenthrin | 1 | 1:1 | 8% | 40% | 82% | 45% | **82%** |
| Spinetoram | 1 | 1:1 | 8% | 41% | 82% | 45% | **82%** |
| Afidopyropen | 0.1 | 1:1 | 9% | 0% | 52% | 9% | **478%** |
| Afidopyropen | 1 | 1:1 | 8% | 0% | 79% | 8% | **888%** |
| Cyantraniliprole | 0.1 | 1:1 | 18% | 0% | 82% | 18% | **356%** |
| Oxamyl | 0.1 | 1:1 | 52% | 0% | 92% | 52% | **77%** |
| Spiromesifen | 0.1 | 1:1 | 52% | 0% | 95% | 53% | **79%** |
| Abamectin | 0.1 | 1:1 | 13% | 16% | 52% | 27% | **93%** |
| %F1 = Percent (W/V) of Formula One (F1) - where W is weight and V is volume | | | | | | | |
| %AI = Percent (W/V) of Active Ingredient (AI) - where W is weight and V is volume | | | | | | | |
| % increase =(((Observed % - Expected %)/Expected %)*100) | | | | | | | |

**TABLE B3**

| Name of AI | % F1 | % AI | Ratio F1:AI | Average % Control F1 | Average % Control AI | Observed % Control of Mixture | Expected % Control | % Increase over Expected |
|---|---|---|---|---|---|---|---|---|
| **Emamectin Benzoate** | 0.04 | 0.005 | 1:8 | 14% | 38% | 93% | 47% | **98%** |
| **Pyriproxyfen** | 0.04 | 0.00125 | 1:32 | 17% | 17% | 50% | 31% | 61% |
| **Triflumezopyrim** | 0.04 | 0.0003125 | 1:128 | 7% | 7% | 33% | 13% | **154%** |
| **Chlorantraniliprole** | 0.04 | 0.005 | 1:8 | 0% | 7% | 53% | 7% | **657%** |
| **Acetamiprid** | 0.04 | 0.0003125 | 1:128 | 13% | 13% | 33% | 25% | **32%** |
| **Lambda Cyhalothrin** | 0.04 | 0.0003125 | 1:128 | 13% | 7% | 53% | 19% | **179%** |
| **Spirotetramat** | 0.04 | 0.000078 | 1:513 | 0% | 7% | 20% | 7% | **186%** |
| **Fluxametamide** | 0.04 | 0.0003125 | 1:128 | 0% | 67% | 87% | 67% | **30%** |
| **Ethiprole** | 0.04 | 0.005 | 1:8 | 14% | 0% | 71% | 14% | **407%** |
| **Acephate** | 0.04 | 0.000078 | 1:513 | 14% | 5% | 36% | 18% | **100%** |
| **Chlorfenapyr** | 0.04 | 0.005 | 1:8 | 14% | 57% | 100% | 63% | **59%** |
| **Oxamyl** | 0.04 | 0.0003125 | 1:128 | 7% | 0% | 13% | 7% | **86%** |
| **Imidacloprid** | 0.04 | 0.0003125 | 1:128 | 7% | 0% | 13% | 7% | **86%** |
| **Thiamethoxam** | 0.04 | 0.000078 | 1:513 | 7% | 7% | 33% | 13% | **154%** |

**%F1 = Percent (W/V) of Formula One (F1) - where W is weight and V is volume**

**%AI = Percent (W/V) of Active Ingredient (AI) - where W is weight and V is volume**

**% increase =(((Observed % - Expected %)/Expected %)*100)**

**TABLE B4**

| Name of AI | % F1 | % AI | Ratio F1:AI | Average % Control F1 | Average % Control AI | Observed % Control of Mixture | Expected % Control | % Increase over Expected |
|---|---|---|---|---|---|---|---|---|
| **Spinetoram** | 0.04 | 0.005 | 1:8 | 0% | 0% | 17% | 0% | * |
| **Triflumezopyrim** | 0.04 | 0.005 | 1:8 | 0% | 9% | 45% | 9% | **400%** |
| **Acetamiprid** | 0.04 | 0.00125 | 1:32 | 11% | 0% | 78% | 11% | **609%** |
| ***Lambda* Cyhalothrin** | 0.04 | 0.000078 | 1:513 | 11% | 0% | 100% | 11% | **809%** |
| **Sulfoxaflor** | 0.04 | 0.0003125 | 1:128 | 0% | 0% | 27% | 0% | * |
| **Bifenthrin** | 0.04 | 0.00125 | 1:32 | 0% | 17% | 75% | 17% | **341%** |
| **Imidacloprid** | 0.04 | 0.00125 | 1:32 | 0% | 13% | 83% | 13% | **538%** |
| **Thiamethoxam** | 0.04 | 0.0003125 | 1:128 | 0% | 65% | 100% | 65% | **54%** |
| **Acephate** | 0.04 | 0.005 | 1:8 | 0% | 0% | 17% | 0% | * |
| **Abamectin** | 0.04 | 0.00125 | 1:32 | 0% | 0% | 17% | 0% | * |
| **%F1 = Percent (W/V) of Formula One (F1) - where W is weight and V is volume** | | | | | | | | |
| **%AI = Percent (W/V) of Active Ingredient (AI) - where W is weight and V is volume** | | | | | | | | |
| **% increase =(((Observed % - Expected %)/Expected %)*100)** | | | | | | | | |

**TABLE B5**

| Name of AI | % F1 | % AI | Ratio F1:AI | Average % Control F1 | Average % Control AI | Observed % Control of Mixture | Expected % Control | % Increase over Expected |
|---|---|---|---|---|---|---|---|---|
| **Spinetoram** | 0.04 | 0.000625 | 1:64 | 0% | 8% | 50% | 8% | **525%** |
| **Fluxametamide** | 0.04 | 0.000625 | 1:64 | 0% | 17% | 58% | 17% | **241%** |
| ***Lambda* Cyhalothrin** | 0.04 | 0.000625 | 1:64 | 0% | 8% | 50% | 8% | **525%** |
| **Sulfoxaflor** | 0.04 | 0.0025 | 1:16 | 0% | 58% | 75% | 58% | **29%** |
| **Emamectin Benzoate** | 0.04 | 0.000156 | 1:256 | 0% | 24% | 81% | 24% | **238%** |
| **Dinotefuran** | 0.04 | 0.000156 | 1:256 | 0% | 17% | 33% | 17% | **94%** |
| **Bifenthrin** | 0.04 | 0.000156 | 1:256 | 0% | 30% | 65% | 30% | **117%** |
| **Imidacloprid** | 0.04 | 0.000625 | 1:64 | 0% | 17% | 50% | 17% | **194%** |
| **Thiamethoxam** | 0.04 | 0.000156 | 1:256 | 0% | 17% | 75% | 17% | **341%** |
| **Ethiprole** | 0.04 | 0.0000391 | 1: 1023 | 0% | 0% | 67% | 8% | **738%** |
| **Acephate** | 0.04 | 0.0025 | 1:16 | 0% | 0% | 66% | 0% | * |
| **Chlorfenapyr** | 0.04 | 0.0025 | 1:16 | 0% | 8% | 25% | 8% | **213%** |
| **Abamectin** | 0.04 | 0.000625 | 1:64 | 0% | 17% | 42% | 17% | **147%** |
| **%F1 = Percent (W/V) of Formula One (F1) - where W is weight and V is volume** | | | | | | | | |
| **%AI = Percent (W/V) of Active Ingredient (AI) - where W is weight and V is volume** | | | | | | | | |
| **% increase =(((Observed % - Expected %)/Expected %)*100)** | | | | | | | | |

**TABLE B6**

| Name of AI | Species | % F1 | % AI | Ratio F1:AI | Average % Control F1 | Average % Control AI | Observed % Control of Mixture | Expected % Control | % Increase over Expected |
|---|---|---|---|---|---|---|---|---|---|
| **Afidopyropen** | DBM | 0.4 | 0.04 | 10:1 | 0% | 25% | 100% | 25% | **300%** |
| **Oxamyl** | DBM | 0.4 | 0.04 | 10:1 | 0% | 0% | 25% | 0% | * |
| **Spiromesifen** | DBM | 0.4 | 0.04 | 10:1 | 0% | 0% | 25% | 0% | * |
| **Abamectin** | BAW | 0.4 | 0 | 100:1 | 0% | 50% | 100% | 50% | **100%** |

**%F1 = Percent (W/V) of Formula One (F1) - where W is weight and V is volume**

**%AI = Percent (W/V) of Active Ingredient (AI) - where W is weight and V is volume**

**% increase =(((Observed % - Expected %)/Expected %)*100)**

## Claims

1. A seed treatment composition comprising

(a) a molecule of Formula One (F1)

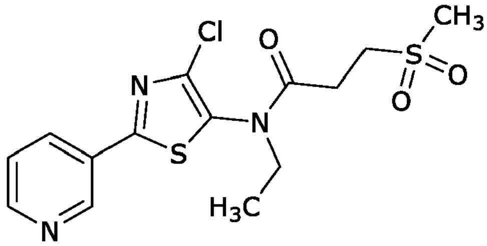

Formula One also known as F1,

and (b) a second active ingredient or combinations of second active ingredients ("**2AI**").

2. A composition according to claim 1, wherein said **2AI** is

(a) abamectin;
(b) acibenzolar-S-methyl;
(c) azoxystrobin;
(d) a combination of azoxystrobin, fludioxonil, mefenoxam, and sedaxane;
(e) a combination of Bacillus amyloliquefaciens, and Trichoderma virens;
(f) Bacillus amyloliquefaciens MB600;
(g) Bacillus firmus I-1582;
(h) Bacillus amyloliquefaciens strain PTA-4838;
(i) Bradyrhizobium japonicum;
(j) Bradyrhizobium spp.;
(k) broflanilide;
(l) chlorantraniliprole
(m) a combination of chlorantraniliprole and fluopyram;
(n) a combination of chlorotraniliprole, oxathiapiprolin, ipconazole, and picoxystrobin;
(o) clothianidin;
(p) a combination of clothianidin, and Bacillus firmus I-1582;
(q) a combination of clothianidin, Bacillus firmus I-1582, and Bacillus thuringiensis;
(r) a combination of clothianidin, fluopicolide, and fluoxastrobin;
(s) a combination of clothianidin, penflufen, trifloxystrobin, metalaxyl;
(t) cyantraniliprole;
(u) a combination of cyantraniliprole, and thiamethoxam;
(v) difenoconazole;
(w) a combination of difenoconazole, and mefenoxam;
(x) dimethomorph;
(y) ethaboxam;
(z) fludioxonil;
(aa) a combination of fludioxonil, and mefenoxam,
(bb) a combination of fludioxonil, mefenoxam, azoxystrobin, and thiabendazole;
(cc) a combination of fluopicolid, and fluoxastrobin;
(dd) fluopyram;
(ee) flupyradifurone;
(ff) fluxapyroxad;
(gg) imazamox;
(hh) imidacloprid;
(ii) a combination of imidacloprid, metalaxyl, and tebuconazole;
(jj) a combination of imidacloprid, tebuconazole, metalaxyl, and fludioxonil;
(kk) a combination of imidacloprid, and thiodicarb;

(ll) ipconazole;
(mm) a combination of ipconazole, and metalaxyl;
(nn) a combination of ipconazole, metalaxyl, and imidacloprid;
(oo) mefenoxam;
(pp) a combination of mefenoxam, thiabendazole, and fludioxonil;
(qq) mefentrifluconazole;
(rr) metalaxyl;
(ss) a combination of metalaxyl, fluxapyroxad, and pyraclostrobin;
(tt) methiocarb;
(uu) methoxyfenozide;
(vv) myclobutanil;
(ww) oxathiapiprolin;
(xx) a combination of oxathiapiprolin, picoxystrobin, and ipconazole;
(yy) picoxystrobin;
(zz) a combination of prothioconazole, and metalaxyl;
(aaa) a combination of prothioconazole, penflufen, and metalaxyl;
(bbb) pyraclostrobin;
(ccc) a combination of pyraclostrobin, fluxapyroxad, triticonazole, and metalaxyl;
(ddd) sedaxane;
(eee) spinetoram;
(fff) spinosad;
(ggg) sulfoxaflor;
(hhh) tebuconazole;
(iii) a combination of tebuconazole, prothioconazole, and metalaxyl;
(jjj) tefluthrin;
(lll) thiamethoxam;
(mmm) a combination of thiamethoxam, difenoconazole, mefenoxam, fludioxonil, and sedaxane;
(nnn) a combination of thiamethoxam, fludioxonil, and mefenoxam;
(ooo) a combination of thiamethoxam, mefenoxam, and difenoconazole;
(ppp) thiram;
(qqq) tioxazafen; or
(rrr) triflumezopyrim.

**3.** A composition according to claim 1, wherein said **2AI** is

(sss) Fenpicoxamid;
(ttt) Florylpicoxamid;
(uuu) one or more of (R)-flutriafol, (R)-hexaconazole, (S)-flutriafol, (S)-hexaconazole, 10,10'-oxybisphenoxarsine, 2-(thiocyanomethylthio)benzothiazole, 2,2-dibromo-3-nitrilopropionamide, 2,4,5-trichlorophenol, 2,4-dimethylphenol, 2,5-dichlorobenzoic acid methyl ester, 2,6-dichloro-N-((4-(trifluoromethyl)phenyl)methyl-benzamide, 24-epibrassinolide, 2-allyphenol, 2-aminobutane, 2-methoxyethylmercury acetate, 2-methoxyethylmercury chloride, 2-phenylphenol, 8-hydroxyquinoline, acibenzolar-S-methyl, aldimorph, ametoctradin, amisulbrom, ammonium acetate, ammonium carbonate, ampropylfos, anilazine, anthracene oil, asomate, azaconazole, azithiram, azoxystrobin, barium polysulphide, benalaxyl, benalaxyl-M, benodanil, benomyl, benquinox, bentaluron, benthiavalicarb, benthiavalicarb isopropyl, benzalkonium chloride, benzamacril, benzamacril isobutyl, benzamorf, benzoic acid, benzovindiflupyr, bethoxazin, binapacryl, biphenyl, bis(methylmercury) sulphate, bismerthiazol, bis-trichloromethyl sulfone, bitertanol, bithionol, bixafen, Bordeaux mixture, boric acid, boscalid, bromuconazole, bronopol, bupirimate, buthiobate, calcium carbonate, calcium chloride, calcium cyanamide, calcium hydroxide, calcium phosphate, captafol, captan, carbamorph, carbendazim, carboxin, carpropamid, chinomethionat, chlobenthiazone, chloraniformethan, chloranil, chlordecone, chlorfenazole, chloroneb, chlorothalonil, chloroxylenol, chlorquinox, chlozolinate, cis-propiconazole, climbazole, copper (1) oxide, copper abietate, copper bis(3-phenylsalicylate), copper II acetate, copper II carbonate, copper II chloride, copper II hydroxide, copper naphthenate, copper oxychloride, copper sulphate, COS-OGA, coumethoxystrobin, coumoxystrobin, cufraneb, cuprobam, cyazofamid, cycloheximide, cyflufenamid, cymoxanil, cypendazole, cyproconazole, cyprodinil, cyprofuram, dazomet, D-D, debacarb, decafentin, dehydroacetic acid, diammonium ethylenebis(dithiocarbamate), dibromochloropropane, dichlobentiazox, dichlofluanid, dichlone, dichlorophen, diclobutrazol, diclocymet, diclomezine, dicloran, didecyldimethylammonium chloride, diethofencarb, difenoconazole, difenzoquat, difenzoquat metilsulfate, diflumetorim, dimetachlone, dimethirimol, dimethomorph, dimethyl disulfide, dimoxystrobin, diniconazole, diniconazole-M, dinobuton, dinocap, dinocton, dinopenton, dinosulfon, diphenylamine, dipymetitrone, dipyrithione, disodium octaborate tetrahydrate, disodium phosphonate, ditalimfos, dithianon, DNOC, dodemorph, dodemorph acetate, dodine, drazoxolon, edifenphos, enoxastrobin, epoxiconazole, etaconazole, etem, ethaboxam, ethirimol, ethoxyquin, ethylene bisisothiocyanate sulphide, ethylicin, ethylmercury bromide, etridiazole, famoxadone, fenamidone, fenaminosulf, fenaminstrobin, fenapanil, fenarimol, fenbuconazole, fenfuram, fenhexamid, fenitropan, fenoxanil, fenpiclonil, fenpicoxamid, fenpropidin, fenpropimorph, fenpyrazamine, fentin acetate, fentin chloride, fentin hydroxide, ferbam, florylpicoxamid, fluazinam, flubeneteram, flubenzimine, fludioxonil, flufenoxystrobin, flumorph, fluopicolide, fluopimomide, fluopyram, fluoroimide, fluotrimazole, fluoxapiprolin, fluoxastrobin, fluquinconazole, flusilazole, flusulfamide, flutianil, flutolanil, flutriafol, fluxapyroxad, folpet, formaldehyde, fosetyl, fosetyl-aluminium, fuberidazole, furalaxyl, furalaxyl-M, furametpyr, furconazole, furconazole-cis, furfural, furmecyclox, furyloxyfen, Gliotoxin, Glutaraldehyde, Glyodin, Griseofulvin, Guazatine, Halacrinate, Hexachlorobenzene, Hexachlorophene, Hexaconazole, Hexylthiofos, Huanjunzuo, Hydrogen peroxide, Hymexazol, imazalil, imibenconazole, iminoctadine, iminoctadine triacetate, iminoctadine tris(albesilate), inezin, ipconazole, ipfentrifluconazole, ipflufenoquin, iprobenfos, iprodione, iprovalicarb, isobutyric acid, isofetamid, isoflucypram, isopamphos, isoprothiolane, isopyrazam, isotianil, izopamfos, kresoxim-methyl, lime sulphur, mancopper, mancozeb, mandestrobin, mandipropamid, maneb, mebenil, mecarbinzid, mefentrifluconazole, mepanipyrim, mepronil, meptyldinocap, mercuric oxide, mercurous chloride, metalaxyl, metalaxyl-M, metam-potassium, metam-sodium, metazoxolon, metconazole, methasulfocarb, methfuroxam, methyl isothiocyanate, methylarsenic sulphide, methylene bisthiocyanate, metiram, metominostrobin, metrafenone, metsulfovax, metyltetraprole, mucochloric anhydride, myclobutanil, myclozolin, N-(3-chloro-2,6-dimethylphenyl)-2-methoxy-N-(tetrahydr-2-oxo-3-furanyl)acetamide, nabam, nickel bis(dimethyldithiocarbamate), niclosamide, nitrothal isopropyl, nuarimol, octhilinone, ofurace, orysastrobin, oxadixyl, oxathiapiprolin, oxazosulfyl, oxine-copper, oxpoconazole fumarate, oxycarboxin, paclobutrazol, paraffin oil (C11-C25) (4a), paraffin oil (C11-C30) (4c), paraffin oil (C15-C30) (4b), parinol, penconazole, pencycuron, penflufen, pentachlorophenol, penthiopyrad, peroxyacetic acid, phenyl mercuric acetate, phenylmercury chloride, phenylmercury nitrate, phosdiphen, phthalide, picarbutrazox, picoxystrobin, piperalin, potassium bicarbonate, potassium iodide, potassium phosphonates, potassium thiocyanate, probenazole, prochloraz, procymidone, propamidine, propamocarb, propamocarb hydrochloride, propiconazole, propineb, propionic acid, proquinazid, prothiocarb, prothioconazole, pydiflumetofen, pyracarbolid, pyraclostrobin, pyrametostrobin, pyraoxystrobin, pyrapropoyne, pyraziflumid, pyrazophos, pyribencarb, pyridachlometyl, pyridinitril, pyrifenox, pyrimethanil, pyrimorph, pyriofenone, pyrisoxazole, pyroquilone, quinofumelin, quinoxyfen, quintozene, saisentong, sedaxane, silthiofam, simeconazole, sodium arsenite, sodium carbonate, sodium hydrogen carbonate, sodium hypochlorite, sodium tetraborate pentahydrate, spiropidion, spiroxamine, sulfuryl fluoride, sulphur, tebuconazole, tebufloquin, tecloftalam, tecnazene, tetraconazole, thiabendazole, thicyofen, thifluzamide, thiomersal, thiophanate, thiophanate-methyl, thioquinox, thiram, tiadinil, tolclofos-methyl, tolfenpyrad, tolprocarb, tolylfluanid, trans-propiconazole, triadimefon, triadimenol, triamiphos, triazoxide, tributyltin oxide, trichlamide, triclopyricarb, tricyclazole, tridemorph, trifloxystrobin, triflumizole, triforine, trioxymethylene, triticonazole, urea, valifenalate, vinclozolin, zarilamid, zinc borate, zinc oxide, zineb, ziram, and zoxamide;

(vvv) one or more of azoxystrobin, benomyl, benzovindiflupyr, bixafen, carbendazim, chlorothalonil, cymoxanil, cyproconazole, dichlobentiazox, difenoconazole, ethaboxam, famoxadone, fenbuconazole, fluopyram, fluindapyr, fludioxonil, folpet, inpyrfluxam, ipconazole, ipfentrifluconazole, isoflucypram, mancozeb, maneb, mefentrifluconazole, meptyldinocap, metalaxyl, and metalaxyl-M (mefenoxam), oxathiapiprolin, penflufen, picoxystrobin, prochloraz, proquinazid, prothioconazole, pyraclostrobin, quinoxyfen, sedaxane, thiabendazole, thiram, tricyclazole, and trifloxystrobin;

(www)

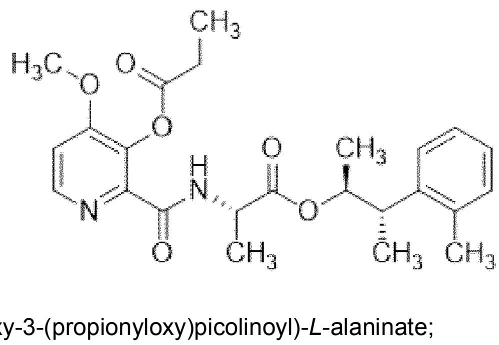

(2*S*,3*S*)-3-(*o*-tolyl)butan-2-yl (4-methoxy-3-(propionyloxy)picolinoyl)-*L*-alaninate;

(xxx)

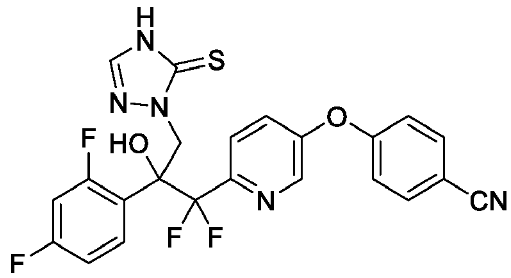

**4-((6-(2-(2,4-difluorophenyl)-1,1-difluoro-2-hydroxy-3-(5-thioxo-4,5-dihydro-1*H*-1,2,4-triazol-1-yl)propyl)pyridin-3-yl)oxy)benzonitrile ;**

or

(yyy) any combination of sss, ttt, uuu, vvv, www, or xxx.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63134734
- US 63090467
- US 62969829
- WO 2019173665 A
- WO 2016187201 A
- WO 2010129497 A1
- WO 199925821 A
- WO 199925854 A
- WO 199925840 A
- WO 199925855 A
- WO 199925853 A
- US 5188960 A
- US 5689052 A
- US 5880275 A
- US 5986177 A
- US 6023013 A
- US 6060594 A
- US 6063597 A
- US 6077824 A
- US 6620988 A
- US 6642030 A
- US 6713259 A
- US 6893826 A
- US 7105332 A
- US 7179965 A
- US 7208474 A
- US 7227056 A
- US 7288643 A
- US 7323556 A
- US 7329736 A
- US 7449552 A
- US 7468278 A
- US 7510878 A
- US 7521235 A
- US 7544862 A
- US 7605304 A
- US 7696412 A
- US 7629504 A
- US 7705216 A
- US 7772465 A
- US 7790846 A
- US 7858849 A
- WO 199114778 A
- WO 199931248 A
- WO 200112731 A
- WO 199924581 A
- WO 199740162 A
- US 6048838 A
- US 6379946 B
- US 9688730 B
- US 9475847 B
- US 10006045 B
- WO 2016114973 A
- WO 2018075350 A
- WO 2018084936 A
- US 20160366891 A
- US 20170166921 A
- WO 2018232072 A
- US 20160347799 A
- US 20170233440 A
- WO 201723486 A
- WO 2017105987 A
- WO 2017192560 A
- WO 2018111551 A
- WO 2018005411 A
- WO 2018118811 A
- WO 2018208882 A
- US 7858849 B
- US 8304604 B
- US 8304605 B
- US 525318
- US 6033874 A
- US 6218188 B
- US 7070982 B
- US 6962705 B
- US 6713063 B
- US 7064249 B
- US 20100017914
- US 7329736 B
- US 7449552 B
- US 7803943 B
- US 7476781 B
- US 7105332 B
- US 7378499 B
- US 7462760 B
- US 6127180 A
- US 6624145 B
- US 6340593 B
- US 6248535 B
- US 6326351 B
- US 6399330 B
- US 6949626 B
- US 7385107 B
- US 7504229 B
- US 20060191034 A
- US 20120278954 A
- WO 2012139004 A
- US 6083499 A

- US 6548291 B
- US 20080295207 A
- US 2006033867 W
- US 8319019 B
- US 20110064710
- US 20120317681 A
- US 20120331589 A
- US 7491869 B
- US 5877012 A
- US 6107279 A
- US 6137033 A
- US 7244820 B
- US 7615686 B
- US 8237020 B
- US 7491698 B
- US 8084418 B
- US 8334366 B
- WO 2007074405 A
- WO 2005110068 A
- WO 2009091864 A
- US 20120198586
- WO 2012055982 A
- WO 2007035650 A
- US 20110054007
- WO 2016205445 A
- US 20140275208
- US 20150257389 A
- WO 2016138106 A
- WO 2016060911 A
- WO 2016060912 A
- WO 2016060913 A
- WO 2016060914 A
- US 2012029750
- US 20120297501 A
- US 20120322660 A
- US 20120164205

**Non-patent literature cited in the description**


- **RIVERO.** *Many of the most dangerous human diseases are transmitted by insect vectors*
- The Cost of New Agrochemical Product Discovery. Development & Registration, and Research & Development predictions for the Future. CropLife America, 2010
- High-Throughput Screening in Agrochemical Research. **DREWES, M. ; TIETJEN, K. ; SPARKS, T.C.** Modern Methods in Crop Protection Research, Part I, Methods for the Design and Optimization of New Active Ingredients. 2012, 1-20
- **GUBLER, D.** Resurgent Vector-Borne Diseases as a Global Health Problem. *Emerging Infectious Diseases,* 1998, vol. 4 (3), 442-450
- **KORB, J., TERMITES.** *Current Biology,* 2007, vol. 17 (23
- **MATTHEWS, G.** Integrated Vector Management: Controlling Vectors of Malaria and Other Insect Vector Borne Diseases. 2011, 1
- **NICOL, J. ; TURNER S. ; COYNE, L. ; DEN NIJS, L. ; HOCKSLAND, L. ; TAHNA-MAAFI, Z.** Current Nematode Threats to World Agriculture. *Genomic and Molecular Genetics of Plant - Nematode Interactions,* 2011, 21-43
- **PIMENTAL, D.** Pest Control in World Agriculture. *Agricultural Sciences,* 2009, vol. II
- **RIVERO, A. ; VEZILIER, J. ; WEILL, M. ; READ, A. ; GANDON, S.** Insect Control of Vector-Borne Diseases: When is Insect Resistance a Problem?. *Public Library of Science Pathogens,* 2010, vol. 6 (8), 1-9
- **SPARKS T.C. ; NAUEN R.** IRAC: Mode of action classification and insecticide resistance management. *Pesticide Biochemistry and Physiology,* 04 December 2014
- Molluscicides. **SPEISER, B.** Encyclopedia of Pest Management. 2002, 506-508
- Analysis of Global Pesticide Resistance in Arthropods. **WHALON, M. ; MOTA-SANCHEZ, D. ; HOLLINGWORTH, R.** Global Pesticide Resistance in Arthropods. 2008, 5-33
- **KACHHAWA D.** *Journal of Entomology and Zoology Studies,* 2007, vol. 5, 468-473
- **W. S. ABBOTT.** *J. Econ. Entomol.,* 1925, vol. 18, 265-267
- **COLBY S. R.** *Weeds,* 1967, vol. 15, 20-22
- **GEISER et al.** *Gene,* 1986, vol. 48, 109
- **MONALYSIN.** *PLoS Pathogens,* 2011, vol. 7, 1-13
- **PECHY-TARR.** *Environmental Microbiology,* 2008, vol. 10, 2368-2386
- **LIU et al.** *J. Agric. Food Chem.,* 2010, vol. 58, 12343-12349
- **ZHANG et al.** *Annals of Microbiology,* 2009, vol. 59, 45-50
- **LI et al.** *Plant Cell Tiss. Organ Cult.,* 2007, vol. 89, 159-168
- **HINCHLIFFE et al.** *The Open Toxinology Journal,* 2010, vol. 3, 101-118
- **MORGAN et al.** *Applied and Envir. Micro.,* 2001, vol. 67, 2062-2069
- **NAIMOV et al.** *Applied and Environmental Microbiology,* 2008, vol. 74, 7145-7151
- **CRICKMORE et al.** *Bacillus thuringiensis toxin nomenclature,* 2011
- **VAN FRANNKENHUYZEN.** *J. Invert. Path.,* 2009, vol. 101, 1-16
- **SANAHUJA.** *Plant Biotech Journal,* 2011, vol. 9, 283-300

- **PURCELL et al.** *Biochem Biophys Res Commun,* 1993, vol. 15, 1406-1413
- **FIRE et al.** *Nature,* 1998, vol. 391, 806